# EUROPÄISCHE PATENTSCHRIFT

(11) **EP 4 428 729 B1**
(45) Veröffentlichungstag und Bekanntmachung des Hinweises auf die Patenterteilung: **03.09.2025**
(21) Anmeldenummer: 24160885.0
(22) Anmeldetag: 01.03.2024
(51) Int. Cl.: G06F 21/33, H04L 9/06, H04L 9/32

(54) **VERFAHREN ZUM AUSSTELLEN EINER MEHRZAHL VON DIGITALEN DOKUMENTEN**
METHOD FOR ISSUING A PLURALITY OF DIGITAL DOCUMENTS
PROCÉDÉ DE PRÉSENTATION D'UNE PLURALITÉ DE DOCUMENTS NUMÉRIQUES

(30) Priorität: 09.03.2023 DE 102023105906
(43) Veröffentlichungstag der Anmeldung: 11.09.2024
(73) Patentinhaber: Bundesdruckerei GmbH, 10969 Berlin (DE)
(72) Erfinder: DIETRICH, Frank, 12437 Berlin (DE)
(74) Vertreter: Richardt Patentanwälte PartG mbB

(56) Entgegenhaltungen:
- US-A1- 2018 173 871
- "Advances in Databases and Information Systems", vol. 8450, 1 January 2014, SPRINGER INTERNATIONAL PUBLISHING, Cham, ISBN: 978-3-319-10403-4, article NICOLAS BUCHMANN ET AL: "Towards Electronic Identification and Trusted Services for Biometric Authenticated Transactions in the Single Euro Payments Area", pages: 172 - 190, XP055625940, 032682, DOI: 10.1007/978-3-319-06749-0_12
- FLORIAN OTTERBEIN ET AL: "The German eID as an Authentication Token on Android Devices", 15 January 2017 (2017-01-15), XP055745728, Retrieved from the Internet <URL:https://www.mi.fu-berlin.de/inf/groups/ag-idm/publications/The-German-eID-as-an-Authentication-Token-on-Android-Devices/index.html>

## Beschreibung

### GEBIET DER TECHNIK

Die Erfindung betrifft ein Verfahren zum Ausstellen einer Mehrzahl von digitalen Dokumenten sowie einen Server und ein System zum Ausführen des Verfahrens.

### STAND DER TECHNIK

Mobile Endgeräte, wie beispielsweise Smartphones, sind allgegenwärtig. Sie werden in vielen Lebensbereichen und Situationen zur Erfüllung verschiedenster Aufgaben im digitalen Bereich bzw. unter Zuhilfenahme digitaler Hilfsmittel verwendet.

Es stellt jedoch eine technische Herausforderung dar, für entsprechende Endgeräte digitale Dokumente in kryptographisch sicherer Weise bereitzustellen.
Der Artikel "Towards Electronic Identification and Trusted Services for Biometrie Authenticated Transactions in the Single Euro Payments Area" von Nicolas Buchmann et al. in "Advances in Databases and Information Systems", 1. Januar 2014, Seiten 172-190, beschreibt eine Anpassung des elDAS-Standards an vertrauenswürdige Banktransaktionen und skizziert die daraus resultierenden Sicherheits- und Datenschutzverbesserungen. Ferner wird der elDAS-Standard um biometrisch authentifizierte Transaktionen erweitert.

### ZUSAMMENFASSUNG

Der Erfindung liegt die Aufgabe zugrunde, ein Verfahren zum kryptographisch sicheren Bereitstellen von digitalen Dokumenten zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Ausstellen einer ersten Kombination aus einer Mehrzahl von auszustellenden digitalen Dokumenten unter Verwendung eines digitalen Provisionierungstokens. Der Provisionierungstoken weist eine Berechtigung zum Empfang der Mehrzahl von auszustellenden digitalen Dokumenten mit einem Endgerät und zur kryptographischen Kopplung der auszustellenden Dokumente an das Endgerät im Zuge der Ausstellung nach. Der Provisionierungstoken umfasst einen ersten Datensatz mit einer Mehrzahl von ersten Hashwerten, welche unter Verwendung einer Mehrzahl von zweiten Kombinationen erzeugt sind. Die zweiten Kombinationen umfassen jeweils einen ersten Salt-Wert einer Mehrzahl von ersten Salt-Werten und ein dem entsprechenden ersten Salt-Wert zugeordnetes erstes Datenelement einer Mehrzahl von ersten Datenelementen. Die ersten Datenelemente der Mehrzahl von ersten Datenelementen sind jeweils einem der auszustellenden Dokumente der Mehrzahl von auszustellenden Dokumenten zugeordnet und identifizieren das entsprechende auszustellende Dokument. Der erste Datensatz ist unter Verwendung eines ersten Signaturschlüssels eines den Provisionierungstoken erzeugenden Ausstellerdienstes signiert.

In einer ersten Datenbank sind ein oder mehrere erste Datenbankeinträge mit einer Mehrzahl von ersten Zuordnungen der ersten Salt-Werte zu jeweils einem der ersten Datenelemente gespeichert.

In ein oder mehreren zweiten Datenbanken sind jeweils ein oder mehrere zweite Datenbankeinträge mit Datenelementen der auszustellenden Dokumente gespeichert.

Das Verfahren umfasst zum Ausstellen der auszustellenden Dokumente der Mehrzahl von auszustellenden Dokumenten unter Verwendung ein oder mehrerer erster Server des Ausstellerdienstes:
o Empfangen einer Ausstellungsanfrage zum Ausstellen der Mehrzahl von auszustellenden Dokumenten von dem Endgerät eines Anfragenstellers,
o Empfangen des Provisionierungstokens von dem Endgerät,
o Validieren des Provisionierungstokens, wobei das Validieren des Provisionierungstokens umfasst:
   - Validieren der Signatur des Provisionierungstokens unter Verwendung eines ersten Signaturprüfschlüssels des Ausstellerdienstes,
   - Auslesen der ein oder mehreren ersten Datenbankeinträge aus der ersten Datenbank unter Verwendung ein oder mehrerer erster Datenelemente der Mehrzahl von ersten Datenelementen,
   - Prüfen der in dem Provisionierungstoken eingetragenen Mehrzahl von Hashwerten, welche die Mehrzahl von ersten Hashwerten umfasst, unter Verwendung der ausgelesenen ein oder mehreren ersten Datenbankeinträgen,
   - auf eine erfolgreiche Prüfung hin, Löschen zumindest der in den ausgelesenen ein oder mehreren ersten Datenbankeinträgen gespeicherten Salt-Werte, welche den auszustellenden Dokumenten zugeordnet sind, in der ersten Datenbank,
o Ausstellen der auszustellenden Dokumente, wobei das Ausstellen umfasst:
   - Senden einer Schlüsselabfrage an das Endgerät,
   - Empfangen eines dem Endgerät zugeordneten öffentlichen kryptographischen Schlüssels,
   wobei das Ausstellen der Dokumente ferner für jedes der auszustellenden Dokumente jeweils umfasst:
   - Auslesen des zweiten Datenbankeintrags des entsprechenden auszustellenden Dokuments aus der zweiten Datenbank der ein oder mehreren zweiten Datenbanken, welche den entsprechenden zweiten Datenbankeintrag umfasst,
   - Erstellen eines zweiten Datensatzes, welcher ein oder mehrere Datenelemente des ausgelesenen zweiten Datenbankeintrags, welche dem entsprechenden auszustellenden Dokument zugeordnet sind, in Klartext umfasst,
   - Hinzufügen des empfangenen öffentlichen kryptographischen Schlüssels des Endgeräts zu dem erstellten zweiten Datensatz zum kryptographischen Binden des erstellten zweiten Datensatzes an das Endgerät,
   - Signieren des erstellten zweiten Datensatzes unter Verwendung eines dem entsprechenden Ausstellerdienst zugeordneten zweiten kryptographischen Signaturschlüssels,
   - Bereitstellen des entsprechenden ausgestellten Dokuments in Form des signierten zweiten Datensatzes,
   - Speichern einer Zuordnung des empfangenen öffentlichen kryptographischen Schlüssels des Endgeräts zu dem entsprechenden ausgestellten Dokument in der ersten Datenbank,
o Senden der ersten Kombination aus der Mehrzahl von ausgestellten Dokumenten an das Endgerät.

Beispiele können den Vorteil haben, dass eine Mehrzahl von digitalen Dokumenten ausgestellt und die entsprechenden Dokumente zusammen zur weiteren Verwendung bereitgestellt werden können, welche jeweils kryptographisch an ein Endgerät, insbesondere ein mobiles Endgerät, wie beispielsweise ein Smartphone, gebunden bzw. gekoppelt sind. Eine Berechtigung zur Verwendung der entsprechenden Dokumente kann mit einem dem öffentlichen kryptographischen Schlüssel zugeordneten privaten kryptographischen Schlüssel des Endgeräts nachgewiesen werden, welcher beispielsweise in einem geschützten Speicherbereich eines Speichers des Endgeräts, beispielsweise einem Sicherheitselement, gespeichert ist. Hierzu wird beispielsweise eine Signatur mit dem entsprechenden privaten kryptographischen Schlüssel erstellt, welche mit dem von den Dokumenten umfassten öffentlichen kryptographischen Schlüssel des Endgeräts validiert werden kann.

Zum Nachweis der Berechtigung zum Empfang der auszustellenden digitalen Dokumente mit dem Endgerät und zur kryptographischen Kopplung der entsprechenden Dokumente an das Endgerät im Zuge der Ausstellung ist der Provisionierungstoken notwendig. Wer sich im Besitz des entsprechenden Provisionierungstokens befindet kann das Ausstellen der Dokumente initiieren.

Durch das Löschen zumindest der in den ein oder mehreren ersten Datenbankeinträgen gespeicherten Salt-Werte kann sichergestellt werden, dass der Provisionierungstoken nur einmal zum Ausstellen der Dokumente verwendet werden kann, d.h. dass das die entsprechenden Dokumente jeweils nur einmal ausgestellt werden. Beispielsweise umfasst die erste Datenbank einen einzigen Datenbankeintrag je Provisionierungstoken. Beispielsweise umfasst die erste Datenbank für jedes der auszustellenden Dokumente, für welche ein Provisionierungstoken vorliegt, jeweils einen Datenbankeintrag.

Datenelemente der Dokumente werden in dem Provisionierungstoken beispielsweise nicht in Klartext, sondern nur in gehashter und damit geschützter Form gespeichert. Somit kann sichergestellt werden, dass die entsprechenden Datenelemente nicht aus dem Provisionierungstoken abgeleitet werde können. Um das Hashen zusätzlich abzusichern, werden die Datenelemente, z.B. die ersten Datenelemente, jeweils mit einem Salt-Wert kombiniert und die resultierte Kombination zum Erzeugen der in dem Provisionierungstoken gespeicherten Hashwerte, beispielsweise der ersten Hashwerte, verwendet. Unter einem Salt-Wert wird in der Kryptographie eine zufällig gewählte Zeichenfolge, etwa eine Zufallswert, verstanden, die an einen gegebenen Klartext, beispielsweise ein Datenelement des Dokuments, vor dessen weiterer Verarbeitung, beispielsweise eine Eingabe in eine Hashfunktion, angehängt wird, um die Entropie der Eingabe zu erhöhen.

Die Salt-Werte werden in der ersten Datenbank gespeichert. Somit kann sichergestellt werden, dass der Provisionierungstoken nur einmal verwendet werden kann. Nach einer Verwendung des Provisionierungstokens zum Nachweis der Berechtigung zum Empfang der auszustellenden digitalen Dokumente, wird die entsprechenden Salt-Werte beispielsweise gelöscht. Da die Salt-Werte zum Validieren der entsprechenden Hashwerte in dem Provisionierungstoken benötigt werden, kann der Hashwert nach dem Löschen der Salt-Werte beispielsweise nicht mehr validiert werden. Somit kann der Provisionierungstokens nach dem Löschen beispielsweise nicht mehr zum erfolgreichen Nachweis der Berechtigung zum Empfang der auszustellenden digitalen Dokumente verwendet werden.

Beispiele ermöglichen ein Ausstellen einer Kombination von Dokumenten bzw. von Kopien von Dokumenten. Beispielsweise können Dokumente bzw. Dokumentenkopien, wie etwa Fahrzeugdokumente und/oder Dokumente eines Fahrzeugführers, etwa ein digitaler Führerschein, in Kombination mit einem oder mehreren Dokumenten bzw. Dokumentenkopien in Form funktionaler Token, etwa Schlüsseltoken ausgestellt werden. Die Fahrzeugdokumente können beispielsweise eine Berechtigung zur Nutzung des spezifischen Fahrzeugs und/oder einer Kombination von spezifischen Fahrzeugen nachweisen. Dokumente eines Fahrzeugführers können eine Berechtigung eines bestimmten Fahrzeugführers zum Führen entsprechender Fahrzeuge und/oder entsprechender Kombinationen von Fahrzeugen nachweisen. Schließlich können funktionale Token, wie etwa Schlüsseltoken, eine Nutzung des spezifischen Fahrzeugs und/oder einer Kombination von spezifischen Fahrzeugen ermöglichen. Beispielsweise kann ein entsprechender Schlüsseltoken ein dazu konfiguriert sein, Türen des entsprechenden Fahrzeugs zu Entriegeln oder Verriegeln und/oder das entsprechende Fahrzeug zu starten. Hierzu umfasst der Schlüsseltoken beispielsweise ein oder mehrere private kryptographische Schlüssel, beispielsweise ein oder mehrere private asymmetrische kryptographische Schlüssel und/oder ein oder mehrere symmetrische kryptographische Schlüssel. Beispielsweise kann der Schlüsseltoken im Zuge eines Challenge-Response-Verfahrens mit dem Fahrzeug gegenüber dem Fahrzeug einen Besitz des oder der entsprechenden kryptographischen Schlüssel nachweisen. Auf einen erfolgreichen Nachweis gibt das Fahrzeug beispielsweise entsprechende Funktionen frei. Beispielsweise werden Türen des Fahrzeugs entriegelt oder verriegelt. Beispielsweise wird eine Wegfahrsperre deaktiviert. Beispielsweise wird das entsprechende Fahrzeug gestartet.

Eine Verwendung eines solchen Schlüsseltokens auf einem Endgerät eines Nutzers, etwa auf einem Smartphone, ermöglicht es dem Nutzer das Fahrzeug mit seinem Endgerät als Schlüssel über eine Funkverbindung zu entriegeln, verriegeln, eine Wegfahrsperre zu deaktivieren und/oder zu starten.

Ein Ausstellen einer solchen Kombination von Dokumenten bzw. von Kopien solcher Dokumente, etwa durch ein Car-Sharing-Unternehmen oder ein Mietwagenunternehmen, welche einen oder mehrere Schlüsseltoken umfassen, ermöglichen es dem Nutzer beispielsweise das zugehörige Fahrzeug zu öffnen, eine Wegfahrsperre zu deaktivieren und/oder das Fahrzeug zu starten.

Zusätzlich kann die entsprechende Kombination von Dokumenten noch um Dokumente mit weiteren Angaben ergänzt werden, etwa um Angaben zum Car-Sharing-Unternehmen/Mietwagenunternehmen, wie etwa Kontaktdaten, oder zu einer Versicherung bzw. eine digitale Kopie des Versicherungsscheins.

Gehören zu dem Fahrzeug zusätzlich zulassungspflichtige Komponenten, wie etwa ein Fahrzeuganhänger, kann die Kombination von Dokumenten bzw. Dokumentenkopien beispielsweise ferner eine elektronische Zulassungsbescheinigungen Teil I bzw. eine Kopie derselben für den entsprechenden Anhänger umfassen. Beispielsweise umfasst die Kombination ferner ein Token zum Öffnen eines Schlossen und/oder einer Wegfahrsperre des Anhängers.

Wird das entsprechende Fahrzeug länger benötigt, als durch die Gültigkeitsdauer der Dokumentenkopien definiert, kann eine Verlängerung bzw. eine neue Kombination mit einer verlängerten Gültigkeitsdauer beantragt werden.

Die Kombination von Dokumenten kann ferner ein oder mehrere Schlüsseltoken umfassen, welche dem Nutzer Zugang zu dem Fahrzeug gewähren. Etwa kann mit dem oder den entsprechenden Schlüsseltoken eine Tür, ein Tor und/oder eine Schranke einer Garage oder eine Tür, ein Tor und/oder eine Schranke eines Parklatzes geöffnet werden, um das Fahrzeug aus der Garage oder dem Parkplatz herauszufahren und/oder in die Garage oder den Parkplatz hineinzufahren. Beispielsweise kann der Schlüsseltoken im Zuge eines Challenge-Response-Verfahrens mit einer entsprechenden Zugangsbeschränkungsvorrichtung gegenüber der Zugangsbeschränkungsvorrichtung einen Besitz eines oder mehrerer kryptographischer Schlüssel, beispielsweise ein oder mehrere private asymmetrische kryptographische Schlüssel und/oder ein oder mehrere symmetrische kryptographische Schlüssel, nachweisen. Auf einen erfolgreichen Nachweis gibt die Zugangsbeschränkungsvorrichtung beispielsweise den Zugang frei.

Der Provisionierungstoken stellt somit ein kryptographisch gesichertes Verbindungsglied zwischen einer Identifizierung eines Anfragenstellers und einem Ausstellen der auszustellenden Dokumente dar. Somit kann das Identifizieren über einen von dem Ausstellen unabhängigen Kanal erfolgen.

Zunächst wird der Provisionierungstoken validiert. Das Validieren des Provisionierungstoken umfasst ein Validieren der Signatur des Provisionierungstokens sowie ein Validieren der von dem Provisionierungstoken umfassten Hashwerte.

Auf ein erfolgreiches Validieren des Provisionierungstoken hin, werden die von dem Ausstellerdienst signierten Dokumente der ersten Kombination ausgestellt, welche jeweils Datenelemente der entsprechenden Dokumente in Klartext sowie den öffentlichen kryptographischen Schlüssel des Endgeräts zur kryptographischen Bindung bzw. Kopplung an das entsprechende Endgerät umfassen.

Das Senden der Dokumente kann auf verschiedene Weise erfolgen. Beispielsweise kann das Dokument automatisch gesendet werden. Beispielsweise kann ein QR-Code zum Herunterladen des Dokuments bereitgestellt werden. Beispielsweise können Informationen zum Nachweisen einer Berechtigung zum Herunterladen des Dokuments an den Anfragensteller gesendet werden. Beispielsweise umfassen die Informationen eine PIN und/oder TAN. Beispielsweise werden PIN und/oder TAN über einen unabhängigen Kanal, etwa mittels eines Briefes oder einer SMS versendet.

Beispielsweise handelt es sich bei der ersten Datenbank und den ein oder mehreren zweiten Datenbanken um voneinander unabhängige Datenbanken.

Die erste Datenbank stellt beispielsweise Daten bereit, welche zum Prüfen der Gültigkeit von Provisionierungstoken, Dokumenten und/oder Dokumentenkopien dienen. In den ein oder mehreren zweiten Datenbanken sind beispielsweise Datenelemente auszustellender Dokumente und/oder Dokumentenkopien gespeichert. Beispielsweise ist jede der zweiten Datenbanken jeweils einem bestimmten Dokumententyp zugeordnet und umfasst zweite Datensätze mit Datenelemente für Dokumente dieses bestimmten Dokumententyps.

Beispielsweise umfasst das Verfahren ferner ein Empfangen der ersten Datenelemente und ein Verwenden der empfangenen ersten Datenelemente zum Auslesen der ein oder mehreren ersten Datenbankeinträge aus der ersten Datenbank.

Beispiele können den Vorteil haben, dass unter Verwendung der ersten Datenelemente die ein oder mehreren ersten Datenbankeinträge mit den zum Validieren der Provisionierungstoken notwendigen Daten, beispielsweise den Salt-Werten, ausgelesen werden können.

Beispielsweise wird die Zuordnung des empfangenen öffentlichen kryptographischen Schlüssels des Endgeräts zu den ausgestellten Dokumenten in den ein oder mehreren ersten Datenbankeinträgen der ersten Datenbank gespeichert.

Beispiele können den Vorteil haben, dass somit die kryptographische Bindung bzw. Kopplung an das entsprechende Endgerät zentral bei dem Ausstellerdient hinterlegt bzw. festgelegt werden kann.

Beispielsweise umfasst das Validieren des Provisionierungstokens, auf eine erfolgreiche Prüfung hin, ein Löschen aller dem Provisionierungstoken zugeordneter Daten aus den ein oder mehreren ersten Datenbankeinträgen in der ersten Datenbank.

Beispiele können den Vorteil haben, dass sichergestellt werden kann, dass der Provisionierungstoken kein weiters Mal zum Ausstellen der Dokumente verwendet werden kann.

Beispielsweise umfassen die zweiten Datensätze der jeweiligen auszustellenden Dokumente jeweils alle Datenelemente des jeweiligen zweiten Datenbankeintrags, welche dem entsprechenden auszustellenden Dokument zugeordnet sind, in Klartext. Beispiele können den Vorteil haben, dass die ausgestellten Dokumente jeweils die Datenelemente des entsprechenden Dokuments umfassen, wie sie in dem dem entsprechenden Dokument zugrundliegenden zweiten Datenbankeintrag hinterlegt sind.

Beispielsweise handelt es sich bei dem ersten kryptographischen Signaturschlüssel und dem zweiten kryptographischen Signaturschlüssel des Ausstellerdienstes um ein und denselben Signaturschlüssel. Beispielsweise handelt es sich dem ersten kryptographischen Signaturschlüssel und dem zweiten kryptographischen Signaturschlüssel des Ausstellerdienstes um zwei verschiedene kryptographischen Signaturschlüssel.

Beispielsweise wird der Provisionierungstoken zusammen mit der Ausstellungsanfrage empfangen. Beispielsweise wird auf den Empfang der Ausstellungsanfrage hin eine Abfrage des Provisionierungstokens an den Anfragensteller gesendet. In Antwort auf das Senden der Abfrage des Provisionierungstokens wird der Provisionierungstoken von dem Anfragensteller empfangen.

Beispielsweise werden die ersten Datenelemente der Mehrzahl von ersten Datenelementen jeweils verwendet zum Bereitstellen eines Datenbankzugriffsschlüssels zum Identifizieren des in der ersten Datenbank gespeicherten ersten Datenbankeintrags mit der ersten Zuordnung eines erzeugten ersten Salt-Werts der Mehrzahl von ersten Salt-Werten zu dem entsprechenden ersten Datenelement.

Beispiele können den Vorteil haben, dass unter Verwendung der ersten Datenelemente, welche die auszustellenden Dokumente identifiziert, auf die ein oder mehreren ersten Datenbankeinträge in der ersten Datenbank zugegriffen werden kann, welche Daten bereitstellen, die zum Prüfen der Gültigkeit des Provisionierungstokens dienen.

Beispielsweise umfasst das Verfahren ferner ein Empfangen einer Mehrzahl von zweiten Datenelementen. Jedes der zweiten Datenelemente der Mehrzahl von zweiten Datenelementen ist jeweils einem der auszustellenden Dokumente zugeordnet. Die zweiten Datenelemente werden zum Auslesen der ein oder mehreren ersten Datenbankeinträge aus der ersten Datenbank verwendet. Die zweiten Datenelemente werden jeweils zum Bereitstellen eines der ein oder mehreren Datenbankzugriffsschlüssel zum Identifizieren der in der ersten Datenbank gespeicherten ein oder mehreren ersten Datenbankeinträge verwendet.

Beispielsweise dienen die zweiten Datenelemente jeweils in Kombination mit den ersten Datenelementen zum Bereitstellen eines Datenbankzugriffsschlüssels, beispielsweise als Primärschlüssel, zum Zugreifen auf die ein oder mehreren ersten Datenbankeinträge in der ersten Datenbank.

Beispielsweise handelt es sich bei dem zweiten Datenelemente der auszustellenden Dokumente jeweils um ein Datenelement, welches das entsprechende auszustellende Dokument identifiziert.

Beispielsweise werden Zugriffe auf die ein oder mehreren zweiten Datenbanken über ein oder mehrere zweite Server bereitgestellt. Das Abfragen der zweiten Datenbankeinträge umfasst ein Senden von ein oder mehreren Abfragen an die ein oder mehreren zweiten Server und ein Empfangen der zweiten Datenbankeinträge in Antwort auf die gesendeten ein oder mehreren Abfragen.

Beispiele können den Vorteil haben, dass die erste und die zweite Datenbank beispielsweise von zwei unterschiedlichen Diensten und insbesondere unabhängig voneinander verwaltet werden können. Beispielsweise kann der die erste Datenbank verwaltende erste Server im Bedarfsfall über den zweiten Server auf die zweite Datenbank zugreifen.

Beispielsweise erfolgt das Abfragen der zweiten Datenbankeinträge jeweils unter Verwendung des dem entsprechenden auszustellenden Dokument zugeordneten ersten Datenelements, welches das auszustellende Dokument identifiziert. Beispielsweise umfasst die Abfrage des zweiten Datenbankeintrags das dem auszustellenden Dokument zugeordnete erste Datenelement, welches das auszustellende Dokument identifiziert. Das erste Datenelement dient beispielsweise zum Bereitstellen eines Datenbankzugriffsschlüssels, beispielsweise als Primärschlüssel, zum Zugreifen auf den zweiten Datenbankeintrag.

Beispielsweise erfolgt das Abfragen der zweiten Datenbankeinträge jeweils unter Verwendung des entsprechenden zweiten dem auszustellenden Dokument zugeordneten Datenelements, welches das auszustellende Dokument beispielsweise identifiziert. Beispielsweise umfasst die Abfrage des zweiten Datenbankeintrags das dem auszustellenden Dokument zugeordnete zweite Datenelement. Beispielsweise können auch Identifikationsdaten des identifizierten Anfragenstellers dazu dienen, einen dem Anfragensteller zugeordneten zweiten Datenbankeintrag in der zweiten Datenbank zu identifizieren.

Beispielsweise umfasst der erste Datensatz des Provisionierungstokens ferner einen zweiten Hashwert, welcher unter Verwendung einer dritten Kombination eines Einmalkennworts und eines dem Einmalkennwort zugeordneten zweiten Salt-Werts erzeugt ist. In den ein oder mehreren ersten Datenbankeinträgen der ersten Datenbank ist jeweils eine zweite Zuordnung des zweiten Salt-Werts zu dem Einmalkennwort gespeichert.

Das Validieren des Provisionierungstokens umfasst ferner ein Empfangen des Einmalkennworts und Prüfen des zweiten Hashwerts unter Verwendung des empfangenen Einmalkennworts sowie der ausgelesenen ein oder mehreren ersten Datenbankeinträge.

Beispiele können den Vorteil haben, dass zusätzlich zu dem Besitz des Provisionierungstoken das entsprechende Einmalkennwort, etwa eine TAN, zum erfolgreichen Nachweis der Berechtigung zum Empfang eines auszustellenden digitalen Dokuments mit einem Endgerät und zur kryptographischen Kopplung an das Endgerät im Zuge der Ausstellung notwendig.

Beispielsweise umfassen die zweiten Datensätze der ausgestellten Dokumente ferner jeweils eine Angabe eines Zeitpunkts der Ausstellung des entsprechenden Dokuments.

Beispiele können den Vorteil haben, dass dem Ausstellen der Dokumente jeweils ein Zeitpunkt zugeordnet wird. Bei der Angabe des Zeitpunkts handelt es sich beispielsweise um ein Ausstelldatum. Beispielsweise umfasst die Angabe des Zeitpunkts zusätzlich zu dem Ausstelldatum eine Angabe von Stunde, Minute und/oder Sekunde. Anhand der Angabe eines Zeitpunkts der Ausstellung eines Dokuments kann beispielsweise geprüft werden, ob es sich bei dem entsprechenden Dokument um eine aktuelle Version mit aktuellen Datenelementen handelt oder ob eine Aktualisierung notwendig ist.

Beispielsweise umfasst das Verfahren ferner ein Aktualisieren der ausgestellten Dokumente. Das Aktualisieren umfasst:
∘ Empfangen einer Aktualisierungsanfrage zum Aktualisieren der ausgestellten Dokumente von dem Endgerät, wobei die Aktualisierungsanfrage die ausgestellten Dokumente umfasst,
o Auslesen der zweiten Datenbankeinträge aus den ein oder mehreren zweiten Datenbanken unter Verwendung der ersten Datenelemente der empfangenen Dokumente, wobei die zweiten Datenbankeinträge jeweils eine Angabe eines Zeitpunkts einer letzten Aktualisierung des jeweiligen zweiten Datenbankeintrags umfassen,
∘ Vergleichen der Angaben der Zeitpunkte der Ausstellung der empfangenen Dokumente jeweils mit der Angabe des Zeitpunkts der letzten Aktualisierung des dem entsprechenden Dokument zugeordneten zweiten Datenbankeintrags,
o Feststellen, dass für ein oder mehrere der ausgestellten Dokumente die letzte Aktualisierung des entsprechenden zweiten Datenbankeintrags nach dem Ausstellen des entsprechenden Dokuments erfolgt ist,
∘ Ausstellen eines aktualisierten Dokuments für diejenigen ausgestellten Dokumente, für welche die letzte Aktualisierung des jeweiligen zweiten Datenbankeintrags nach dem Ausstellen des entsprechenden Dokuments erfolgt ist, wobei das Ausstellen des jeweiligen aktualisierten Dokuments umfasst:
   - Erstellen eines vierten Datensatzes, welcher ein oder mehrere der Datenelemente des ausgelesenen zweiten Datenbankeintrags, welche dem auszustellenden Dokument zugeordnet sind, in Klartext umfasst,
   - Hinzufügen des öffentlichen kryptographischen Schlüssels des Endgeräts aus dem entsprechenden empfangenen Dokument zu dem vierten Datensatz zum kryptographischen Binden des vierten Datensatzes an das Endgerät,
   - Signieren des vierten Datensatzes mit dem zweiten kryptographischen Signaturschlüssel des Ausstellerdienstes,
   - Bereitstellen des jeweiligen aktualisierten Dokuments in Form des signierten vierten Datensatzes,
o Senden der ein oder mehreren aktualisierten Dokumente an das Endgerät.

Beispiele können den Vorteil haben, dass so basierend auf einem Vergleich der Angabe des Zeitpunkts der Ausstellung eines Dokuments mit der Angabe des Zeitpunkts der letzten Aktualisierung des zweiten Datenbankeintrags des entsprechenden Dokuments geprüft werden kann, ob das Dokument aktuell ist, d.h. die letzte Aktualisierung des zweiten Datenbankeintrags in der zweiten Datenbank berücksichtigt. Wird festgestellt, dass die letzte Aktualisierung des zweiten Datenbankeintrags nach dem Ausstellen des Dokuments erfolgt ist, wird ein aktualisiertes Dokument ausgestellt. Somit kann sichergestellt werden, dass stets aktuelle Versionen der Dokumente der Mehrzahl von Dokumenten Verfügung stehen.

Beispielsweise sind die empfangenen ausgestellten Dokumente unter Verwendung eines dem Endgerät zugeordneten privaten kryptographischen Schlüssels signiert. Das Verfahren umfasst ferner ein Validieren der empfangenen Dokumente. Das Validieren umfasst ein Prüfen der Signaturen der empfangenen Dokumente mit dem privaten kryptographischen Schlüssel des Endgeräts unter Verwendung des von den empfangenen Dokumenten umfassten öffentlichen kryptographischen Schlüssel des Endgeräts.

Beispiele können den Vorteil haben, dass die Dokumente als Voraussetzung für eine Aktualisierung zunächst jeweils validiert wird. Somit kann sichergestellt werden, dass nur für ein authentisches Dokument bzw. ein gültiges Dokument eine Aktualisierung ausgeführt wird.

Beispielsweise sind die von der Aktualisierungsanfrage umfassten Dokumente unter Verwendung des privaten kryptographischen Schlüssels des Endgeräts signiert. Beispielsweise ist die die Dokumente umfassende Aktualisierungsanfrage unter Verwendung des privaten kryptographischen Schlüssels des Endgeräts signiert.

Nach Ausführungsformen, falls basierend auf dem Vergleichen der Angabe des Zeitpunkts der Ausstellung eines Dokuments mit der Angabe des Zeitpunkts der letzten Aktualisierung des zweiten Datenbankeintrags des entsprechenden Dokuments festgestellt wird, dass die letzte Aktualisierung des entsprechenden zweiten Datenbankeintrags vor dem Ausstellen des Dokuments erfolgt ist, wird eine Information an den Anfragensteller gesendet, welche angibt, dass es sich bei dem ausgestellten Dokument um ein aktuelles Dokument mit aktuellen Datenelementen handelt.

Beispielsweise umfasst die Mehrzahl von auszustellenden Dokumenten ein oder mehrere Fahrzeugdokumente ein oder mehrerer Fahrzeuge, beispielsweise ein oder mehrere elektronische Zulassungsbescheinigungen Teil I, ein oder mehrere Versicherungsscheine, und/oder ein oder mehrere Schlüsseltoken. Beispielsweise umfasst die Mehrzahl von auszustellenden Dokumenten ferner einen digitalen Führerschein, d.h. eine sogenannte mobile driving licence (mDL).

Beispiele können den Vorteil haben, dass ein Provisionierungstoken zum Nachweis einer Berechtigung zum Empfang einer entsprechenden Kombination von Dokumenten mit einem Endgerät und zur kryptographischen Kopplung an das Endgerät im Zuge der Ausstellung nachgewiesen werden kann.

Die Zulassungsbescheinigung ist in Deutschland und in Österreich eine amtliche Urkunde über die Zulassung von Fahrzeugen zum Straßenverkehr. Die Zulassungsbescheinigung umfasst beispielsweise Datenelemente zum Individualisieren des Fahrzeugs, in aller Regel anhand der vom Hersteller vergebenen Fahrzeug-Identifizierungsnummer, auch als Fahrgestellnummer bezeichnet, zum Zuteilen eines Kraftfahrzeugkennzeichens an eine bestimmte Person oder Entität, und zum Nachweisen, dass das Fahrzeug technische Zulassungsvorschriften, d.h. eine Bauartzulassung, erfüllt. Die in der Zulassungsbescheinigung eingetragene Person oder Entität ist der Halter des Fahrzeugs, welcher mit dem Eigentümer oder Besitzer identisch sein kann, aber nicht muss.

Im Detail umfasst eine elektronische Zulassungsbescheinigung Teil I beispielsweise die folgenden Datenelement: (B) Datum der Erstzulassung des Fahrzeugs; (2.1) Code zu 2; (2.2) Code zu D.2 mit Prüfziffer; (J) Fahrzeugklasse; (4) Art des Aufbaus; (E) Fahrzeug-Identifizierungsnummer; (3) Prüfziffer der Fahrzeug-Identifizierungsnummer, (D.1) Marke, (D.2) Typ/Variante/Version; (D.3) Handelsbezeichnung(en); (2) Hersteller-Kurzbezeichnung; (5) Bezeichnung der Fahrzeugklasse und des Aufbaus; (V.9) für die EG-Typgenehmigung maßgebliche Schadstoffklasse; (14) Bezeichnung der nationalen Emissionsklasse; (P.3) Kraftstoffart oder Energiequelle; (10) Code zu P.3; (14.1) Code zu V.9 oder 14; (P.1) Hubraum in cm³; (22) Bemerkungen und Ausnahmen; (L) Anzahl der Achsen; (9) Anzahl der Antriebsachsen; (P.2/P.4) Nennleistung in kW/ Nenndrehzahl bei min-1; (T) Höchstgeschwindigkeit in km/h; (18) Länge in mm; (19) Breite in mm ohne Spiegel und Anbauteile; (20) Höhe in mm; (G) Masse des in Betrieb befindlichen Fahrzeugs in kg Leermasse; (12) Rauminhalt des Tanks bei Tankfahrzeugen in m³; (13) Stützlast in kg; (Q) Leistungsgewicht in kW/kg (nur bei Krafträdern); (V.7) CO2 (in g/km) kombinierter Wert; (F.1) technisch zulässige Gesamtmasse in kg; (F.2) im Zulassungsmitgliedstaat zulässige Gesamtmasse in kg; (7.1) Max. Achslast Achse 1 in kg; (7.2) Max. Achslast Achse 2 in kg; (7.3) max. Achslast Achse 3 in kg; (8.1) max. Achslast Achse 1 in kg; (8.2) max. Achslast Achse 2 in kg; (8.3) max. Achslast Achse 3 in kg; (U.1) Standgeräusch in dB(A); (U.2) Drehzahl in min-1 zu U.1; (U.3) Fahrgeräusch in dB(A); (O.1) technisch zulässige Anhängelast gebremst in kg; (O.2) technisch zulässige Anhängelast ungebremst in kg; (S.1) Sitzplätze einschließlich Fahrersitz; (S.2) Stehplätze; (15.1) Bereifung auf Achse 1; (15.2) Bereifung auf Achse 2; (15.3) Bereifung auf Achse 3; (R) Farbe des Fahrzeugs; (11) Code zu R; (K) Nummer der EG-Typgenehmigung oder ABE; (6) Datum zu K; (17) Merkmal zur Betriebserlaubnis; (16) Nummer der Zulassungsbescheinigung Teil II; (21) Sonstige Vermerke; (H) Gültigkeitsdauer; (I) Datum dieser Zulassung; (7) technisch zulässige maximale Achslast/ Masse je Achsgruppe in kg; (7.1) Achse 1 bis (7.3) Achse 3, (8) zulässige maximale Achslast im Zulassungsmitgliedstaat in kg, (8.1) Achse 1 bis (8.3) Achse 3; und/oder (15) Bereifung.

Beispiele können den Vorteil haben, dass ein Provisionierungstoken zum Nachweis einer Berechtigung zum Empfang einer entsprechenden Kombination von Dokumenten mit einem Endgerät und zur kryptographischen Kopplung an das Endgerät im Zuge der Ausstellung nachgewiesen werden kann.

Beispielsweise umfasst die Mehrzahl von ersten Datenelementen ein oder mehrere der folgenden Datenelemente: eine oder mehrere Fahrzeug-IDs, beispielsweise Fahrzeugkennzeichen oder Fahrgestellnummern, ein oder mehrere Versicherungsnummern, und/oder ein oder mehrere Schlüssel-IDs. Beispielsweise umfasst die Mehrzahl von ersten Datenelementen eine Führerscheinnummer.

Beispiele können den Vorteil haben, dass eine eindeutige Fahrzeug-ID, etwa in Form des Fahrzeugkennzeichens und/oder einer Fahrgestellnummer bereitgestellt werden kann. Zusätzlich können eindeutige IDs für die weiteren auszustellenden Dokumente bereitgestellt werden.

Beispielsweise umfasst die Mehrzahl von zweiten Datenelementen ein oder mehrere der folgenden Datenelemente: eine oder mehrere Fahrzeug-IDs, beispielsweise Fahrzeugkennzeichen oder Fahrgestellnummern, ein oder mehrere Versicherungsnummern, und/oder ein oder mehrere Schlüssel-IDs. Beispielsweise umfasst die Mehrzahl von zweiten Datenelementen eine Führerscheinnummer.

Ausführungsformen umfassen ferner einen Server eines Ausstellerdienstes zum Ausstellen einer ersten Kombination aus einer Mehrzahl von auszustellenden digitalen Dokumenten unter Verwendung eines Provisionierungstokens. Der Server umfasst einen Prozessor, einen Speicher mit Programminstruktionen und eine Kommunikationsschnittstelle zur Kommunikation über ein Netzwerk. Der Provisionierungstoken weist eine Berechtigung zum Empfang der Mehrzahl von auszustellenden digitalen Dokumenten mit einem Endgerät und zur kryptographischen Kopplung der auszustellenden Dokumente an das Endgerät im Zuge der Ausstellung nach. Der Provisionierungstoken umfasst einen ersten Datensatz mit einer Mehrzahl von ersten Hashwerten, welche unter Verwendung einer Mehrzahl von zweiten Kombinationen erzeugt sind. Die zweiten Kombinationen umfassen jeweils einen ersten Salt-Wert einer Mehrzahl von ersten Salt-Werten und ein dem entsprechenden ersten Salt-Wert zugeordnetes erstes Datenelement einer Mehrzahl von ersten Datenelementen. Die ersten Datenelemente der Mehrzahl von ersten Datenelementen sind jeweils einem der auszustellenden Dokumente der Mehrzahl von auszustellenden Dokumenten zugeordnet und identifizieren das entsprechende auszustellende Dokument. Der erste Datensatz ist unter Verwendung eines ersten Signaturschlüssels eines den Provisionierungstoken erzeugenden Ausstellerdienstes signiert.

Server besitzt Zugriff auf eine erste Datenbank, in der ein oder mehrere erste Datenbankeinträge mit einer Mehrzahl von ersten Zuordnungen der ersten Salt-Werte zu jeweils einem der ersten Datenelementen gespeichert sind.

Ferner besitzt der Server Zugriff auf ein oder mehrere zweite Datenbanken, in denen jeweils ein oder mehrere zweite Datenbankeinträge mit Datenelementen der auszustellenden Dokumente gespeichert sind.

Ein Ausführen der Programminstruktionen durch den Prozessor veranlasst den Prozessor dazu, den Server zu steuern zum:
o Empfangen einer Ausstellungsanfrage zum Ausstellen der Mehrzahl von auszustellenden Dokumenten von dem Endgerät eines Anfragenstellers,
o Empfangen des Provisionierungstokens von dem Endgerät,
o Validieren des Provisionierungstokens, wobei das Validieren des Provisionierungstokens umfasst:
   - Validieren der Signatur des Provisionierungstokens unter Verwendung eines ersten Signaturprüfschlüssels des Ausstellerdienstes,
   - Auslesen der ein oder mehreren ersten Datenbankeinträge aus der ersten Datenbank unter Verwendung ein oder mehrerer erster Datenelemente der Mehrzahl von ersten Datenelementen,
   - Prüfen der in dem Provisionierungstoken eingetragenen Mehrzahl von Hashwerten, welche die Mehrzahl von ersten Hashwerten umfasst, unter Verwendung der ausgelesenen ein oder mehreren ersten Datenbankeinträgen,
   - auf eine erfolgreiche Prüfung hin, Löschen zumindest der in den ausgelesenen ein oder mehreren ersten Datenbankeinträgen gespeicherten Salt-Werte, welche den auszustellenden Dokumenten zugeordnet sind, in der ersten Datenbank,
o Ausstellen der auszustellenden Dokumente, wobei das Ausstellen umfasst:
   - Senden einer Schlüsselabfrage an das Endgerät,
   - Empfangen eines dem Endgerät zugeordneten öffentlichen kryptographischen Schlüssels,
   wobei das Ausstellen der Dokumente ferner für jedes der auszustellenden Dokumente jeweils umfasst:
   - Auslesen des zweiten Datenbankeintrags des entsprechenden auszustellenden Dokuments aus der zweiten Datenbank der ein oder mehreren zweiten Datenbanken, welche den entsprechenden zweiten Datenbankeintrag umfasst,
   - Erstellen eines zweiten Datensatzes, welcher ein oder mehrere Datenelemente des ausgelesenen zweiten Datenbankeintrags, welche dem entsprechenden auszustellenden Dokument zugeordnet sind, in Klartext umfasst,
   - Hinzufügen des empfangenen öffentlichen kryptographischen Schlüssels des Endgeräts zu dem erstellten zweiten Datensatz zum kryptographischen Binden des erstellten zweiten Datensatzes an das Endgerät,
   - Signieren des erstellten zweiten Datensatzes unter Verwendung eines dem entsprechenden Ausstellerdienst zugeordneten zweiten kryptographischen Signaturschlüssels,
   - Bereitstellen des entsprechenden ausgestellten Dokuments in Form des signierten zweiten Datensatzes,
   - Speichern einer Zuordnung des empfangenen öffentlichen kryptographischen Schlüssels des Endgeräts zu dem entsprechenden ausgestellten Dokument in der ersten Datenbank,
o Senden der ersten Kombination aus der Mehrzahl von ausgestellten Dokumenten an das Endgerät.

Beispielsweise ist der Server dazu konfiguriert jede der zuvor beschrieben Ausführungsformen des Verfahrens zum Ausstellen des digitalen Dokuments auszuführen.

Ausführungsformen umfassen ferner ein System umfassend einen Server eines Ausstellerdienstes nach einer der vorangehend beschriebenen Ausführungsformen sowie ein oder mehrere weitere Server, welche jeweils einen Zugriff auf eine zweite Datenbank ein oder mehrerer zweiter Datenbanken bereitstellen. Die ein oder mehreren weiteren Server umfassen jeweils einen weiteren Prozessor, einen weiteren Speicher mit weiteren Programminstruktionen und eine weitere Kommunikationsschnittstelle zur Kommunikation über das Netzwerk.

Ein Ausführen der weiteren Programminstruktionen durch den weiteren Prozessor des jeweiligen weiteren Servers veranlasst den weiteren Prozessor dazu veranlasst, den weiteren Server zu steuern zum Empfangen einer Abfrage ein oder mehrerer zweiter Datenbankeinträge der zweiten Datenbank, auf welche der entsprechende weitere Server einen Zugriff bereitstellt, und Senden der abgefragten ein oder mehreren zweiten Datenbankeinträge der entsprechenden zweiten Datenbank in Antwort auf die empfangene Abfrage an den Server.

Die Abfragen der zweiten Datenbankeinträge der ein oder mehreren zweiten Datenbanken umfassen beispielsweise ein Senden ein oder mehrerer Abfragen von dem Server an die entsprechenden ein oder mehrerer weiteren Server und das Empfangen der von den ein oder mehreren weiteren Servern in Antwort auf die Abfragen gesendeten zweiten Datenbankeinträge durch den Server.

Beispielsweise ist das System dazu konfiguriert jede der zuvor beschrieben Ausführungsformen des Verfahrens zum Ausstellen des digitalen Dokuments auszuführen.

Beispielsweise umfasst das System ferner das Endgerät.

Beispielsweise umfassen die ausgestellten digitalen Dokumente jeweils einen Datensatz mit Datenelementen in Klartext. Der Datensatz ist mit einem Signaturschlüssel eines das Dokument ausstellenden Ausstellerdienstes signiert. Der Datensatz umfasst ferner einen öffentlichen kryptographischen Schlüssel eines Endgeräts zum kryptographischen Binden des Dokuments an das Endgerät.

Beispielsweise handelt es sich bei dem digitalen Dokument um ein Erzeugnis eines der zuvor beschriebenen Ausführungsformen des Verfahrens zum Ausstellen des digitalen Provisionierungstokens.

Beispielsweise umfasst der signierte Datensatz ferner eine Angabe eines Zeitpunkts der Ausstellung des Dokuments.

Beispielsweise umfasst die Mehrzahl von ausgestellten Dokumenten ein oder mehrere Fahrzeugdokumente ein oder mehrerer Fahrzeuge, beispielsweise ein oder mehrere elektronische Zulassungsbescheinigungen Teil I, ein oder mehrere Versicherungsscheine, und/oder ein oder mehrere Schlüsseltoken. Beispielsweise umfasst die Mehrzahl von auszustellenden Dokumenten ferner einen digitalen Führerschein, d.h. eine sogenannte mobile driving licence (mDL).

Ausführungsformen umfassen ein Verfahren zum Erzeugen eines digitalen Provisionierungstokens durch einen Ausstellerdienst. Der Provisionierungstoken weist eine Berechtigung zum Empfang einer ersten Kombination aus einer Mehrzahl von auszustellenden digitalen Dokumenten mit einem Endgerät und zur kryptographischen Kopplung der auszustellenden Dokumente an das Endgerät im Zuge der Ausstellung nach.

Das Verfahren umfasst unter Verwendung ein oder mehrerer erster Server des Ausstellerdienstes:
∘ Empfangen einer Erstellungsanfrage zum Erstellen des Provisionierungstokens,
∘ Identifizieren des Anfragenstellers unter Verwendung empfangener Identifikationsdaten des Anfragenstellers,
∘ Erzeugen des angefragten Provisionierungstokens in Form eines signierten Datensatzes, wobei das Erzeugen umfasst:
   - Empfangen einer Mehrzahl von ersten Datenelementen, wobei jedes der ersten Datenelemente der Mehrzahl von ersten Datenelementen jeweils einem der auszustellenden Dokumente der Mehrzahl von auszustellenden Dokumenten zugeordnet ist und das entsprechende auszustellende Dokument identifiziert,
   - Prüfen der ersten Datenelemente unter Verwendung einer Mehrzahl von zweiten Datenbankeinträgen aus ein oder mehreren zweiten Datenbanken, welche jeweils von einem der auszustellenden Dokumente der Mehrzahl von auszustellenden Dokumenten zu umfassende Daten umfassen,
   - Erzeugen einer Mehrzahl von ersten Salt-Werten, welche jeweils einem der ersten Datenelemente zugeordnet werden, wobei das Zuordnen jeweils ein Speichern einer ersten Zuordnung des entsprechenden ersten Salt-Werts zu dem entsprechenden ersten Datenelement der Mehrzahl von ersten Datenelementen in einer ersten Datenbank umfasst,
   - Berechnen einer Mehrzahl von ersten Hashwerten unter Verwendung einer Mehrzahl von zweiten Kombinationen, wobei die zweiten Kombinationen jeweils einen ersten Salt-Wert der Mehrzahl von ersten Salt-Werten und das dem entsprechenden ersten Salt-Wert zugeordnete erste Datenelement der Mehrzahl von ersten Datenelementen umfassen,
   - Erstellen eines Datensatzes, welcher die Mehrzahl von ersten Hashwerten umfasst,
   - Signieren des Datensatzes unter Verwendung eines dem Ausstellerdienst zugeordneten kryptographischen Signaturschlüssels,
   - Bereitstellen des angefragten Provisionierungstokens in Form des signierten Datensatzes,
   - Senden des Provisionierungstokens an den identifizierten Anfragensteller.

Beispiele können den Vorteil haben, dass in kryptographisch gesicherter Weise ein Provisionierungstoken bereitgestellt wird. Der Provisionierungstoken weist eine Berechtigung zum Empfang der Mehrzahl von auszustellenden digitalen Dokumenten mit einem Endgerät und zur kryptographischen Kopplung dieser Dokumente an das Endgerät im Zuge der Ausstellung nach. Diese Berechtigung wird durch die Signatur des Datensatzes mit dem dem Ausstellerdienst zugeordneten kryptographischen Signaturschlüssel bestätigt. Bei dem kryptographischen Signaturschlüssel handelt es sich beispielsweise um einen privaten kryptographischen Schlüssel eines dem Ausstellerdienst zugeordneten asymmetrischen kryptographischen Schlüsselpaars.

Zunächst wird der Anfragensteller identifiziert. Beispielsweise sind die Datenelemente der zweiten Datenbankeinträge bzw. die zweiten Datenbankeinträge, auf Basis derer die Dokumente ausgestellt werden sollen, einer bestimmten Person oder Entität zugeordnet. Durch das Identifizieren des Anfragenstellers kann sichergestellt werden, dass sich bei dem Anfragensteller um die entsprechende berechtigte Person oder Entität handelt. Beispielsweise umfassen die zweiten Datenbankeinträge jeweils Referenzdaten oder den zweiten Datenbankeinträgen sind jeweils Referenzdaten zugeordnet, anhand derer geprüft werden kann, ob es sich bei der identifizierten Person bzw. Entität tatsächlich um die berechtigte Person bzw. Entität zum Verfügen über die Datenelemente der entsprechenden zweiten Datenbankeinträge bzw. die entsprechenden zweiten Datenbankeinträge handelt.

Ferner wird beispielsweise geprüft, ob die empfangenen ersten Datenelementen existierende zweite Datenbankeinträge in den ein oder mehreren zweiten Datenbanken identifizieren, d.h. tatsächlich auf Basis dieser Datenbankeinträge auszustellende Dokumente zu identifizieren vermögen. Dabei wird beispielsweise geprüft, ob es sich bei den empfangenen ersten Datenelementen tatsächlich jeweils um in den zweiten Datenbankeinträgen gespeicherte Datenelemente und damit um korrekte Datenelement handelt. Beispielsweise werden zusätzlich zu den ersten Datenelementen der einzelnen Dokumente jeweils noch ein oder mehrere weitere Datenelemente empfangen, welche unter Verwendung der zweiten Datenbankeinträge geprüft werden.

Die ersten Datenelemente werden jeweils zum Identifizieren eines der auszustellenden Dokumente verwendet. Somit kann anhand der in dem Provisionierungstoken gespeicherten ersten Hashwerte, welche jeweils von einem der ersten Datenelemente abhängen, jeweils ein auszustellendes Dokument bzw. der zum Ausstellen des entsprechenden Dokuments zu verwendende Datenbankeintrag einer der ein oder mehreren zweiten Datenbänke identifiziert werden. Die ersten Datenelemente dienen beispielsweise selbst jeweils als ein Datenbankzugriffsschlüssel für die jeweilige zweite Datenbank, z.B. ein Primärschlüssel, oder zum Ableiten eines Datenbankzugriffsschlüssels, z.B. eines Primärschlüssels. Beispielsweise kann anhand der ersten Datenelemente jeweils ein zum Prüfen zu verwendender zweiter Datenbankeintrag identifiziert werden.

Datenelemente der Dokumente werden in dem Provisionierungstoken beispielsweise nicht in Klartext, sondern nur in gehashter und damit geschützter Form gespeichert. Somit kann sichergestellt werden, dass die entsprechenden Datenelemente nicht aus dem Provisionierungstoken abgeleitet werde können. Um das Hashen zusätzlich abzusichern, werden die Datenelemente, z.B. die ersten Datenelemente, jeweils mit einem Salt-Wert kombiniert und die resultierte Kombination zum Erzeugen der in dem Provisionierungstoken gespeicherten Hashwerte, beispielsweise der ersten Hashwerte, verwendet. Unter einem Salt-Wert wird in der Kryptographie eine zufällig gewählte Zeichenfolge, etwa eine Zufallswert, verstanden, die an einen gegebenen Klartext, beispielsweise ein Datenelement des Dokuments, vor dessen weiterer Verarbeitung, beispielsweise eine Eingabe in eine Hashfunktion, angehängt wird, um die Entropie der Eingabe zu erhöhen.

Die Salt-Werte werden in der ersten Datenbank gespeichert. Somit kann sichergestellt werden, dass der Provisionierungstoken nur einmal verwendet werden kann. Nach einer Verwendung des Provisionierungstokens zum Nachweis der Berechtigung zum Empfang der auszustellenden digitalen Dokumente, wird die entsprechenden Salt-Werte beispielsweise gelöscht. Da die Salt-Werte zum Validieren der entsprechenden Hashwerte in dem Provisionierungstoken benötigt werden, kann der Hashwert nach dem Löschen der Salt-Werte beispielsweise nicht mehr validiert werden. Somit kann der Provisionierungstokens nach dem Löschen beispielsweise nicht mehr zum erfolgreichen Nachweis der Berechtigung zum Empfang der auszustellenden digitalen Dokumente verwendet werden.

Der Provisionierungstoken stellt somit ein kryptographisch gesichertes Verbindungsglied zwischen einer Identifizierung eines Anfragenstellers und einem Ausstellen der auszustellenden Dokumente dar. Somit kann das Identifizieren über einen von dem Ausstellen unabhängigen Kanal erfolgen.

Das Senden des Provisionierungstoken kann auf verschiedene Weise erfolgen. Beispielsweise kann der Provisionierungstoken automatisch gesendet werden. Beispielsweise kann ein QR-Code zum Herunterladen des Provisionierungstoken bereitgestellt werden. Beispielsweise können Informationen zum Nachweisen einer Berechtigung zum Herunterladen des Provisionierungstoken an den Anfragensteller gesendet werden. Beispielsweise umfassen die Informationen eine PIN und/oder TAN. Beispielsweise werden PIN und/oder TAN über einen unabhängigen Kanal, etwa mittels eines Briefes oder einer SMS versendet.

Beispielsweise handelt es sich bei der ersten Datenbank und den ein oder mehreren zweiten Datenbanken um voneinander unabhängige Datenbanken.

Die erste Datenbank stellt beispielsweise Daten bereit, welche zum Prüfen der Gültigkeit von Provisionierungstoken, Dokumenten und/oder Dokumentenkopien dienen. In den ein oder mehreren zweiten Datenbanken sind beispielsweise Datenelemente auszustellender Dokumente und/oder Dokumentenkopien gespeichert. Beispielsweise ist jede der zweiten Datenbanken jeweils einem bestimmten Dokumententyp zugeordnet und umfasst zweite Datensätze mit Datenelemente für Dokumente dieses bestimmten Dokumententyps.

Unter einem Dokument wird hier insbesondere eine Urkunde verstanden, wie etwa eine Geburtsurkunde, eine Heiratsurkunde, ein Staatsbürgerschaftsnachweis, ein Ausweisdokument, insbesondere Reisepass, Personalausweis, Visum sowie Versicherungsschein, Führerschein, Fahrzeugschein, oder Fahrzeugbrief.

Unter einer Kopie eines Dokuments wird eine inhaltlich übereinstimmende Version des Dokuments verstanden, deren Authentizität von dem Ausstellerdienst bescheinigt wird und die mittels eines Indikators explizit als Kopie gekennzeichnet ist.

Beispielsweise werden die ersten Datenelemente verwendet zum Bereitstellen einer Mehrzahl von Datenbankzugriffsschlüsseln zum Identifizieren einer Mehrzahl von in der ersten Datenbank gespeicherten ein oder mehreren ersten Datenbankeinträgen mit den ersten Zuordnungen der erzeugten ersten Salt-Werte zu dem jeweiligen ersten Datenelement der Mehrzahl von ersten Datenelementen.

Beispiele können den Vorteil haben, dass unter Verwendung der ersten Datenelemente, welche die auszustellenden Dokumente identifiziert, auf ein oder mehrere Datenbankeinträge in der ersten Datenbank zugegriffen werden kann, welche Daten bereitstellt, die zum Prüfen der Gültigkeit des Provisionierungstokens dienen. Beispielsweise wird ein einziger Datenbankeintrag je Provisionierungstoken in der ersten Datenbank erstellt. Beispielsweise genügt eines der ersten Datenelemente, diesen einen Datenbankeintrag zu identifizieren. Beispielsweise wird eine Kombination der ersten Datenelemente der unterschiedlichen auszustellenden Dokumente verwendet diesen einen Datenbankeintrag zu identifizieren. Beispielsweise umfasst die erste Datenbank für jedes der auszustellenden Dokumente, für welche der Provisionierungstoken erstellt wird, jeweils einen Datenbankeintrag. Beispielsweise werden diese Datenbankeinträge jeweils durch eines der ersten Datenelemente identifiziert.

Beispielsweise werden die ersten Datenelemente von dem Anfragensteller empfangen und das Prüfen umfasste in Prüfen, ob die zweiten Datenbankeinträge die ersten Datenelemente umfassen.

Beispiele können den Vorteil haben, dass somit sichergestellt werden kann, dass das von dem Anfragensteller empfangene erste Datenelemente korrekt sind bzw. ein oder mehrere Datenbankeinträge mit Datenelementen für die auszustellenden Dokumente in den ein oder mehreren zweiten Datenbanken gespeichert sind.

Beispielsweise werden die ersten Datenelemente als Teile der zweiten Datenbankeinträge der ein oder mehreren zweiten Datenbanken empfangen und das Prüfen umfasst ein Prüfen, ob die ersten Datenelemente aus den zweiten Datenbankeinträge stammen.

Beispiele können den Vorteil haben, dass die ersten Datenelemente aus den zweiten Datenbankeinträgen der zweiten Datenbank ausgelesen werden. Damit kann sichergestellt werden, dass es sich bei den empfangenen ersten Datenelementen um korrekte Datenelemente handelt bzw. Datenbankeinträge mit Datenelementen für die auszustellenden Dokumente in den ein oder mehreren zweiten Datenbanken gespeichert sind.

Beispielsweise werden Zugriffe auf die ein oder mehreren zweiten Datenbanken über ein oder mehrere zweite Server bereitgestellt. Ein Abfragen der zweiten Datenbankeinträge umfasst ein Senden von ein oder mehreren Abfragen an die ein oder mehreren zweiten Server und ein Empfangen der zweiten Datenbankeinträge in Antwort auf die gesendeten ein oder mehreren Abfragen.

Beispiele können den Vorteil haben, dass die erste Datenbank und die ein oder mehreren zweiten Datenbanken beispielsweise jeweils unterschiedlichen Diensten und insbesondere unabhängig voneinander verwaltet werden können. Beispielsweise kann der die erste Datenbank verwaltende erste Server im Bedarfsfall über die ein oder mehreren zweiten Server auf die ein oder mehreren zweiten Datenbanken zugreifen.

Beispielsweise erfolgt das Abfragen der zweiten Datenbankeinträge jeweils unter Verwendung des dem entsprechenden auszustellenden Dokument zugeordneten ersten Datenelement, welches das auszustellende Dokument identifiziert. Beispielsweise umfasst die Abfrage eines zweiten Datenbankeintrags das dem auszustellenden Dokument zugeordnete erste Datenelement, welches das auszustellende Dokument identifiziert. Das entsprechende erste Datenelement dient beispielsweise zum Bereitstellen eines Datenbankzugriffsschlüssels, beispielsweise als Primärschlüssel, zum Zugreifen auf den entsprechenden zweiten Datenbankeintrag.

Beispielsweise erfolgt das Abfragen der zweiten Datenbankeinträge jeweils unter Verwendung von Identifikationsdaten des identifizierten Anfragenstellers. Beispielsweise umfasst die Abfrage eines zweiten Datenbankeintrags jeweils die entsprechenden Identifikationsdaten des Anfragenstellers. Beispielsweise können auch Identifikationsdaten des identifizierten Anfragenstellers dazu dienen, einen dem Anfragensteller zugeordneten zweiten Datenbankeintrag in der zweiten Datenbank zu identifizieren.

Beispielsweise umfasst das Erstellen des angefragten Provisionierungstokens ferner:
- Erzeugen eines dem identifizierten Anfragensteller zugeordneten Einmalkennworts für den Provisionierungstoken,
- Erzeugen eines zweiten Salt-Werts, welcher dem Einmalkennwort zugeordnet wird, wobei das Zuordnen ein Speichern einer zweiten Zuordnung des zweiten Salt-Werts zu dem Einmalkennwort unter Verwendung zumindest eines der ersten Datenelemente in der ersten Datenbank umfasst,
- Berechnen eines zweiten Hashwerts unter Verwendung einer dritten Kombination des Einmalkennworts und des zweiten Salt-Werts,
- Verwenden des zweiten Hashwerts zum Erstellen des Datensatzes, wobei der Datensatz den zweiten Hashwert umfasst,
- Senden des Einmalkennworts an den identifizierten Anfragensteller.

Beispiele können den Vorteil haben, dass zusätzlich ein Einmalpasswort für den Anfragensteller bereitgestellt und kryptographisch an den Provisionierungstoken gebunden werden kann. Somit ist zusätzlich zu dem Besitz des Provisionierungstoken das entsprechende Einmalkennwort, etwa eine TAN, zum erfolgreichen Nachweis der Berechtigung zum Empfang eines auszustellenden digitalen Dokuments mit einem Endgerät und zur kryptographischen Kopplung an das Endgerät im Zuge der Ausstellung notwendig.

Beispielsweise erfolgt das Senden des Einmalkennworts an den identifizierten Anfragensteller über einen Kanal, welcher unabhängig von demjenigen Kanal ist, über welchen das ausgestellte Provisionierungstoken an den identifizierten Anfragensteller gesendet wird. Beispielsweise wird das Einmalpasswort per Brief oder per SMS an den Anfragensteller gesendet.

Beispielsweise umfasst das Erstellen des angefragten Provisionierungstokens ferner:
- Empfangen einer Mehrzahl von zweiten Datenelementen, wobei jedes der zweiten Datenelemente der Mehrzahl von zweiten Datenelementen jeweils einem der auszustellenden Dokumente der Mehrzahl von auszustellenden Dokumenten zugeordnet ist,
- Prüfen der zweiten Datenelemente unter Verwendung der zweiten Datenbankeinträge aus den ein oder mehreren zweiten Datenbanken,
- Erzeugen einer Mehrzahl von dritten Salt-Werten, welche jeweils einem der zweiten Datenelemente zugeordnet werden, wobei das Zuordnen jeweils ein Speichern einer dritten Zuordnung des entsprechenden dritten Salt-Werts zu dem entsprechenden zweiten Datenelement der Mehrzahl von zweiten Datenelementen unter Verwendung des ersten Datenelements des jeweiligen auszustellenden Dokuments, dem das entsprechende zweite Datenelement zugeordnet ist, in der ersten Datenbank umfasst,
- Berechnen einer Mehrzahl von dritten Hashwerten unter Verwendung einer Mehrzahl von vierten Kombinationen, wobei die vierten Kombinationen jeweils einen dritten Salt-Wert der Mehrzahl von dritten Salt-Werten und das dem entsprechenden dritte Salt-Wert zugeordnete zweite Datenelement der Mehrzahl von zweiten Datenelementen umfasst,
- Verwenden der Mehrzahl von dritten Hashwerten zum Erstellen des Datensatzes, wobei der Datensatz die Mehrzahl von dritten Hashwerten umfasst.

Beispiele können den Vorteil haben, dass neben den ersten Datenelementen jeweils ein oder mehrere weitere Datenelemente je Dokument mit dem Provisionierungstoken zum Identifizieren der auszustellenden Dokumente bereitgestellt werden können. Beispielsweise handelt es sich bei den Datenbankzugriffsschlüsseln jeweils um eine Kombination aus einem ersten und mindestens einem zweiten Datenelement.

Beispielsweise handelt es sich bei den zweiten Datenelementen der auszustellenden Dokumente um ein Datenelemente, welche das jeweilige auszustellende Dokument identifizieren.

Beispielsweise erfolgt das Abfragen der zweiten Datenbankeinträge jeweils unter Verwendung eines zweiten dem entsprechenden auszustellenden Dokument zugeordneten Datenelements, welches das auszustellende Dokument beispielsweise identifiziert. Beispielsweise umfasse die Abfragen der zweiten Datenbankeinträge jeweils das dem entsprechenden auszustellenden Dokument zugeordnete zweite Datenelement. Das entsprechende zweite Datenelement dient beispielsweise in Kombination mit dem ersten Datenelement des jeweiligen auszustellenden Dokuments zum Bereitstellen eines Datenbankzugriffsschlüssels, beispielsweise als Primärschlüssel, zum Zugreifen auf den zweiten Datenbankeintrag des jeweiligen auszustellenden Dokuments.

Beispielsweise werden die zweiten Datenelemente verwendet zum Bereitstellen einer Mehrzahl von Datenbankzugriffsschlüsseln zum Identifizieren der in der ersten Datenbank gespeicherten ein oder mehreren ersten Datenbankeinträge. Beispielsweise dienen die zweiten Datenelemente jeweils in Kombination mit den ersten Datenelementen zum Bereitstellen eines Datenbankzugriffsschlüssels, beispielsweise als Primärschlüssel, zum Zugreifen auf die ein oder mehreren ersten Datenbankeinträge in der ersten Datenbank.

Beispielsweise werden die zweiten Datenelemente von dem Anfragensteller empfangen werden und das Prüfen umfasst ein Prüfen, ob die zweiten Datenbankeinträge die zweiten Datenelemente umfassen.

Beispiele können den Vorteil haben, dass somit sichergestellt werden kann, dass die von dem Anfragensteller empfangenen zweiten Datenelemente korrekt sind bzw. ein Datenbankeintrag mit Datenelementen für das auszustellende Dokument in den ein oder mehreren zweiten Datenbänken gespeichert ist.

Beispielsweise werden die zweiten Datenelemente als Teile der zweiten Datenbankeinträge der ein oder mehreren zweiten Datenbanken empfangen und das Prüfen umfasst ein Prüfen, ob die zweiten Datenelemente aus den zweiten Datenbankeinträgen stammen.

Beispiele können den Vorteil haben, dass die zweiten Datenelemente aus den zweiten Datenbankeinträgen der zweiten Datenbank ausgelesen werden. Damit kann sichergestellt werden, dass es sich bei den empfangenen zweiten Datenelementen um korrekte Datenelemente handelt bzw. Datenbankeinträge mit Datenelementen für die auszustellenden Dokumente in den ein oder mehreren zweiten Datenbanken gespeichert sind.

Beispielsweise umfassen die Identifikationsdaten des Anfragenstellers ein oder mehrere der folgenden Daten: einen Nutzernamen, ein Passwort, eine mit einem Signaturschlüssel des Anfragenstellers erstellte Signatur in Kombination mit einem Zertifikat mit einem Signaturprüfschlüssels des Anfragenstellers, ein oder mehrere aus einem ID-Token des Anfragenstellers ausgelesene Attribute des Anfragenstellers, welche mit einem Signaturschlüssel eines ID-Provider-Dienst signiert sind, Attribute des Anfragenstellers, welche von einem Computersystem einer zum Identifizieren des Nutzers autorisierten Entität empfangen werden.

Beispiele können den Vorteil haben, dass der Anfragensteller auf unterschiedliche Weise identifiziert werden kann. Beispielsweise kann ein dem Anfragensteller zugeordneter Account bestehen, bei welchem sich der Anfragensteller mit Nutzernamen und Passwort oder anderen Authentifizierungsfaktoren anmelden kann. In dem Account sind beispielsweise geprüfte Identifikationsdaten hinterlegt, welche den Anfragensteller identifizieren.

Beispielsweise kann ein entsprechendes Zertifikat geprüfte Identifikationsdaten umfassen, welche den Anfragensteller identifizieren. Mit einer unter Verwendung des Signaturschlüssels des Anfragenstellers erstellten Signatur kann der Anfragensteller nachweisen, dass das entsprechende Zertifikat mit zugehörigen Signaturprüfschlüssels und damit die entsprechenden Identifikationsdaten dem Anfragensteller zugeordnet sind.

Beispielsweise befindet sich der Anfragensteller im Besitz eines dem Anfragensteller zugeordneten ID-Tokens mit Identifikationsdaten in Form Attributen des Anfragenstellers. Ein oder mehrere dieser Attribute des Anfragenstellers werde beispielsweise von einem ID-Provider-Dienst, welcher eine Leseberechtigung zum Auslesen der entsprechenden Attribute besitzt ausgelesen und mit einem Signaturschlüssel eines ID-Provider-Dienst signiert. Mit der Signatur garantiert der ID-Provider-Dienst, dass es sich bei den entsprechenden Attributen um aus dem ID-Token ausgelesene Attribute handelt.

Beispielsweise können Attribute des Anfragenstellers auch von einem Computersystem einer zum Identifizieren des Nutzers autorisierten Entität empfangen werden. Hierbei kann es sich beispielsweise um eine Identifikation des Anfragenstellers in einer Filiale vor Ort oder remote, etwa über ein Video-Ident-Verfahren, handeln.

Beispielsweise erfolgt das Signieren des Datensatzes nur unter Voraussetzung eines erfolgreichen Identifizierens des Anfragenstellers, sodass durch die Signatur ein erfolgreiches Identifizieren bestätigt wird.

Beispiele können den Vorteil haben, dass durch das signierte Provisionierungstoken somit das erfolgreiche Identifizieren des Anfragenstellers nachgewiesen werden kann.

Beispielsweise umfasst die Mehrzahl von auszustellenden Dokumenten ein oder mehrere Fahrzeugdokumente ein oder mehrerer Fahrzeuge, beispielsweise ein oder mehrere elektronische Zulassungsbescheinigungen Teil I, ein oder mehrere Versicherungsscheine, und/oder ein oder mehrere Schlüsseltoken. Beispielsweise umfasst die Mehrzahl von auszustellenden Dokumenten ferner einen digitalen Führerschein, d.h. eine sogenannte mobile driving licence (mDL).

Beispiele können den Vorteil haben, dass ein Provisionierungstoken zum Nachweis einer Berechtigung zum Empfang einer entsprechenden Kombination von Dokumenten mit einem Endgerät und zur kryptographischen Kopplung an das Endgerät im Zuge der Ausstellung nachgewiesen werden kann.

Beispielsweise umfasst die Mehrzahl von ersten Datenelementen ein oder mehrere der folgenden Datenelemente: eine oder mehrere Fahrzeug-IDs, beispielsweise Fahrzeugkennzeichen oder Fahrgestellnummern, ein oder mehrere Versicherungsnummern, und/oder ein oder mehrere Schlüssel-IDs. Beispielsweise umfasst die Mehrzahl von ersten Datenelementen eine Führerscheinnummer.

Beispiele können den Vorteil haben, dass eine eindeutige Fahrzeug-ID, etwa in Form des Fahrzeugkennzeichens und/oder einer Fahrgestellnummer bereitgestellt werden kann. Zusätzlich können eindeutige IDs für die weiteren auszustellenden Dokumente bereitgestellt werden.

Beispielsweise umfasst die Mehrzahl von zweiten Datenelementen ein oder mehrere der folgenden Datenelemente: eine oder mehrere Fahrzeug-IDs, beispielsweise Fahrzeugkennzeichen oder Fahrgestellnummern, ein oder mehrere Versicherungsnummern, und/oder ein oder mehrere Schlüssel-IDs. Beispielsweise umfasst die Mehrzahl von zweiten Datenelementen eine Führerscheinnummer.

Beispiele können den Vorteil haben, dass eine eindeutige Fahrzeug-ID, etwa in Form des Fahrzeugkennzeichens und/oder einer Fahrgestellnummer. Zusätzlich können eindeutige IDs für die weiteren auszustellenden Dokumente bereitgestellt werden.

Ausführungsformen umfassen ferner einen Server eines Ausstellerdienstes zum Erzeugen eines digitalen Provisionierungstokens. Der Server umfasst einen Prozessor, einen Speicher mit Programminstruktionen und eine Kommunikationsschnittstelle zur Kommunikation über ein Netzwerk. Der Provisionierungstoken weist eine Berechtigung zum Empfang einer ersten Kombination aus einer Mehrzahl von auszustellenden digitalen Dokumenten mit einem Endgerät und zur kryptographischen Kopplung der auszustellenden Dokumente an das Endgerät im Zuge der Ausstellung nach.

Ein Ausführen der Programminstruktionen durch den Prozessor veranlasst den Prozessor dazu, den Server zu steuern zum:
∘ Empfangen einer Erstellungsanfrage zum Erstellen des Provisionierungstokens,
∘ Identifizieren des Anfragenstellers unter Verwendung empfangener Identifikationsdaten des Anfragenstellers,
∘ Erzeugen des angefragten Provisionierungstokens in Form eines signierten Datensatzes, wobei das Erzeugen umfasst:
   - Empfangen einer Mehrzahl von ersten Datenelementen, wobei jedes der ersten Datenelemente der Mehrzahl von ersten Datenelementen jeweils einem der auszustellenden Dokumente der Mehrzahl von auszustellenden Dokumenten zugeordnet ist und das entsprechende auszustellende Dokument identifiziert,
   - Prüfen der ersten Datenelemente unter Verwendung einer Mehrzahl von zweiten Datenbankeinträgen aus ein oder mehreren zweiten Datenbanken, welche jeweils von einem der auszustellenden Dokumente der Mehrzahl von auszustellenden Dokumenten zu umfassende Daten umfassen,
   - Erzeugen einer Mehrzahl von ersten Salt-Werten, welche jeweils einem der ersten Datenelemente zugeordnet werden, wobei das Zuordnen jeweils ein Speichern einer ersten Zuordnung des entsprechenden ersten Salt-Werts zu dem entsprechenden ersten Datenelement der Mehrzahl von ersten Datenelementen in einer ersten Datenbank umfasst,
   - Berechnen einer Mehrzahl von ersten Hashwerten unter Verwendung einer Mehrzahl von zweiten Kombinationen, wobei die zweiten Kombinationen jeweils einen ersten Salt-Wert der Mehrzahl von ersten Salt-Werten und das dem entsprechenden ersten Salt-Wert zugeordnete erste Datenelement der Mehrzahl von ersten Datenelementen umfassen,
   - Erstellen eines Datensatzes, welcher die Mehrzahl von ersten Hashwerten umfasst,
   - Signieren des Datensatzes unter Verwendung eines dem Ausstellerdienst zugeordneten kryptographischen Signaturschlüssels,
   - Bereitstellen des angefragten Provisionierungstokens in Form des signierten Datensatzes,
o Senden des Provisionierungstokens an den identifizierten Anfragensteller.

Beispielsweise ist der Server dazu konfiguriert jede der zuvor beschrieben Ausführungsformen des Verfahrens zum Erzeugen des digitalen Provisionierungstokens auszuführen.

Ausführungsformen umfassen ferner ein System umfassend einen Server eines Ausstellerdienstes nach einer der zuvor beschriebenen Ausführungsformen sowie ein oder mehrere weitere Server, welche jeweils einen Zugriff auf eine zweite Datenbank ein oder mehrerer zweiter Datenbanken bereitstellen. Die ein oder mehreren weiteren Server umfassen jeweils einen weiteren Prozessor, einen weiteren Speicher mit weiteren Programminstruktionen und eine weitere Kommunikationsschnittstelle zur Kommunikation über das Netzwerk.

Ein Ausführen der weiteren Programminstruktionen durch den weiteren Prozessor des jeweiligen weiteren Servers veranlasst den weiteren Prozessor dazu, den weiteren Server zu steuern zum Empfangen einer Abfrage ein oder mehrerer zweiter Datenbankeinträge der zweiten Datenbank, auf welche der entsprechende weitere Server einen Zugriff bereitstellt, und zum Senden der abgefragten ein oder mehreren zweiten Datenbankeinträge der entsprechenden zweiten Datenbank in Antwort auf die empfangene Abfrage an den Server.

Die Abfragen der zweiten Datenbankeinträge der ein oder mehreren zweiten Datenbanken umfassen beispielsweise ein Senden ein oder mehrerer Abfragen von dem Server an die entsprechenden ein oder mehrerer weiteren Server und das Empfangen der von den ein oder mehreren weiteren Servern in Antwort auf die Abfragen gesendeten zweiten Datenbankeinträge durch den Server.

Beispielsweise ist das System dazu konfiguriert jede der zuvor beschrieben Ausführungsformen des Verfahrens zum Erzeugen des digitalen Provisionierungstokens auszuführen.

Ausführungsformen umfassen ferner einen digitalen Provisionierungstoken zum Nachweis einer Berechtigung zum Empfang einer ersten Kombination aus einer Mehrzahl von auszustellenden digitalen Dokumenten mit einem Endgerät und zur kryptographischen Kopplung der auszustellenden Dokumente an das Endgerät im Zuge der Ausstellung. Der Provisionierungstoken umfasst einen Datensatz mit einer Mehrzahl von ersten Hashwerten, welche jeweils unter Verwendung einer zweiten Kombination einer Mehrzahl von zweiten Kombinationen erzeugt sind. Die zweiten Kombinationen sind jeweils ein erstes Datenelement einer Mehrzahl von ersten Datenelementen, welches einem der auszustellenden Dokumente zugeordnet ist, welches das entsprechende erste Datenelement identifiziert, und eines dem entsprechenden ersten Datenelement zugeordneten ersten Salt-Werts einer Mehrzahl von ersten Salt-Werten erzeugt. Der Datensatz ist unter Verwendung eines Signaturschlüssels eines den Provisionierungstoken erzeugenden Ausstellerdienstes signiert.

Beispielsweise handelt es sich bei dem digitalen Provisionierungstoken um ein Erzeugnis eines der zuvor beschriebenen Ausführungsformen des Verfahrens zum Erzeugen des digitalen Provisionierungstokens.

Beispielsweise umfasst der signierte Datensatz ferner einen zweiten Hashwert, welcher unter Verwendung einer dritten Kombination eines dem identifizierten Anfragensteller zugeordneten Einmalkennworts und eines dem Einmalkennwort zugeordneten zweiten Salt-Werts erzeugt ist.

Beispielsweise umfasst der signierte Datensatz ferner eine Mehrzahl von dritten Hashwerten, welche jeweils unter Verwendung einer dritten Kombination eines zweiten Datenelements einer Mehrzahl von zweiten Datenelementen, die jeweils einem der auszustellenden Dokumente zugeordneten sind, und eines zugehörigen dritten Salt-Werts einer Mehrzahl von dritten Salt-Werten erzeugt sind.

Ausführungsformen umfassen ein Verfahren zum Erzeugen eines digitalen Provisionierungstokens durch einen Ausstellerdienst. Der Provisionierungstoken weist eine Berechtigung zum Empfang einer ersten Kombination aus einer Mehrzahl von auszustellenden digitalen Kopien einer Mehrzahl von ausgestellten digitalen Dokumenten mit einem Endgerät und zur kryptographischen Kopplung der auszustellenden digitalen Kopien an das Endgerät im Zuge der Ausstellung nach.

Das Verfahren umfasst unter Verwendung ein oder mehrerer erster Server des Ausstellerdienstes:
∘ Empfangen einer Erstellungsanfrage zum Erstellen des Provisionierungstokens,
∘ Identifizieren des Anfragenstellers unter Verwendung eines der ausgestellten digitalen Dokumente der Mehrzahl von ausgestellten digitalen Dokumenten,
o Erzeugen des angefragten Provisionierungstokens in Form eines signierten Datensatzes, wobei das Erstellen umfasst:
   - Empfangen einer Mehrzahl von ersten Datenelementen, wobei jedes der ersten Datenelemente der Mehrzahl von ersten Datenelementen jeweils einem der ausgestellten Dokumente der Mehrzahl von ausgestellten digitalen Dokumenten zugeordnet ist und das entsprechende ausgestellte Dokument identifiziert, für das eine Kopie auszustellen ist,
   - Prüfen der ersten Datenelemente unter Verwendung einer Mehrzahl von zweiten Datenbankeinträgen aus ein oder mehreren zweiten Datenbanken, welche jeweils von einem der ausgestellten Dokumente der Mehrzahl von ausgestellten Dokumenten umfasste Daten umfassen,
   - Erzeugen einer Mehrzahl von ersten Salt-Werten, welche jeweils mindestens einem der ersten Datenelemente zugeordnet werden, wobei das Zuordnen jeweils ein Speichern einer ersten Zuordnung des entsprechenden ersten Salt-Werts zu dem entsprechenden ersten Datenelement der Mehrzahl von ersten Datenelementen in einer ersten Datenbank umfasst,
   - Berechnen einer Mehrzahl von ersten Hashwerten unter Verwendung einer Mehrzahl von zweiten Kombinationen, wobei die zweiten Kombinationen jeweils einen ersten Salt-Wert der Mehrzahl von ersten Salt-Werten und das dem entsprechenden ersten Salt-Wert zugeordnete erste Datenelement der Mehrzahl von ersten Datenelementen umfasst,
   - Erstellen eines Datensatzes, welcher die Mehrzahl von ersten Hashwerten sowie einen Indikator umfasst, wobei der Indikator anzeigt, dass es sich um einen Provisionierungstoken für Kopien der ausgestellten Dokumente der Mehrzahl von ausgestellten digitalen Dokumenten handelt,
   - Signieren des Datensatzes unter Verwendung eines dem Ausstellerdienst zugeordneten kryptographischen Signaturschlüssels,
   - Bereitstellen des angefragten Provisionierungstokens in Form des signierten Datensatzes,
o Senden des Provisionierungstokens an den identifizierten Anfragensteller.

Beispiele können den Vorteil haben, dass in kryptographisch gesicherter Weise ein Provisionierungstoken bereitgestellt wird. Der Provisionierungstoken weist eine Berechtigung zum Empfang der auszustellenden digitalen Kopien der ausgestellten digitalen Dokumente mit einem Endgerät und zur kryptographischen Kopplung der entsprechenden Kopien an das Endgerät im Zuge der Ausstellung nach. Diese Berechtigung wird durch die Signatur des Datensatzes mit dem dem Ausstellerdienst zugeordneten kryptographischen Signaturschlüssel bestätigt. Bei dem kryptographischen Signaturschlüssel handelt es sich beispielsweise um einen privaten kryptographischen Schlüssel eines dem Ausstellerdienst zugeordneten asymmetrischen kryptographischen Schlüsselpaars.

Zunächst wird der Anfragensteller identifiziert unter Verwendung eines oder mehrerer der ausgestellten digitalen Dokumente. Beispielsweise werden die entsprechenden ein oder mehreren ausgestellten digitalen Dokumente mit der Erstellungsanfrage gesendet, wobei die Erstellungsanfrage und/oder die empfangenen Dokumente mit einem privaten kryptographischen Schlüssel des Endgeräts, beispielsweise eines mobilen Endgeräts, signiert ist, an welches das Dokument kryptographisch gekoppelt ist. Beispielsweise sind die Datenelemente der zweiten Datenbankeinträge bzw. die zweiten Datenbankeinträge jeweils einer bestimmten Person oder Entität zugeordnet. Durch das Identifizieren des Anfragenstellers kann beispielsweise sichergestellt werden, dass sich bei dem Anfragensteller um die entsprechende berechtigte Person oder Entität handelt.

Ferner wird geprüft, ob es sich bei den empfangenen ersten Datenelementen tatsächlich jeweils um in den zweiten Datenbankeinträgen gespeicherte Datenelemente und damit um korrekte Datenelement handelt. Beispielsweise werden zusätzlich zu den ersten Datenelementen der einzelnen Dokumente jeweils noch ein oder mehrere weitere Datenelemente empfangen, welche unter Verwendung der zweiten Datenbankeinträge geprüft werden.

Die ersten Datenelemente werden jeweils zum Identifizieren einer der auszustellenden Kopien der Dokumente verwendet. Somit kann anhand der in dem Provisionierungstoken gespeicherten ersten Hashwerte, welche jeweils von einem der ersten Datenelemente abhängen, jeweils ein Dokument, für welches eine Kopie auszustellen ist, bzw. der zum Ausstellen der entsprechenden Kopie des Dokuments zu verwendende Datenbankeintrag einer der ein oder mehreren zweiten Datenbänke identifiziert werden. Die ersten Datenelemente dienen beispielsweise selbst jeweils als ein Datenbankzugriffsschlüssel für die jeweilige zweite Datenbank, z.B. ein Primärschlüssel, oder zum Ableiten eines Datenbankzugriffsschlüssels, z.B. eines Primärschlüssels. Beispielsweise kann anhand der ersten Datenelemente jeweils ein zum Prüfen zu verwendender zweiter Datenbankeintrag identifiziert werden.

Datenelemente der Dokumente werden in dem Provisionierungstoken beispielsweise nicht in Klartext, sondern nur in gehashter und damit geschützter Form gespeichert. Somit kann sichergestellt werden, dass die entsprechenden Datenelemente nicht aus dem Provisionierungstoken abgeleitet werde können. Um das Hashen zusätzlich abzusichern, werden die Datenelemente, z.B. die ersten Datenelemente, jeweils mit einem Salt-Wert kombiniert und die resultierte Kombination zum Erzeugen der in dem Provisionierungstoken gespeicherten Hashwerte, beispielsweise der ersten Hashwerte, verwendet. Unter einem Salt-Wert wird in der Kryptographie eine zufällig gewählte Zeichenfolge, etwa eine Zufallswert, verstanden, die an einen gegebenen Klartext, beispielsweise ein Datenelement des Dokuments, vor dessen weiterer Verarbeitung, beispielsweise eine Eingabe in eine Hashfunktion, angehängt wird, um die Entropie der Eingabe zu erhöhen.

Die Salt-Werte werden in der ersten Datenbank gespeichert. Somit kann sichergestellt werden, dass der Provisionierungstoken nur einmal verwendet werden kann. Nach einer Verwendung des Provisionierungstokens zum Nachweis der Berechtigung zum Empfang der auszustellenden Kopien der digitalen Dokumente, wird die entsprechenden Salt-Werte beispielsweise gelöscht. Da die Salt-Werte zum Validieren der entsprechenden Hashwerte in dem Provisionierungstoken benötigt werden, kann der Hashwert nach dem Löschen der Salt-Werte beispielsweise nicht mehr validiert werden. Somit kann der Provisionierungstokens nach dem Löschen beispielsweise nicht mehr zum erfolgreichen Nachweis der Berechtigung zum Empfang der auszustellenden Kopien der digitalen Dokumente verwendet werden.

Der Provisionierungstoken stellt somit ein kryptographisch gesichertes Verbindungsglied zwischen einer Identifizierung eines Anfragenstellers mittels der nur von dem Anfragensteller zu verwendenden Dokumente und einem Ausstellen der auszustellenden Kopien der Dokumente dar. Dabei kann die Ausstellung der Kopien der Dokumente unter Verwendung des Provisionierungstoken von einem anderen Nutzer angefragt werden, welcher keinen Zugriff auf die ausgestellten Dokumente besitzt. Somit kann das Ausstellen über einen von dem Identifizieren unabhängigen Kanal erfolgen.

Das Senden des Provisionierungstoken kann auf verschiedene Weise erfolgen. Beispielsweise kann der Provisionierungstoken automatisch gesendet werden. Beispielsweise kann ein QR-Code zum Herunterladen des Provisionierungstoken bereitgestellt werden. Beispielsweise können Informationen zum Nachweisen einer Berechtigung zum Herunterladen des Provisionierungstoken an den Anfragensteller gesendet werden. Beispielsweise umfassen die Informationen eine PIN und/oder TAN. Beispielsweise werden PIN und/oder TAN über einen unabhängigen Kanal, etwa mittels eines Briefes oder einer SMS versendet.

Beispielsweise handelt es sich bei der ersten Datenbank und den ein oder mehreren zweiten Datenbanken um voneinander unabhängige Datenbanken.

Die erste Datenbank stellt beispielsweise Daten bereit, welche zum Prüfen der Gültigkeit von Provisionierungstoken, Dokumenten und/oder Dokumentenkopien dienen. In den ein oder mehreren zweiten Datenbanken sind beispielsweise Datenelemente auszustellender Dokumente und/oder Dokumentenkopien gespeichert. Beispielsweise ist jede der zweiten Datenbanken jeweils einem bestimmten Dokumententyp zugeordnet und umfasst zweite Datensätze mit Datenelemente für Dokumente dieses bestimmten Dokumententyps.

Ein entsprechendes Provisionierungstoken für digitale Kopien von Dokumenten ermöglicht es dem Besitzer der Dokumente einem anderen Nutzer, welcher keinen Zugriff auf das entsprechende Dokument besitzt, digitale Kopien zur eigenen Verwendung zur Verfügung zu stellen. Der andere Nutzer erhält den Provisionierungstoken und kann unter Verwendung des Provisionierungstoken beispielsweise selbstständig die Kopien der Dokumente ausstellen lassen und diese herunterladen bzw. empfangen. Dabei werden die entsprechenden Kopien kryptographisch an ein Endgerät dieses anderen Nutzers und damit an den anderen Nutzer gebunden.

Beispielsweise handelt es sich bei den Kopien der Dokumente um Kopien von Fahrzeugdokumenten, wie etwa einer elektronischen Zulassungsbescheinigung Teil I und/oder einem Versicherungsschein. Beispielsweise können auch Kopien von Fahrzeugdokumenten für mehrere zusammengehörige Fahrzeuge, wie etwa ein Zugfahrzeug und einen Anhänger. Unter Anhängern werden hier Fahrzeuge verstanden, die beispielsweise über eine Ladefläche zur Beförderung von Gütern, jedoch über keinen eigenen Antrieb verfügen. Sie werden hinter einem Zugfahrzeugen, wie etwa einen Pkw, Lkw, Omnibussen, Traktoren oder Krafträdern mitgeführt. In diesem Fall kann ein Fahrzeughalter anderen Fahrern eines Fahrzeugs oder einer Kombination aus Fahrzeugen jeweils Kopien der Fahrzeugdokumente zur Verwendung bereitstellen. Dies kann insbesondere im Falle von anderen Familienmitgliedern, welche dasselbe Fahrzeug und/oder dieselben Fahrzeuge nutzen, Mitarbeitern, welche dasselbe Firmenfahrzeug und/oder dieselben Firmenfahrzeuge nutzen, Teilnehmer eines Car-Sharing-Services, welche sich dasselbe Fahrzeug und/oder dieselben Fahrzeuge teilen, oder Kunden einer Autovermietung, welche dasselbe Fahrzeug und/oder dieselben Fahrzeuge, mieten, von Vorteil sein.

Anhand des Indikators wird angezeigt, dass es sich um einen Provisionierungstoken für Kopien handelt. Beispielsweise unterscheidet sich der Provisionierungstoken für Kopie von einem Provisionierungstoken für die Originaldokument lediglich durch den entsprechenden Indikator.

Beispielsweise werden die ersten Datenelemente verwendet zum Bereitstellen einer Mehrzahl von Datenbankzugriffsschlüsseln zum Identifizieren einer Mehrzahl von in der ersten Datenbank gespeicherten ein oder mehreren ersten Datenbankeinträgen mit den ersten Zuordnungen der erzeugten ersten Salt-Werte zu dem jeweiligen ersten Datenelement der Mehrzahl von ersten Datenelementen.

Beispiele können den Vorteil haben, dass unter Verwendung der ersten Datenelemente, welche die Dokumente, für die Kopien auszustellen sind, identifizieren, auf die ein oder mehreren ersten Datenbankeinträge in der ersten Datenbank zugegriffen werden kann, welche Daten bereitstellen, die zum Prüfen der Gültigkeit des Provisionierungstokens dienen.

Beispielsweise werden die ersten Datenelemente von dem Anfragensteller empfangen und das Prüfen umfasst ein Prüfen, ob die zweiten Datenbankeinträge die ersten Datenelemente umfassen.

Beispiele können den Vorteil haben, dass somit sichergestellt werden kann, dass das von dem Anfragensteller empfangenen ersten Datenelemente korrekt sind bzw. ein oder mehrere Datenbankeinträge mit Datenelementen für die auszustellenden Kopien der Dokumente in den ein oder mehreren zweiten Datenbanken gespeichert sind.

Beispielsweise werden die ersten Datenelemente als Teile der zweiten Datenbankeinträge der ein oder mehreren zweiten Datenbanken empfangen und das Prüfen umfasst ein Prüfen, ob die ersten Datenelemente aus den zweiten Datenbankeinträge stammen.

Beispiele können den Vorteil haben, dass die ersten Datenelemente aus den zweiten Datenbankeinträgen der zweiten Datenbank ausgelesen werden. Damit kann sichergestellt werden, dass es sich bei den empfangenen ersten Datenelementen um korrekte Datenelemente handelt bzw. Datenbankeinträge mit Datenelementen für die auszustellenden Kopien der Dokumente in den ein oder mehreren zweiten Datenbanken gespeichert sind.

Beispielsweise werden Zugriffe auf die ein oder mehreren zweiten Datenbanken über ein oder mehrere zweite Server bereitgestellt. Das Abfragen der zweiten Datenbankeinträge umfasst ein Senden von ein oder mehreren Abfragen an die ein oder mehreren zweiten Server und ein Empfangen der zweiten Datenbankeinträge in Antwort auf die gesendeten ein oder mehreren Abfragen.

Beispiele können den Vorteil haben, dass die erste Datenbank und die ein oder mehreren zweiten Datenbanken beispielsweise jeweils unterschiedlichen Diensten und insbesondere unabhängig voneinander verwaltet werden können. Beispielsweise kann der die erste Datenbank verwaltende erste Server im Bedarfsfall über die ein oder mehreren zweiten Server auf die ein oder mehreren zweiten Datenbanken zugreifen.

Beispielsweise erfolgt das Abfragen der zweiten Datenbankeinträge jeweils unter Verwendung des der entsprechenden auszustellenden Kopie eines der Dokumente zugeordneten ersten Datenelement, welches die auszustellende Kopie bzw. das entsprechende Dokument identifiziert. Beispielsweise umfasst die Abfrage eines zweiten Datenbankeintrags das der auszustellenden Kopie des entsprechenden Dokuments zugeordnete erste Datenelement, welches die auszustellende Kopie bzw. das entsprechende Dokument identifiziert. Das entsprechende erste Datenelement dient beispielsweise zum Bereitstellen eines Datenbankzugriffsschlüssels, beispielsweise als Primärschlüssel, zum Zugreifen auf den entsprechenden zweiten Datenbankeintrag.

Beispielsweise erfolgt das Abfragen der zweiten Datenbankeinträge jeweils unter Verwendung von Identifikationsdaten aus einem oder mehreren der ausgestellten Dokumente. Beispielsweise umfasst die Abfrage eines zweiten Datenbankeintrags jeweils die entsprechenden Identifikationsdaten. Beispielsweise können auch Identifikationsdaten des identifizierten Anfragenstellers dazu dienen, einen dem Anfragensteller zugeordneten zweiten Datenbankeintrag in einer der ein oder mehreren zweiten Datenbanken zu identifizieren.

Beispielsweise umfasst das Erstellen des angefragten Provisionierungstokens ferner:
- Erzeugen eines dem identifizierten Anfragensteller zugeordneten Einmalkennworts für den Provisionierungstoken,
- Erzeugen eines zweiten Salt-Werts, welcher dem Einmalkennwort zugeordnet wird, wobei das Zuordnen ein Speichern einer zweiten Zuordnung des zweiten Salt-Werts zu dem Einmalkennwort unter Verwendung zumindest eines der ersten Datenelemente in der ersten Datenbank umfasst,
- Berechnen eines zweiten Hashwerts unter Verwendung einer dritten Kombination des Einmalkennworts und des zweiten Salt-Werts,
- Verwenden des zweiten Hashwerts zum Erstellen des Datensatzes, wobei der Datensatz den ersten Hashwert umfasst,
- Senden des Einmalkennworts an den identifizierten Anfragensteller.

Beispiele können den Vorteil haben, dass zusätzlich ein Einmalpasswort für den Anfragensteller bzw. den zukünftigen Nutzer des Provisionierungstokens bereitgestellt und kryptographisch an den Provisionierungstoken gebunden werden kann. Somit ist zusätzlich zu dem Besitz des Provisionierungstoken das entsprechende Einmalkennwort, etwa eine TAN, zum erfolgreichen Nachweis der Berechtigung zum Empfang der auszustellenden Kopien der digitalen Dokumente mit einem Endgerät und zur kryptographischen Kopplung an das Endgerät im Zuge der Ausstellung der Kopie notwendig.

Beispielsweise erfolgt das Senden des Einmalkennworts an den identifizierten Anfragensteller über einen Kanal, welcher unabhängig von demjenigen Kanal ist, über welchen das ausgestellte Provisionierungstoken an den identifizierten Anfragensteller gesendet wird. Beispielsweise wird das Einmalpasswort per Brief oder per SMS an den Anfragensteller gesendet.

Beispielsweise umfasst das Erstellen des angefragten Provisionierungstokens ferner:
- Empfangen einer Mehrzahl von zweiten Datenelementen, wobei jedes der zweiten Datenelemente der Mehrzahl von zweiten Datenelementen jeweils einem der ausgestellten Dokumente der Mehrzahl von ausgestellten Dokumenten, für die jeweils eine Kopie auszustellen ist, zugeordnet ist,
- Prüfen der zweiten Datenelemente unter Verwendung der zweiten Datenbankeinträge aus den ein oder mehreren zweiten Datenbanken,
- Erzeugen einer Mehrzahl von dritten Salt-Werten, welche jeweils einem der zweiten Datenelemente zugeordnet werden, wobei das Zuordnen jeweils ein Speichern einer dritten Zuordnung des entsprechenden dritten Salt-Werts zu dem entsprechenden zweiten Datenelement der Mehrzahl von zweiten Datenelementen unter Verwendung des ersten Datenelements des jeweiligen ausgestellten Dokuments, dem das entsprechende zweite Datenelement zugeordnet ist, in der ersten Datenbank umfasst,
- Berechnen einer Mehrzahl von dritten Hashwerten unter Verwendung einer Mehrzahl von vierten Kombinationen, wobei die vierten Kombinationen jeweils einen dritten Salt-Wert der Mehrzahl von dritten Salt-Werten und das dem entsprechenden dritte Salt-Wert zugeordnete zweite Datenelement der Mehrzahl von zweiten Datenelementen umfasst,
- Verwenden der Mehrzahl von dritten Hashwerten zum Erstellen des Datensatzes, wobei der Datensatz die Mehrzahl von dritten Hashwerten umfasst.

Beispiele können den Vorteil haben, dass neben den ersten Datenelementen jeweils ein oder mehrere weitere Datenelemente je Dokument bzw. Dokumentenkopie mit dem Provisionierungstoken zum Identifizieren der auszustellenden Kopien der Dokumente bereitgestellt werden können. Beispielsweise handelt es sich bei den Datenbankzugriffsschlüsseln jeweils um eine Kombination aus einem ersten und mindestens einem zweiten Datenelement.

Beispielsweise handelt es sich bei den zweiten Datenelementen der ausgestellten Dokumente um Datenelemente, welche die ausgestellten Dokumente, für die Kopien auszustellen sind, identifizieren.

Beispielsweise erfolgt das Abfragen der zweiten Datenbankeinträge jeweils unter Verwendung eines zweiten der entsprechenden auszustellenden Kopie des Dokuments zugeordneten Datenelements, welches die auszustellende Kopie bzw. das entsprechende ausgestellte Dokument beispielsweise identifiziert. Beispielsweise umfasse die Abfragen der zweiten Datenbankeinträge jeweils das der entsprechenden auszustellenden Kopie des Dokuments zugeordnete zweite Datenelement. Das entsprechende zweite Datenelement dient beispielsweise in Kombination mit dem ersten Datenelement der jeweiligen auszustellenden Kopie des entsprechenden Dokuments zum Bereitstellen eines Datenbankzugriffsschlüssels, beispielsweise als Primärschlüssel, zum Zugreifen auf den zweiten Datenbankeintrag des jeweiligen auszustellenden Dokuments.

Beispielsweise werden die zweiten Datenelemente verwendet zum Bereitstellen einer Mehrzahl von Datenbankzugriffsschlüsseln zum Identifizieren der in der ersten Datenbank gespeicherten ein oder mehreren ersten Datenbankeinträge. Beispielsweise dienen die zweiten Datenelemente jeweils in Kombination mit einem der ersten Datenelement zum Bereitstellen eines Datenbankzugriffsschlüssels, beispielsweise als Primärschlüssel, zum Zugreifen auf die ein oder mehreren ersten Datenbankeinträge in der ersten Datenbank.

Beispielsweise werden die zweiten Datenelemente von dem Anfragensteller empfangen und das Prüfen umfasst ein Prüfen, ob die zweiten Datenbankeinträge die zweiten Datenelemente umfassen.

Beispiele können den Vorteil haben, dass somit sichergestellt werden kann, dass die von dem Anfragensteller empfangenen zweiten Datenelemente korrekt sind bzw. ein Datenbankeintrag mit Datenelementen für die auszustellende Kopie des entsprechenden Dokuments in den ein oder mehreren zweiten Datenbänken gespeichert ist.

Beispielsweise werden die zweiten Datenelemente als Teile der zweiten Datenbankeinträge der ein oder mehreren zweiten Datenbanken empfangen und das Prüfen umfasst ein Prüfen, ob die zweiten Datenelemente aus den zweiten Datenbankeinträgen stammen.

Beispiele können den Vorteil haben, dass die zweiten Datenelemente aus den zweiten Datenbankeinträgen der zweiten Datenbank ausgelesen werden. Damit kann sichergestellt werden, dass es sich bei den empfangenen zweiten Datenelementen um korrekte Datenelemente handelt bzw. Datenbankeinträge mit Datenelementen für die auszustellenden Kopien der Dokumente in den ein oder mehreren zweiten Datenbanken gespeichert sind.

Beispielsweise umfasst das Erstellen des angefragten Provisionierungstokens ferner:
- Empfangen einer Angabe einer für die auszustellenden Kopien vorgesehene Gültigkeitsdauer,
- Verwenden der Angabe der Gültigkeitsdauer zum Erstellen des Datensatzes, wobei der Datensatz die Angabe der Gültigkeitsdauer umfasst.

Beispiele können den Vorteil haben, dass in dem Provisionierungstoken bereits eine Gültigkeitsdauer für die auszustellenden Kopien der Dokumente festgelegt werden kann. So kann der Besitzer des Dokuments effektiv die Gültigkeitsdauer der auszustellenden Kopien der Dokumente beschränken, selbst wenn der Provisionierungstoken zum Anfragen des Ausstellens der Kopien selbständig durch einen anderen Nutzer erfolgt. Dabei kann beispielsweise allen Kopien jeweils dieselbe Angabe der Gültigkeitsdauer zugeordnet werden. Beispielsweise können Kopien individueller Dokumente individuelle Angaben individueller Gültigkeitsdauern zugeordnet werden. In letzterem Fall wird eine Mehrzahl von Angaben zu Gültigkeitsdauer empfangen. Eine Zuordnung zu den einzelnen Kopien kann beispielsweise über eine Zuordnung zu den einzelnen ersten Datenelementen erfolgen.

Beispielsweise umfasst das Verwenden der Angabe der Gültigkeitsdauer zum Erstellen des Datensatzes ferner:
- Erzeugen eines vierten Salt-Werts, welcher der Angabe der Gültigkeitsdauer zugeordnet wird, wobei das Zuordnen ein Speichern einer vierten Zuordnung des vierten Salt-Werts zu der Angabe der Gültigkeitsdauer unter Verwendung zumindest eines der ersten Datenelement in der ersten Datenbank umfasst,
- Berechnen eines vierten Hashwerts unter Verwendung einer fünften Kombination der Angabe der Gültigkeitsdauer mit dem vierten Salt-Wert,
- Verwenden des vierten Hashwerts zum Erstellen des Datensatzes, wobei der Datensatz die Angabe der Gültigkeitsdauer in Form des vierten Hashwerts umfasst.

Beispiele können den Vorteil haben, dass die Gültigkeitsdauer in kryptographisch gesicherter Form als Hashwert in dem Provisionierungstoken codiert werden kann. Im Fall einer Mehrzahl von Gültigkeitsdauern für individuelle Kopien wird eine Mehrzahl von vierten Hashwerten berechnet und beispielsweise jeweils individuellen ersten Hashwerten zugeordnet.

Beispielsweise wird der Indikator, welcher anzeigt, dass es sich bei dem Provisionierungstoken um einen Provisionierungstoken für Kopien der ausgestellten Dokumente handelt, von dem Datensatz in Form eines fünften Hashwerts umfasst wird. Das Erstellen des angefragten Provisionierungstokens umfasst ferner:
- Erzeugen eines fünften Salt-Werts, welcher dem Indikator zugeordnet wird, wobei das Zuordnen ein Speichern einer fünften Zuordnung des fünften Salt-Werts zu dem Indikator unter Verwendung zumindest eines der ersten Datenelemente in der ersten Datenbank umfasst,
- Berechnen eines fünften Hashwerts unter Verwendung einer sechsten Kombination des Indikators mit dem fünften Salt-Wert,
- Verwenden des fünften Hashwerts zum Erstellen des Datensatzes.

Beispiele können den Vorteil haben, dass der Indikator in kryptographisch gesicherter Form als Hashwert in dem Provisionierungstoken codiert werden kann.

Beispielsweise erfolgt das Signieren des Datensatzes nur unter Voraussetzung eines erfolgreichen Identifizierens des Anfragenstellers, sodass durch die Signatur ein erfolgreiches Identifizieren bestätigt wird.

Beispiele können den Vorteil haben, dass durch das signierte Provisionierungstoken somit das erfolgreiche Identifizieren des Anfragenstellers anhand eines oder mehrerer der ausgestellten Dokumente nachgewiesen werden kann.

Beispielsweise umfasst das Verfahren ferner ein Revozieren des Provisionierungstokens. Das Revozieren umfasst:
o Empfangen einer Revozierungsanfrage zum Revozieren des Provisionierungstokens von einem an die ausgestellten Dokumente kryptographisch gebundenen Endgeräts,
o Löschen zumindest der dem zu revozierenden Provisionierungstoken zugeordneten Salt-Werte,
o Senden einer Revozierungsbestätigung an das Endgerät.

Beispiele können den Vorteil haben, dass eine Möglichkeit zum Revozieren eines ausgegebenen Provisionierungstoken bereitgestellt werden kann. Somit kann der Besitzer des Dokuments, selbst nach einer Übergabe des Provisionierungstokens an einen anderen Nutzer zum Ausstellen der Kopien der Dokumente, noch ein Ausstellen der entsprechenden Kopien unterbinden.

Beispielsweise werden im Zuge des Löschens alle Daten zum dem zu revozierenden Provisionierungstoken aus der ersten Datenbank gelöscht. In diesem Fall, umfasst die erste Datenbank keine Daten mehr zum Validieren des Provisionierungstokens, weshalb dieses nicht mehr verwendet werden kann.

Sind die Daten für individuelle Provisionierungstoken in der ersten Datenbank individuell identifizierbar, kann ein gezieltes Löschen von Daten für bestimmte Provisionierungstoken erfolgen.

Beispielsweise werden im Zuge des Löschens Daten zu allen Provisionierungstoken aus der ersten Datenbank gelöscht, welche eine Berechtigung zum Empfang einer oder mehrerer digitaler Kopie der vorliegenden digitalen Dokumente nachweisen. Sind die Daten für individuelle Provisionierungstoken in der ersten Datenbank individuell nicht identifizierbar, werden beispielsweise die Daten für alle Provisionierungstoken gelöscht.

Beispielsweise umfasst die Revozierungsanfrage zumindest eines der ausgestellten Dokumente der Mehrzahl von ausgestellten Dokumenten. Das empfangene zumindest eine ausgestellte Dokument ist unter Verwendung eines dem an das ausgestellte Dokument kryptographisch gebundenen Endgerät zugeordneten privaten kryptographischen Schlüssels signiert. Das Verfahren umfasst ferner ein Validieren des empfangenen zumindest einen ausgestellten Dokuments. Das Validieren umfasst ein Prüfen der Signatur des empfangenen zumindest einen aufgestellten Dokuments mit dem privaten kryptographischen Schlüssel des an das zumindest eine ausgestellte Dokument kryptographisch gebundenen Endgeräts unter Verwendung des von dem empfangenen zumindest einen ausgestellten Dokument umfassten öffentlichen kryptographischen Schlüssels des an das zumindest eine ausgestellte Dokument kryptographisch gebundenen Endgeräts.

Beispiele können den Vorteil haben, dass ein Revozieren nur unter Nachweis einer entsprechenden Berechtigung in Form des ausgestellten Dokuments bzw. der ausgestellten Dokumente ermöglicht wird.

Beispielsweise umfasst die Revozierungsanfrage alle ausgestellten Dokumente der Mehrzahl von ausgestellten Dokumenten, für welche eine Kopie ausgestellt werden sollte.

Beispielsweise sind die von der Revozierungsanfrage umfassten ein oder mehreren Dokumente unter Verwendung des privaten kryptographischen Schlüssels des an die ausgestellten Dokumente kryptographisch gebundenen Endgeräts signiert. Beispielsweise ist die Revozierungsanfrage, welche die ein oder mehreren Dokumente, umfasst mit dem privaten kryptographischen Schlüssel des an die ausgestellten Dokumente kryptographisch gebundenen Endgeräts signiert.

Beispielsweise umfasst die Mehrzahl von auszustellenden Kopien Kopien ein oder mehrerer Fahrzeugdokumente ein oder mehrerer Fahrzeuge, beispielsweise ein oder mehrere elektronische Zulassungsbescheinigungen Teil I, ein oder mehrere Versicherungsscheine, und/oder ein oder mehrere Schlüsseltoken und wobei es sich bei den ausgestellten Dokumenten um die entsprechenden Fahrzeugdokumente handelt. Beispielsweise umfasst die Mehrzahl von Kopien ferner eine Kopie eines digitalen Führerscheins, d.h. einer sogenannte mobile driving licence (mDL).

Beispiele können den Vorteil haben, dass ein Provisionierungstoken zum Nachweis einer Berechtigung zum Empfang einer entsprechenden Kombination von Kopie einer Mehrzahl von Dokumenten mit einem Endgerät und zur kryptographischen Kopplung an das Endgerät im Zuge der Ausstellung nachgewiesen werden kann.

Beispielsweise umfasst die Mehrzahl von ersten Datenelementen ein oder mehrere der folgenden Datenelemente: eine oder mehrere Fahrzeug-IDs, beispielsweise Fahrzeugkennzeichen oder Fahrgestellnummern, ein oder mehrere Versicherungsnummern, und/oder ein oder mehrere Schlüssel-IDs. Beispielsweise umfasst die Mehrzahl von ersten Datenelementen eine Führerscheinnummer.

Beispiele können den Vorteil haben, dass eine eindeutige Fahrzeug-ID, etwa in Form des Fahrzeugkennzeichens und/oder einer Fahrgestellnummer. Zusätzlich können eindeutige IDs für die weiteren auszustellenden Dokumente bereitgestellt werden.

Beispielsweise umfasst die Mehrzahl von zweiten Datenelementen ein oder mehrere der folgenden Datenelemente: eine oder mehrere Fahrzeug-IDs, beispielsweise Fahrzeugkennzeichen oder Fahrgestellnummern, ein oder mehrere Versicherungsnummern, und/oder ein oder mehrere Schlüssel-IDs. Beispielsweise umfasst die Mehrzahl von zweiten Datenelementen eine Führerscheinnummer.

Beispiele können den Vorteil haben, dass eine eindeutige Fahrzeug-ID, etwa in Form des Fahrzeugkennzeichens und/oder einer Fahrgestellnummer. Zusätzlich können eindeutige IDs für die weiteren auszustellenden Dokumente bereitgestellt werden.

Ausführungsformen umfassen ferner einen Server eines Ausstellerdienstes zum Erzeugen eines digitalen Provisionierungstokens. Der Server umfasst einen Prozessor, einen Speicher mit Programminstruktionen und eine Kommunikationsschnittstelle zur Kommunikation über ein Netzwerk. Der Provisionierungstoken weist eine Berechtigung zum Empfang einer ersten Kombination aus einer Mehrzahl von auszustellenden digitalen Kopien einer Mehrzahl von ausgestellten digitalen Dokumenten mit einem Endgerät und zur kryptographischen Kopplung der auszustellenden digitalen Kopien an das Endgerät im Zuge der Ausstellung nach.

Ein Ausführen der Programminstruktionen durch den Prozessor veranlasst den Prozessor dazu, den Server zu steuern zum:
∘ Empfangen einer Erstellungsanfrage zum Erstellen des Provisionierungstokens,
∘ Identifizieren des Anfragenstellers unter Verwendung eines der ausgestellten digitalen Dokumente der Mehrzahl von ausgestellten digitalen Dokumenten,
o Erzeugen des angefragten Provisionierungstokens in Form eines signierten Datensatzes, wobei das Erstellen umfasst:
   - Empfangen einer Mehrzahl von ersten Datenelementen, wobei jedes der ersten Datenelemente der Mehrzahl von ersten Datenelementen jeweils einem der ausgestellten Dokumente der Mehrzahl von ausgestellten digitalen Dokumenten zugeordnet ist und das entsprechende ausgestellte Dokument identifiziert, für das eine Kopie auszustellen ist,
   - Prüfen der ersten Datenelemente unter Verwendung einer Mehrzahl von zweiten Datenbankeinträgen aus ein oder mehreren zweiten Datenbanken, welche jeweils von einem der ausgestellten Dokumente der Mehrzahl von ausgestellten Dokumenten umfasste Daten umfassen,
   - Erzeugen einer Mehrzahl von ersten Salt-Werten, welche jeweils mindestens einem der ersten Datenelemente zugeordnet werden, wobei das Zuordnen jeweils ein Speichern einer ersten Zuordnung des entsprechenden ersten Salt-Werts zu dem entsprechenden ersten Datenelement der Mehrzahl von ersten Datenelementen in einer ersten Datenbank umfasst,
   - Berechnen einer Mehrzahl von ersten Hashwerten unter Verwendung einer Mehrzahl von zweiten Kombinationen, wobei die zweiten Kombinationen jeweils einen ersten Salt-Wert der Mehrzahl von ersten Salt-Werten und das dem entsprechenden ersten Salt-Wert zugeordnete erste Datenelement der Mehrzahl von ersten Datenelementen umfasst,
   - Erstellen eines Datensatzes, welcher die Mehrzahl von ersten Hashwerten sowie einen Indikator umfasst, wobei der Indikator anzeigt, dass es sich um einen Provisionierungstoken für Kopien der ausgestellten Dokumente der Mehrzahl von ausgestellten digitalen Dokumenten handelt,
   - Signieren des Datensatzes unter Verwendung eines dem Ausstellerdienst zugeordneten kryptographischen Signaturschlüssels,
   - Bereitstellen des angefragten Provisionierungstokens in Form des signierten Datensatzes,
o Senden des Provisionierungstokens an den identifizierten Anfragensteller.

Beispielsweise ist der Server dazu konfiguriert jede der zuvor beschrieben Ausführungsformen des Verfahrens zum Erzeugen des digitalen Provisionierungstokens auszuführen.

Ausführungsformen umfassen ferner ein System umfassend einen Server eines Ausstellerdienstes nach einer der vorangehend beschriebenen Ausführungsformen sowie ein oder mehrere weitere Server, welche jeweils einen Zugriff auf eine zweite Datenbank ein oder mehrerer zweiter Datenbanken bereitstellen. Die ein oder mehreren weiteren Server umfassen jeweils einen weiteren Prozessor, einen weiteren Speicher mit weiteren Programminstruktionen und eine weitere Kommunikationsschnittstelle zur Kommunikation über das Netzwerk.

Ein Ausführen der weiteren Programminstruktionen durch den weiteren Prozessor des jeweiligen weiteren Servers veranlasst den weiteren Prozessor dazu, den weiteren Server zu steuern zum Empfangen einer Abfrage ein oder mehrerer zweiter Datenbankeinträge der zweiten Datenbank, auf welche der entsprechende weitere Server einen Zugriff bereitstellt und Senden der abgefragten ein oder mehreren zweiten Datenbankeinträge der entsprechenden zweiten Datenbank in Antwort auf die empfangene Abfrage an den Server.

Die Abfragen der zweiten Datenbankeinträge der ein oder mehreren zweiten Datenbanken umfassen beispielsweise ein Senden ein oder mehrerer Abfragen von dem Server an die entsprechenden ein oder mehrerer weiteren Server und das Empfangen der von den ein oder mehreren weiteren Servern in Antwort auf die Abfragen gesendeten zweiten Datenbankeinträge durch den Server.

Beispielsweise ist das System dazu konfiguriert jede der zuvor beschrieben Ausführungsformen des Verfahrens zum Erzeugen des digitalen Provisionierungstokens auszuführen.

Ausführungsformen umfassen ferner einen digitalen Provisionierungstoken zum Nachweis einer Berechtigung zum Empfang einer ersten Kombination aus einer Mehrzahl von auszustellenden digitalen Kopien einer Mehrzahl von ausgestellten digitalen Dokumenten mit einem Endgerät und zur kryptographischen Kopplung der auszustellenden digitalen Kopien an das Endgerät im Zuge der Ausstellung. Der Provisionierungstoken umfasst einen Datensatz mit einer Mehrzahl von ersten Hashwerten und einem Indikator. Die ersten Hashwerte sind jeweils unter Verwendung einer zweiten Kombination einer Mehrzahl von zweiten Kombinationen erzeugt. Die zweiten Kombinationen sind jeweils ein erstes Datenelement einer Mehrzahl von ersten Datenelementen, welches einem der ausgestellten Dokumente zugeordnet ist, welches das entsprechende erste Datenelement identifiziert und für welches eine Kopie auszustellen ist, und eines dem entsprechenden ersten Datenelement zugeordneten ersten Salt-Werts einer Mehrzahl von ersten Salt-Werten erzeugt. Der Indikator zeigt an, dass es sich um einen Provisionierungstoken für Kopien von ausgestellten Dokumenten handelt, wobei der Datensatz unter Verwendung eines Signaturschlüssels eines den Provisionierungstoken erzeugenden Ausstellerdienstes signiert ist.

Beispielsweise handelt es sich bei dem digitalen Provisionierungstoken um ein Erzeugnis eines der zuvor beschriebenen Ausführungsformen des Verfahrens zum Erzeugen des digitalen Provisionierungstokens.

Beispielsweise umfasst der signierte Datensatz ferner einen zweiten Hashwert, welcher unter Verwendung einer dritten Kombination eines dem identifizierten Anfragensteller zugeordneten Einmalkennworts und eines dem Einmalkennwort zugeordneten zweiten Salt-Werts erzeugt ist.

Beispielsweise umfasst der signierte Datensatz ferner eine Mehrzahl von dritten Hashwerten, welche jeweils unter Verwendung einer vierten Kombination eines zweiten Datenelements einer Mehrzahl von zweiten Datenelementen, die jeweils einem der ausgestellten Dokumente, für welche die Kopien auszustellen sind, und eines zugehörigen dritten Salt-Werts einer Mehrzahl von dritten Salt-Werten erzeugt sind.

Beispielsweise umfasst der signierte Datensatz ferner eine Angabe einer für die auszustellenden Kopien vorgesehenen Gültigkeitsdauer.

Beispielsweise umfasst der Datensatz die Angabe der für die auszustellenden Kopien vorgesehenen Gültigkeitsdauer in Form eines vierten Hashwerts, welcher unter Verwendung einer fünften Kombination der Angabe der Gültigkeitsdauer und eines vierten Salt-Werts erzeugt ist.

Beispielsweise umfasst der Datensatz den Indikator in Form eines fünften Hashwerts, welcher unter Verwendung einer sechsten Kombination des Indikators und eines fünften Salt-Werts erzeugt ist.

Ausführungsformen umfassen ein Verfahren zum Ausstellen einer ersten Kombination aus einer Mehrzahl von digitalen Kopien einer Mehrzahl von ausgestellten digitalen Dokumenten unter Verwendung eines digitalen Provisionierungstokens.

Der Provisionierungstoken weist eine Berechtigung zum Empfang der Mehrzahl von auszustellenden digitalen Kopien der Mehrzahl von ausgestellten digitalen Dokumenten mit einem Endgerät und zur kryptographischen Kopplung der auszustellenden digitalen Kopien an das Endgerät im Zuge der Ausstellung nach. Der Provisionierungstoken umfasst einen ersten Datensatz mit einer Mehrzahl von ersten Hashwerten und einem Indikator. Die Mehrzahl von ersten Hashwerten sind unter Verwendung einer Mehrzahl von zweiten Kombinationen erzeugt. Die zweiten Kombinationen umfassen jeweils einen ersten Salt-Wert einer Mehrzahl von ersten Salt-Werten und ein dem entsprechenden ersten Salt-Wert zugeordnetes erstes Datenelement einer Mehrzahl von ersten Datenelementen. Die ersten Datenelemente der Mehrzahl von ersten Datenelementen sind jeweils einem der ausgestellten Dokumente der Mehrzahl von ausgestellten digitalen Dokumenten, für die jeweils eine Kopie auszustellen ist, zugeordnet und identifizieren jeweils das entsprechende ausgestellte Dokument. Der Indikator zeigt an, dass es sich um einen Provisionierungstoken für Kopien von ausgestellten Dokumenten handelt. Der erste Datensatz ist unter Verwendung eines ersten Signaturschlüssels eines den Provisionierungstoken erzeugenden Ausstellerdienstes signiert.

In einer ersten Datenbank sind ein oder mehrere erste Datenbankeinträge mit einer Mehrzahl von ersten Zuordnungen der ersten Salt-Werte zu jeweils einem der ersten Datenelement gespeichert sind.

In ein oder mehreren zweiten Datenbanken sind jeweils ein oder mehrere zweite Datenbankeinträge mit Datenelementen der ausgestellten Dokumente gespeichert.

Das Verfahren umfasst zum Ausstellen der Mehrzahl von auszustellenden Kopien der Mehrzahl von ausgestellten Dokumenten unter Verwendung ein oder mehrerer erster Server des Ausstellerdienstes:
o Empfangen einer Ausstellungsanfrage zum Ausstellen der Mehrzahl von auszustellenden Kopien der Mehrzahl von ausgestellten Dokumenten von einem Endgerät eines Anfragenstellers,
o Empfangen des Provisionierungstokens von dem Endgerät,
o Validieren des Provisionierungstokens, wobei das Validieren des Provisionierungstokens umfasst:
   - Validieren der Signatur des Provisionierungstokens unter Verwendung eines ersten Signaturprüfschlüssels des Ausstellerdienstes,
   - Auslesen der ein oder mehreren ersten Datenbankeinträge aus der ersten Datenbank unter Verwendung ein oder mehrerer erster Datenelemente der Mehrzahl von ersten Datenelementen,
   - Prüfen der in dem Provisionierungstoken eingetragenen Mehrzahl von Hashwerten, welche die Mehrzahl von ersten Hashwerten umfasst, unter Verwendung der ausgelesenen ein oder mehreren ersten Datenbankeinträge,
   - auf eine erfolgreiche Prüfung hin, Löschen zumindest der in den ausgelesenen ein oder mehreren ersten Datenbankeinträgen gespeicherten Salt-Werte, welche den auszustellenden Kopien der ausgestellten Dokumente zugeordnet sind, in der ersten Datenbank,
o Ausstellen der auszustellenden Kopien der ausgestellten Dokumente, wobei das Ausstellen umfasst:
   - Senden einer Schlüsselabfrage an das Endgerät,
   - Empfangen eines dem Endgerät zugeordneten öffentlichen kryptographischen Schlüssels,
   wobei das Ausstellen der Kopien ferner für jede der auszustellenden Kopien jeweils umfasst:
   - Auslesen des zweiten Datenbankeintrags des entsprechenden ausgestellten Dokuments aus der zweiten Datenbank der ein oder mehreren zweiten Datenbanken, welche den entsprechenden zweiten Datenbankeintrag umfasst,
   - Erstellen eines zweiten Datensatzes, welcher ein oder mehrere Datenelemente des ausgelesenen zweiten Datenbankeintrags, welche dem entsprechenden ausgestellten Dokument, für das die entsprechende Kopie auszustellen ist, zugeordnet sind, in Klartext umfasst, wobei der zweite Datensatz ferner einen Indikator in Klartext umfasst, welcher anzeigt, dass es sich um einen Datensatz einer Kopie des entsprechenden ausgestellten Dokuments handelt,
   - Hinzufügen des empfangenen öffentlichen kryptographischen Schlüssels des Endgeräts zu dem erstellten zweiten Datensatz zum kryptographischen Binden des erstellten zweiten Datensatzes an das Endgerät,
   - Signieren des erstellten zweiten Datensatzes unter Verwendung eines dem entsprechenden Ausstellerdienst zugeordneten zweiten kryptographischen Signaturschlüssels,
   - Bereitstellen der entsprechenden ausgestellten Kopie des entsprechenden Dokuments in Form des signierten zweiten Datensatzes,
   - Speichern einer Zuordnung des empfangenen öffentlichen kryptographischen Schlüssels des Endgeräts zu der entsprechenden ausgestellten Kopie des Dokuments in der ersten Datenbank,
o Senden der ersten Kombination aus der Mehrzahl von ausgestellten Kopien der Mehrzahl von ausgestellten Dokumenten an das Endgerät.

Beispiele können den Vorteil haben, dass eine Mehrzahl von digitalen Kopien einer Mehrzahl von Dokumenten ausgestellt werden kann, die jeweils kryptographisch an ein Endgerät, insbesondere ein mobiles Endgerät, wie beispielsweise ein Smartphone, gebunden bzw. gekoppelt sind. Eine Berechtigung zur Verwendung der entsprechenden Kopien der Dokumente kann mit einem dem öffentlichen kryptographischen Schlüssel zugeordneten privaten kryptographischen Schlüssel des Endgeräts nachgewiesen werden, welcher beispielsweise in einem geschützten Speicherbereich eines Speichers des Endgeräts, beispielsweise einem Sicherheitselement, gespeichert ist. Hierzu wird beispielsweise eine Signatur mit dem entsprechenden privaten kryptographischen Schlüssel erstellt, welche mit dem von den Kopien der Dokumente umfasst öffentlichen kryptographischen Schlüssel des Endgeräts validiert werden kann. Insbesondere kann die Kopie eines Dokuments an ein anderes Endgerät gekoppelt werden als das Dokument.

Zum Nachweis der Berechtigung zum Empfang der auszustellenden digitalen Kopien der Dokumente mit dem Endgerät und zur kryptographischen Kopplung der entsprechenden Kopien an das Endgerät im Zuge der Ausstellung ist der Provisionierungstoken notwendig. Wer sich im Besitz des entsprechenden Provisionierungstokens befindet kann das Ausstellen der Kopien der Dokumente initiieren.

Durch das Löschen zumindest der in den ein oder mehreren ersten Datenbankeinträgen gespeicherten Salt-Werte kann sichergestellt werden, dass der Provisionierungstoken nur einmal zum Ausstellen der Kopien der Dokumente, d.h. einer Kopie je Dokument, verwendet werden kann. Beispielsweise umfasst die erste Datenbank einen einzigen Datenbankeintrag je Provisionierungstoken. Beispielsweise umfasst die erste Datenbank für jede der auszustellenden Kopien, für welche ein Provisionierungstoken vorliegt, jeweils einen Datenbankeintrag.

Datenelemente der Dokumente bzw. der Kopien der Dokumente werden in dem Provisionierungstoken beispielsweise nicht in Klartext, sondern nur in gehashter und damit geschützter Form gespeichert. Somit kann sichergestellt werden, dass die entsprechenden Datenelemente nicht aus dem Provisionierungstoken abgeleitet werde können. Um das Hashen zusätzlich abzusichern, werden die Datenelemente, z.B. die ersten Datenelemente, jeweils mit einem Salt-Wert kombiniert und die resultierten Kombinationen zum Erzeugen der in dem Provisionierungstoken gespeicherten Hashwerte, beispielsweise der ersten Hashwerte, verwendet. Unter einem Salt-Wert wird in der Kryptographie eine zufällig gewählte Zeichenfolge, etwa eine Zufallswert, verstanden, die an einen gegebenen Klartext, beispielsweise ein Datenelement des Dokuments, vor dessen weiterer Verarbeitung, beispielsweise eine Eingabe in eine Hashfunktion, angehängt wird, um die Entropie der Eingabe zu erhöhen.

Die Salt-Werte werden in der ersten Datenbank gespeichert. Nach einer Verwendung des Provisionierungstokens zum Nachweis der Berechtigung zum Empfang der auszustellenden Kopien, werden die Salt-Werte beispielsweise gelöscht. Da die Salt-Werte zum Validieren der entsprechenden Hashwerte in dem Provisionierungstoken benötigt werden, können die entsprechenden Hashwerte nach dem Löschen der Salt-Werte beispielsweise nicht mehr validiert werden. Somit kann der Provisionierungstoken nach dem Löschen beispielsweise nicht mehr zum erfolgreichen Nachweis der Berechtigung zum Empfang der auszustellenden digitalen Kopien der Dokumente verwendet werden.

Der Provisionierungstoken stellt ein kryptographisch gesichertes Verbindungsglied zwischen einer Identifizierung eines Anfragenstellers bei Erstellen des Provisionierungstoken und einem Ausstellen der auszustellenden Kopien der Dokumente dar. Somit kann das Ausstellen über einen von dem Identifizieren unabhängigen Kanal erfolgen.

Zunächst wird der Provisionierungstoken validiert. Das Validieren des Provisionierungstoken umfasst ein Validieren der Signatur des Provisionierungstokens sowie ein Validieren der von dem Provisionierungstoken umfassten Hashwerte. Dabei wird durch den Indikator angezeigt, dass mit dem entsprechenden Provisionierungstoken lediglich Kopien der Dokumente ausgestellt werden können.

Auf ein erfolgreiches Validieren des Provisionierungstoken hin, werden die von dem Ausstellerdienst signierten Kopien der Dokumente ausgestellt, welches jeweils die Datenelemente der entsprechenden Dokumente in Klartext sowie den öffentlichen kryptographischen Schlüssel des Endgeräts zur kryptographischen Bindung bzw. Kopplung an das entsprechende Endgerät umfassen.

Ein entsprechendes Provisionierungstoken für digitale Kopien von Dokumenten ermöglicht es dem Besitzer der Dokumente beispielsweise einem anderen Nutzer, welcher keinen Zugriff auf das entsprechende Dokumente besitzt, eine digitale Kopie zur Verfügung zu stellen. Der andere Nutzer kann unter Verwendung des Provisionierungstoken selbstständig die Kopien der Dokumente ausstellen lassen und herunterladen bzw. empfangen.

Beispielsweise handelt es sich bei den Kopien der Dokumente um Kopien von Fahrzeugdokumenten, wie etwa einer elektronischen Zulassungsbescheinigung Teil I und/oder einem Versicherungsschein. Beispielsweise können auch Kopien von Fahrzeugdokumenten für mehrere zusammengehörige Fahrzeuge, wie etwa ein Zugfahrzeug und einen Anhänger. Unter Anhängern werden hier Fahrzeuge verstanden, die beispielsweise über eine Ladefläche zur Beförderung von Gütern, jedoch über keinen eigenen Antrieb verfügen. Sie werden hinter einem Zugfahrzeugen, wie etwa einen Pkw, Lkw, Omnibussen, Traktoren oder Krafträdern mitgeführt. In diesem Fall kann ein Fahrzeughalter anderen Fahrern eines Fahrzeugs oder einer Kombination aus Fahrzeugen jeweils Kopien der Fahrzeugdokumente zur Verwendung bereitstellen. Dies kann insbesondere im Falle von anderen Familienmitgliedern, welche dasselbe Fahrzeug und/oder dieselben Fahrzeuge nutzen, Mitarbeitern, welche dasselbe Firmenfahrzeug und/oder dieselben Firmenfahrzeuge nutzen, Teilnehmer eines Car-Sharing-Services, welche sich dasselbe Fahrzeug und/oder dieselben Fahrzeuge teilen, oder Kunden einer Autovermietung, welche dasselbe Fahrzeug und/oder dieselben Fahrzeuge, mieten, von Vorteil sein.

Anhand der Indikatoren der ausgestellten Kopien wird angezeigt, dass es sich jeweils um eine Kopie eines Dokuments handelt. Beispielsweise unterscheidet sich eine solche Kopie von dem Originaldokument lediglich durch den entsprechenden Indikator und die kryptographische Bindung an ein anderes Endgerät, d.h. einem anderen von der Kopie umfassten kryptographischen Schlüssel im Vergleich zu dem von dem Originaldokument umfassten kryptographischen Schlüssel.

Das Senden der ausgesellten Kopie kann auf verschiedene Weise erfolgen. Beispielsweise kann die Kopie automatisch gesendet werden. Beispielsweise kann ein QR-Code zum Herunterladen der Kopie bereitgestellt werden. Beispielsweise können Informationen zum Nachweisen einer Berechtigung zum Herunterladen der Kopie an den Anfragensteller gesendet werden. Beispielsweise umfassen die Informationen eine PIN und/oder TAN. Beispielsweise werden PIN und/oder TAN über einen unabhängigen Kanal, etwa mittels eines Briefes oder einer SMS versendet.

Beispielsweise handelt es sich bei der ersten Datenbank und den ein oder mehreren zweiten Datenbanken um voneinander unabhängige Datenbanken.

Die erste Datenbank stellt beispielsweise Daten bereit, welche zum Prüfen der Gültigkeit von Provisionierungstoken, Dokumenten und/oder Dokumentenkopien dienen. In den ein oder mehreren zweiten Datenbanken sind beispielsweise Datenelemente auszustellender Dokumente und/oder Dokumentenkopien gespeichert. Beispielsweise ist jede der zweiten Datenbanken jeweils einem bestimmten Dokumententyp zugeordnet und umfasst zweite Datensätze mit Datenelemente für Dokumente dieses bestimmten Dokumententyps.

Beispielsweise umfasst das Verfahren ferner ein Empfangen der ersten Datenelemente und ein Verwenden der empfangenen ersten Datenelemente zum Auslesen der ein oder mehreren ersten Datenbankeinträge aus der ersten Datenbank.

Beispiele können den Vorteil haben, dass unter Verwendung der ersten Datenelemente die ein oder mehreren ersten Datenbankeinträge mit den zum Validieren der Provisionierungstoken notwendigen Daten, beispielsweise den Salt-Werten, ausgelesen werden können.

Beispielsweise wird die Zuordnung des empfangenen öffentlichen kryptographischen Schlüssels des Endgeräts zu den ausgestellten Kopien der Dokumente in den ein oder mehreren ersten Datenbankeinträgen der ersten Datenbank gespeichert.

Beispiele können den Vorteil haben, dass somit die kryptographische Bindung bzw. Kopplung an das entsprechende Endgerät zentral bei dem Ausstellerdient hinterlegt bzw. festgelegt werden kann.

Beispielsweise umfasst das Validieren des Provisionierungstokens, auf eine erfolgreiche Prüfung hin, ein Löschen aller dem Provisionierungstoken zugeordneter Daten aus den ein oder mehreren ersten Datenbankeinträgen in der ersten Datenbank.

Beispiele können den Vorteil haben, dass sichergestellt werden kann, dass der Provisionierungstoken kein weiters Mal zum Ausstellen von Kopien der Dokumente verwendet werden kann.

Beispielsweise umfassen die zweiten Datensätze der jeweiligen auszustellenden Kopien jeweils alle Datenelemente des jeweiligen zweiten Datenbankeintrags, welche dem entsprechenden ausgestellten Dokument, für das die jeweilige Kopie auszustellen ist, zugeordnet sind, in Klartext.

Beispielsweise handelt es sich bei dem ersten kryptographischen Signaturschlüssel und dem zweiten kryptographischen Signaturschlüssel des Ausstellerdienstes um ein und denselben Signaturschlüssel. Beispielsweise handelt es sich dem ersten kryptographischen Signaturschlüssel und dem zweiten kryptographischen Signaturschlüssel des Ausstellerdienstes um zwei verschiedene kryptographischen Signaturschlüssel.

Beispielsweise wird der Provisionierungstoken zusammen mit der Ausstellungsanfrage empfangen. Beispielsweise wird auf den Empfang der Ausstellungsanfrage hin eine Abfrage des Provisionierungstokens an den Anfragensteller gesendet. In Antwort auf das Senden der Abfrage des Provisionierungstokens wird der Provisionierungstoken von dem Anfragensteller empfangen.

Beispielsweise werden die ersten Datenelemente der Mehrzahl von ersten Datenelementen jeweils verwendet zum Bereitstellen eines Datenbankzugriffsschlüssels zum Identifizieren des in der ersten Datenbank gespeicherten ersten Datenbankeintrags mit der ersten Zuordnung eines erzeugten ersten Salt-Werts der Mehrzahl von ersten Salt-Werten zu dem entsprechenden ersten Datenelement.

Beispiele können den Vorteil haben, dass unter Verwendung der ersten Datenelemente, welche jeweils eines der Dokumente, von welchem eine Kopie auszustellen ist, identifizieren, auf die ein oder mehreren ersten Datenbankeinträge in der ersten Datenbank zugegriffen werden kann, welcher Daten bereitstellt, die zum Prüfen der Gültigkeit des Provisionierungstokens dienen.

Beispielsweise umfasst das Verfahren ferner ein Empfangen einer Mehrzahl von zweiten Datenelementen. Jedes der zweiten Datenelemente der Mehrzahl von zweiten Datenelementen ist jeweils einem der ausgestellten Dokumente zugeordnet. Die zweiten Datenelemente werden zum Auslesen der ein oder mehreren ersten Datenbankeinträge aus der ersten Datenbank verwendet. Die zweiten Datenelemente werden jeweils zum Bereitstellen eines der ein oder mehreren Datenbankzugriffsschlüssel zum Identifizieren der in der ersten Datenbank gespeicherten ein oder mehreren ersten Datenbankeinträge verwendet.

Beispielsweise dienen die zweiten Datenelemente jeweils in Kombination mit den ersten Datenelementen zum Bereitstellen eines Datenbankzugriffsschlüssels, beispielsweise als Primärschlüssel, zum Zugreifen auf die ein oder mehreren ersten Datenbankeinträge in der ersten Datenbank.

Beispielsweise handelt es sich bei dem zweiten Datenelemente der auszustellenden Kopien der ausgestellten Dokumente jeweils um ein Datenelement, welches die entsprechende auszustellende Kopie bzw. das entsprechende Dokument identifiziert.

Beispielsweise werden Zugriffe auf die ein oder mehreren zweiten Datenbanken über ein oder mehrere zweite Server bereitgestellt. Das Abfragen der zweiten Datenbankeinträge umfasst ein Senden von ein oder mehreren Abfragen an die ein oder mehreren zweiten Server und ein Empfangen der zweiten Datenbankeinträge in Antwort auf die gesendeten ein oder mehreren Abfragen.

Beispiele können den Vorteil haben, dass die erste und die zweite Datenbank beispielsweise von zwei unterschiedlichen Diensten und insbesondere unabhängig voneinander verwaltet werden können. Beispielsweise kann der die erste Datenbank verwaltende erste Server im Bedarfsfall über den zweiten Server auf die zweite Datenbank zugreifen.

Beispielsweise erfolgt das Abfragen der zweiten Datenbankeinträge jeweils unter Verwendung des der entsprechenden auszustellenden Kopie bzw. dem entsprechenden Dokument zugeordneten ersten Datenelements, welches beispielsweise das ausgestellte Dokument identifiziert. Beispielsweise umfasst die Abfrage des zweiten Datenbankeintrags das der auszustellenden Kopie bzw. dem ausgestellten Dokument zugeordnete erste Datenelement, welches beispielsweise das ausgestellte Dokument identifiziert. Das erste Datenelement dient beispielsweise zum Bereitstellen eines Datenbankzugriffsschlüssels, beispielsweise als Primärschlüssel, zum Zugreifen auf den zweiten Datenbankeintrag.

Beispielsweise erfolgt das Abfragen der zweiten Datenbankeinträge jeweils unter Verwendung des der entsprechenden auszustellenden Kopie bzw. dem entsprechenden ausgestellten Dokument zugeordneten zweiten Datenelements, welches beispielsweise das ausgestellte Dokument identifiziert. Beispielsweise umfasst die Abfrage des zweiten Datenbankeintrags das dem ausgestellten Dokument zugeordnete zweite Datenelement. Beispielsweise können auch Identifikationsdaten des identifizierten Anfragenstellers dazu dienen, einen dem Anfragensteller zugeordneten zweiten Datenbankeintrag in der zweiten Datenbank zu identifizieren.

Beispielsweise umfasst der erste Datensatz des Provisionierungstokens ferner einen zweiten Hashwert, welcher unter Verwendung einer dritten Kombination eines Einmalkennworts und eines dem Einmalkennwort zugeordneten zweiten Salt-Werts erzeugt ist. In den ein oder mehreren ersten Datenbankeinträgen der ersten Datenbank ist eine zweite Zuordnung des zweiten Salt-Werts zu dem Einmalkennwort gespeichert.

Das Validieren des Provisionierungstokens umfasst ferner ein Empfangen des Einmalkennworts und Prüfen des zweiten Hashwerts unter Verwendung des empfangenen Einmalkennworts sowie der ausgelesenen ein oder mehreren ersten Datenbankeinträge.

Beispiele können den Vorteil haben, dass zusätzlich zu dem Besitz des Provisionierungstoken das entsprechende Einmalkennwort, etwa eine TAN, zum erfolgreichen Nachweis der Berechtigung zum Empfang einer auszustellenden digitalen Kopie des Dokuments mit einem Endgerät und zur kryptographischen Kopplung an das Endgerät im Zuge der Ausstellung notwendig.

Beispielsweise umfassen die zweiten Datensätze der ausgestellten Kopien der Dokumente ferner jeweils eine Angabe eines Zeitpunkts der Ausstellung der entsprechenden Kopie.

Beispiele können den Vorteil haben, dass dem Ausstellen der Kopien der Dokumente jeweils ein Zeitpunkt zugeordnet wird. Bei der Angabe des Zeitpunkts handelt es sich beispielsweise um ein Ausstelldatum. Beispielsweise umfasst die Angabe des Zeitpunkts zusätzlich zu dem Ausstelldatum eine Angabe von Stunde, Minute und/oder Sekunde. Anhand der Angabe eines Zeitpunkts der Ausstellung der Kopie kann beispielsweise geprüft werden, ob es sich bei der entsprechenden Kopie um eine aktuelle Version mit aktuellen Datenelementen handelt oder ob eine Aktualisierung notwendig ist.

Beispielsweise umfasst das Verfahren ferner ein Aktualisieren der ausgestellten Kopien der Dokumente. Das Aktualisieren umfasst:
∘ Empfangen einer Aktualisierungsanfrage zum Aktualisieren der ausgestellten Kopien der Dokumente von dem Endgerät, wobei die Aktualisierungsanfrage die ausgestellten Kopien umfasst,
o Auslesen der zweiten Datenbankeinträge aus den ein oder mehreren zweiten Datenbanken unter Verwendung der ersten Datenelemente der empfangenen Kopien der Dokumente, wobei die zweiten Datenbankeinträge jeweils eine Angabe eines Zeitpunkts einer letzten Aktualisierung des jeweiligen zweiten Datenbankeintrags umfassen,
o Vergleichen der Angaben der Zeitpunkte der Ausstellung der empfangenen Kopien der Dokumente mit der Angabe des Zeitpunkts der letzten Aktualisierung des dem entsprechenden Dokument zugeordneten zweiten Datenbankeintrags,
∘ Feststellen, dass für ein oder mehrere der ausgestellten Kopien der Dokumente die letzte Aktualisierung des entsprechenden zweiten Datenbankeintrags nach dem Ausstellen der Kopie des entsprechenden Dokuments erfolgt ist,
o Ausstellen einer aktualisierten Kopie für diejenigen Dokumente, für welche die letzte Aktualisierung des jeweiligen zweiten Datenbankeintrags nach dem Ausstellen der Kopie des entsprechenden Dokuments erfolgt ist, wobei das Ausstellen der jeweiligen aktualisierten Kopie des Dokuments umfasst:
   - Erstellen eines vierten Datensatzes, welcher ein oder mehrere der Datenelemente des ausgelesenen zweiten Datenbankeintrags, welche der auszustellenden Kopie des Dokuments zugeordnet sind, in Klartext umfasst, wobei der vierte Datensatz ferner einen Indikator in Klartext umfasst, welcher anzeigt, dass es sich um einen Datensatz einer Kopie des ausgestellten Dokuments handelt,
   - Hinzufügen des öffentlichen kryptographischen Schlüssels des Endgeräts aus der entsprechenden empfangenen Kopie des Dokuments zu dem vierten Datensatz zum kryptographischen Binden des vierten Datensatzes an das Endgerät,
   - Signieren des vierten Datensatzes mit dem zweiten kryptographischen Signaturschlüssel des Ausstellerdienstes,
   - Bereitstellen der jeweiligen aktualisierten Kopie des Dokuments in Form des signierten vierten Datensatzes,
o Senden der ein oder mehreren aktualisierten Kopie der entsprechenden Dokumente an das Endgerät.

Beispiele können den Vorteil haben, dass so basierend auf einem Vergleich der Angabe des Zeitpunkts der Ausstellung einer Kopie eines Dokuments mit der Angabe des Zeitpunkts der letzten Aktualisierung des zweiten Datenbankeintrags geprüft werden kann, ob die Kopie aktuell ist, d.h. die letzte Aktualisierung des zweiten Datenbankeintrags in der zweiten Datenbank berücksichtigt. Wird festgestellt, dass die letzte Aktualisierung des zweiten Datenbankeintrags nach dem Ausstellen der Kopie erfolgt ist, wird eine aktualisierte Kopie des Dokuments ausgestellt. Somit kann sichergestellt werden, dass stets aktuelle Versionen der Kopien der Mehrzahl von Dokumenten zur Verfügung stehen.

Beispielsweise sind die empfangenen ausgestellten Kopien der Dokumente unter Verwendung eines dem Endgerät zugeordneten privaten kryptographischen Schlüssels signiert. Das Verfahren umfasst ferner ein Validieren der empfangenen Kopien der Dokumente. Das Validieren umfasst ein Prüfen der Signaturen der empfangenen Kopien der Dokumente mit dem privaten kryptographischen Schlüssel des Endgeräts unter Verwendung des von den empfangenen Kopien der Dokumente umfassten öffentlichen kryptographischen Schlüssels des Endgeräts.

Beispiele können den Vorteil haben, dass die Kopien als Voraussetzung für eine Aktualisierung zunächst validiert werden. Somit kann sichergestellt werden, dass nur für eine authentische Kopie bzw. eine gültige Kopie eine Aktualisierung ausgeführt wird.

Beispielsweise sind die von der Aktualisierungsanfrage umfassten Kopie der Dokumente mit dem privaten kryptographischen Schlüssel des Endgeräts signiert. Beispielsweise ist die die Kopien umfassende Aktualisierungsanfrage mit dem privaten kryptographischen Schlüssel des Endgeräts signiert.

Nach Ausführungsformen, falls basierend auf dem Vergleichen der Angabe des Zeitpunkts der Ausstellung einer Kopie mit der Angabe des Zeitpunkts der letzten Aktualisierung des zweiten Datenbankeintrags festgestellt wird, dass die letzte Aktualisierung des zweiten Datenbankeintrags vor dem Ausstellen der entsprechenden Kopie erfolgt ist, wird eine Information an den Anfragensteller gesendet, welche angibt, dass es sich bei der ausgestellten Kopie des Dokuments um eine aktuelle Kopie mit aktuellen Datenelementen handelt.

Beispielsweise umfassen die zweiten Datensätze ferner jeweils eine Angabe einer für die entsprechende ausgestellte Kopie vorgesehene Gültigkeitsdauer im Klartext. Dabei können beispielsweise allen Kopien jeweils dieselbe Angabe der Gültigkeitsdauer umfassen. Beispielsweise können Kopien individueller Dokumente individuelle Angaben individueller Gültigkeitsdauern zugeordnet sein. In letzterem Fall wird von dem Provisionierungstoken beispielsweise eine Mehrzahl von Angaben zu Gültigkeitsdauer, z.B. in gehashter Form, umfasst. Eine Zuordnung zu den einzelnen Kopien kann beispielsweise über eine Zuordnung zu den einzelnen ersten Datenelementen bzw. deren erster Hashwerte erfolgen.

Beispiele können den Vorteil haben, dass für die Kopie des Dokuments eine Gültigkeitsdauer festgelegt werden kann. So kann der Besitzer des Dokuments effektiv die Gültigkeitsdauer der auszustellenden Kopie des Dokuments beschränken, selbst wenn der Provisionierungstoken zum Anfragen des Ausstellens der Kopie selbständig durch einen anderen Nutzer erfolgt.

Beispielsweise umfasst der Provisionierungstoken ferner einen dritten Hashwert, welcher unter Verwendung einer vierten Kombination der Angabe der Gültigkeitsdauer mit einem dritten Salt-Wert erzeugt ist. In ein oder mehreren ersten Datenbankeinträgen in der ersten Datenbank ist eine dritte Zuordnung des dritten Salt-Werts zu der Angabe der Gültigkeitsdauer gespeichert.

Beispiele können den Vorteil haben, dass die Gültigkeitsdauer in kryptographisch gesicherter Form als Hashwert in dem Provisionierungstoken codiert werden kann. Im Fall einer Mehrzahl von Gültigkeitsdauern für individuelle Kopien wird eine Mehrzahl von vierten Hashwerten berechnet und beispielsweise jeweils individuellen ersten Hashwerten zugeordnet.

Beispielsweise umfasst das Prüfen der in dem Provisionierungstoken eingetragenen Hashwerte ein Prüfen des dritten Hashwerts.

Beispiele können den Vorteil haben, dass ein Prüfen der Gültigkeitsdauer erfolgt.

Beispielsweise umfasst das Verfahren ferner ein Revozieren zumindest einer ausgestellten Kopie eines der Dokumente. Das Revozieren umfasst:
o Empfangen einer Revozierungsanfrage zum Revozieren der entsprechenden ausgestellten Kopie des Dokuments von einem an das ausgestellte Dokument kryptographisch gebundenen Endgerät,
o Löschen zumindest der Zuordnung des öffentlichen kryptographischen Schlüssels des an die entsprechende zu revozierende Kopie des Dokuments kryptographisch gebundenen Endgeräts aus der ersten Datenbank,
o Senden einer Revozierungsbestätigung an das Endgerät.

Beispiele können den Vorteil haben, dass eine Möglichkeit zum Revozieren einer oder mehrerer ausgestellter Kopien der Dokumente bereitgestellt werden kann. Somit kann der Besitzer des Dokuments, selbst nach einer Übergabe des Provisionierungstokens an einen anderen Nutzer und Ausstellen der Kopien der Dokumente, die ausgestellten Kopien revozieren.

Beispielsweise werden im Zuge des Löschens alle Daten zu den zu revozierenden ein oder mehreren Kopien der Dokumente aus der ersten Datenbank gelöscht. In diesem Fall, umfasst die erste Datenbank beispielsweise keine Daten mehr zum Validieren der Kopien der entsprechenden Dokumente, weshalb diese nicht mehr verwendet werden können.

Sind die Daten für individuelle Kopien in der ersten Datenbank individuell identifizierbar, kann selbst ein gezieltes Löschen von Daten für bestimmte Kopien desselben Dokuments erfolgen.

Beispielsweise werden im Zuge des Löschens Daten zu allen Kopien der vorliegenden digitalen Dokumente aus der ersten Datenbank gelöscht. Sind die Daten für individuelle Kopien der Dokumente in der ersten Datenbank individuell nicht identifizierbar, werden beispielsweise die Daten für alle Kopien gelöscht.

Beispielsweise umfasst die Revozierungsanfrage die entsprechenden ausgestellten Dokumente. Das entsprechenden empfangenen ausgestellten Dokumente sind mit einem dem an die ausgestellten Dokumente kryptographisch gebundenen Endgerät zugeordneten privaten kryptographischen Schlüssel signiert. Das Verfahren umfasst ferner ein Validieren der entsprechenden empfangenen Dokumente. Das Validieren umfasst ein Prüfen der Signaturen der entsprechenden empfangenen Dokumente mit dem privaten kryptographischen Schlüssel des an die ausgestellten Dokumente kryptographisch gebundenen Endgeräts unter Verwendung des von den entsprechenden empfangenen Dokumenten umfassten öffentlichen kryptographischen Schlüssels des an das entsprechende ausgestellte Dokument kryptographisch gebundenen Endgeräts.

Beispiele können den Vorteil haben, dass ein Revozieren nur unter Nachweis einer entsprechenden Berechtigung in Form der ausgestellten Dokumente ermöglicht wird.

Beispielsweise sind die von der Revozierungsanfrage umfassten Dokumente mit dem privaten kryptographischen Schlüssel des an das ausgestellte Dokument kryptographisch gebundenen Endgeräts signiert. Beispielsweise ist die die Dokumente umfassende Revozierungsanfrage mit dem privaten kryptographischen Schlüssel des an die ausgestellten Dokumente kryptographisch gebundenen Endgeräts signiert.

Beispielsweise umfasst die Mehrzahl von ausgestellten Kopien von Dokumenten ein oder mehrere Kopien von ein oder mehreren Fahrzeugdokumenten ein oder mehrerer Fahrzeuge, beispielsweise Kopien ein oder mehrere elektronischer Zulassungsbescheinigungen Teil I, ein oder mehrerer Versicherungsscheine, und/oder ein oder mehrerer Schlüsseltoken. Beispielsweise umfasst die Mehrzahl von Kopien ferner eine Kopie eines digitalen Führerscheins, d.h. einer sogenannte mobile driving licence (mDL).

Beispielsweise handelt es sich bei den Kopien der Dokumente um Kopien von Fahrzeugdokumenten, wie etwa einer elektronischen Zulassungsbescheinigung Teil I und/oder einem Versicherungsschein. Beispielsweise können auch Kopien von Fahrzeugdokumenten für mehrere zusammengehörige Fahrzeuge, wie etwa ein Zugfahrzeug und einen Anhänger. Unter Anhängern werden hier Fahrzeuge verstanden, die beispielsweise über eine Ladefläche zur Beförderung von Gütern, jedoch über keinen eigenen Antrieb verfügen. Sie werden hinter einem Zugfahrzeugen, wie etwa einen Pkw, Lkw, Omnibussen, Traktoren oder Krafträdern mitgeführt. In diesem Fall kann ein Fahrzeughalter anderen Fahrern eines Fahrzeugs oder einer Kombination aus Fahrzeugen jeweils Kopien der Fahrzeugdokumente zur Verwendung bereitstellen. Dies kann insbesondere im Falle von anderen Familienmitgliedern, welche dasselbe Fahrzeug und/oder dieselben Fahrzeuge nutzen, Mitarbeitern, welche dasselbe Firmenfahrzeug und/oder dieselben Firmenfahrzeuge nutzen, Teilnehmer eines Car-Sharing-Services, welche sich dasselbe Fahrzeug und/oder dieselben Fahrzeuge teilen, oder Kunden einer Autovermietung, welche dasselbe Fahrzeug und/oder dieselben Fahrzeuge, mieten, von Vorteil sein.

Beispielsweise umfasst die Mehrzahl von ersten Datenelementen ein oder mehrere der folgenden Datenelemente: eine oder mehrere Fahrzeug-IDs, beispielsweise Fahrzeugkennzeichen oder Fahrgestellnummern, ein oder mehrere Versicherungsnummern, und/oder ein oder mehrere Schlüssel-IDs. Beispielsweise umfasst die Mehrzahl von ersten Datenelementen eine Führerscheinnummer.

Beispiele können den Vorteil haben, dass eine eindeutige Fahrzeug-ID, etwa in Form des Fahrzeugkennzeichens und/oder einer Fahrgestellnummer bereitgestellt werden kann. Zusätzlich können eindeutige IDs für die weiteren auszustellenden Kopien bzw. die entsprechenden zu kopierenden Dokumente bereitgestellt werden.

Beispielsweise umfasst die Mehrzahl von zweiten Datenelementen ein oder mehrere der folgenden Datenelemente: eine oder mehrere Fahrzeug-IDs, beispielsweise Fahrzeugkennzeichen oder Fahrgestellnummern, ein oder mehrere Versicherungsnummern, und/oder ein oder mehrere Schlüssel-IDs. Beispielsweise umfasst die Mehrzahl von ersten Datenelementen eine Führerscheinnummer.

Beispiele können den Vorteil haben, dass eine eindeutige Fahrzeug-ID, etwa in Form des Fahrzeugkennzeichens und/oder einer Fahrgestellnummer bereitgestellt werden kann. Zusätzlich können eindeutige IDs für die weiteren auszustellenden Kopien bzw. die entsprechenden zu kopierenden Dokumente bereitgestellt werden.

Ausführungsformen umfassen ferner einen Server eines Ausstellerdienstes zum Ausstellen einer ersten Kombination aus einer Mehrzahl von digitalen Kopien einer Mehrzahl von ausgestellten digitalen Dokumenten unter Verwendung eines digitalen Provisionierungstokens. Der Server umfasst einen Prozessor, einen Speicher mit Programminstruktionen und eine Kommunikationsschnittstelle zur Kommunikation über ein Netzwerk.

Der Provisionierungstoken weist eine Berechtigung zum Empfang der Mehrzahl von auszustellenden digitalen Kopien der Mehrzahl von ausgestellten digitalen Dokumenten mit einem Endgerät und zur kryptographischen Kopplung der auszustellenden digitalen Kopien an das Endgerät im Zuge der Ausstellung nach. Der Provisionierungstoken umfasst einen ersten Datensatz mit einer Mehrzahl von ersten Hashwerten und einem Indikator. Die Mehrzahl von ersten Hashwerten ist unter Verwendung einer Mehrzahl von zweiten Kombinationen erzeugt. Die zweiten Kombinationen umfassen jeweils einen ersten Salt-Wert einer Mehrzahl von ersten Salt-Werten und ein dem entsprechenden ersten Salt-Wert zugeordnetes erstes Datenelement einer Mehrzahl von ersten Datenelementen. Die ersten Datenelemente sind der Mehrzahl von ersten Datenelementen jeweils einem der ausgestellten Dokumente der Mehrzahl von ausgestellten digitalen Dokumenten, für die jeweils eine Kopie auszustellen ist, zugeordnet und identifizieren jeweils das entsprechende ausgestellte Dokument. Der Indikator anzeigt, dass es sich um einen Provisionierungstoken für Kopien von ausgestellten Dokumenten handelt. Der erste Datensatz ist unter Verwendung eines ersten Signaturschlüssels eines den Provisionierungstoken erzeugenden Ausstellerdienstes signiert.

Der Server besitzt Zugriff auf eine erste Datenbank, in der ein oder mehrere erste Datenbankeinträge mit einer Mehrzahl von ersten Zuordnungen der ersten Salt-Werte zu jeweils einem der ersten Datenelementen gespeichert sind.

Der Server besitzt ferner Zugriff auf ein oder mehrere zweite Datenbanken, in denen jeweils ein oder mehrere zweite Datenbankeinträge mit Datenelementen der auszustellenden Dokumente gespeichert sind.

Ein Ausführen der Programminstruktionen durch den Prozessor veranlasst den Prozessor dazu, den Server zu steuern zum:
o Empfangen einer Ausstellungsanfrage zum Ausstellen der Mehrzahl von auszustellenden Kopien der Mehrzahl von ausgestellten Dokumenten von einem Endgerät eines Anfragenstellers,
o Empfangen des Provisionierungstokens von dem Endgerät,
o Validieren des Provisionierungstokens, wobei das Validieren des Provisionierungstokens umfasst:
   - Validieren der Signatur des Provisionierungstokens unter Verwendung eines ersten Signaturprüfschlüssels des Ausstellerdienstes,
   - Auslesen der ein oder mehreren ersten Datenbankeinträge aus der ersten Datenbank unter Verwendung ein oder mehrerer erster Datenelemente der Mehrzahl von ersten Datenelementen,
   - Prüfen der in dem Provisionierungstoken eingetragenen Mehrzahl von Hashwerten, welche die Mehrzahl von ersten Hashwerten umfasst, unter Verwendung der ausgelesenen ein oder mehreren ersten Datenbankeinträge,
   - auf eine erfolgreiche Prüfung hin, Löschen zumindest der in den ausgelesenen ein oder mehreren ersten Datenbankeinträgen gespeicherten Salt-Werte, welche den auszustellenden Kopien der ausgestellten Dokumente zugeordnet sind, in der ersten Datenbank,
o Ausstellen der auszustellenden Kopien der ausgestellten Dokumente, wobei das Ausstellen umfasst:
   - Senden einer Schlüsselabfrage an das Endgerät,
   - Empfangen eines dem Endgerät zugeordneten öffentlichen kryptographischen Schlüssels,
   wobei das Ausstellen der Kopien ferner für jede der auszustellenden Kopien jeweils umfasst:
   - Auslesen des zweiten Datenbankeintrags des entsprechenden ausgestellten Dokuments aus der zweiten Datenbank der ein oder mehreren zweiten Datenbanken, welche den entsprechenden zweiten Datenbankeintrag umfasst,
   - Erstellen eines zweiten Datensatzes, welcher ein oder mehrere Datenelemente des ausgelesenen zweiten Datenbankeintrags, welche dem entsprechenden ausgestellten Dokument, für das die entsprechende Kopie auszustellen ist, zugeordnet sind, in Klartext umfasst, wobei der zweite Datensatz ferner einen Indikator in Klartext umfasst, welcher anzeigt, dass es sich um einen Datensatz einer Kopie des entsprechenden ausgestellten Dokuments handelt,
   - Hinzufügen des empfangenen öffentlichen kryptographischen Schlüssels des Endgeräts zu dem erstellten zweiten Datensatz zum kryptographischen Binden des erstellten zweiten Datensatzes an das Endgerät,
   - Signieren des erstellten zweiten Datensatzes unter Verwendung eines dem entsprechenden Ausstellerdienst zugeordneten zweiten kryptographischen Signaturschlüssels,
   - Bereitstellen der entsprechenden ausgestellten Kopie des entsprechenden Dokuments in Form des signierten zweiten Datensatzes,
   - Speichern einer Zuordnung des empfangenen öffentlichen kryptographischen Schlüssels des Endgeräts zu der entsprechenden ausgestellten Kopie des Dokuments in der ersten Datenbank,
o Senden der ersten Kombination aus der Mehrzahl von ausgestellten Kopien der Mehrzahl von ausgestellten Dokumenten an das Endgerät.

Beispielsweise ist der Server dazu konfiguriert jede der zuvor beschrieben Ausführungsformen des Verfahrens zum Ausstellen der Kopie des digitalen Dokuments auszuführen.

Ausführungsformen umfassen ferner ein System umfassend einen Server eines Ausstellerdienstes nach einer der vorangehenden Ausführungsformen sowie ein oder mehrere weitere Server, welche jeweils einen Zugriff auf eine zweite Datenbank ein oder mehrerer zweiter Datenbanken bereitstellen. Die ein oder mehreren weiteren Server umfassen jeweils einen weiteren Prozessor, einen weiteren Speicher mit weiteren Programminstruktionen und eine weitere Kommunikationsschnittstelle zur Kommunikation über das Netzwerk.

Ein Ausführen der weiteren Programminstruktionen durch den weiteren Prozessor des jeweiligen weiteren Servers veranlasst den weiteren Prozessor dazu, den weiteren Server zu steuern zum Empfangen einer Abfrage ein oder mehrerer zweiter Datenbankeinträge der zweiten Datenbank, auf welche der entsprechende weitere Server einen Zugriff bereitstellt, und Senden der abgefragten ein oder mehreren zweiten Datenbankeinträge der entsprechenden zweiten Datenbank in Antwort auf die empfangene Abfrage an den Server.

Die Abfragen der zweiten Datenbankeinträge der ein oder mehreren zweiten Datenbanken umfassen beispielsweise ein Senden ein oder mehrerer Abfragen von dem Server an die entsprechenden ein oder mehrerer weiteren Server und das Empfangen der von den ein oder mehreren weiteren Servern in Antwort auf die Abfragen gesendeten zweiten Datenbankeinträge durch den Server.

Beispielsweise ist das System dazu konfiguriert jede der zuvor beschrieben Ausführungsformen des Verfahrens zum Ausstellen der digitalen Kopien der Dokumente auszuführen.

Beispielsweise umfasst das System ferner das Endgerät.

Beispielsweise umfassen die digitalen Kopien der ausgestellten Dokumente jeweils einen Datensatz mit Datenelementen und einen Indikator in Klartext. Der Indikator zeigt an, dass es sich um eine Kopie des ausgestellten Dokuments handelt. Der Datensatz ist mit einem Signaturschlüssel eines die Kopie des Dokuments ausstellenden Ausstellerdienstes signiert. Der Datensatz umfasst ferner einen öffentlichen kryptographischen Schlüssel eines Endgeräts zum kryptographischen Binden der Kopie des Dokuments an das Endgerät.

Beispielsweise handelt es sich bei den digitalen Kopien der Dokumente jeweils um ein Erzeugnis eines der zuvor beschriebenen Ausführungsformen des Verfahrens zum Ausstellen der Kopien der Dokumente.

Beispielsweise umfasst der signierte Datensatz ferner eine Angabe einer Gültigkeitsdauer der jeweiligen Kopie des jeweiligen Dokuments im Klartext.

Beispielsweise umfasst der signierte Datensatz ferner eine Angabe eines Zeitpunkts der Ausstellung der jeweiligen Kopie des jeweiligen Dokuments in Klartext.

Beispielsweise umfassen die Kopien der Mehrzahl von ausgestellten Dokumenten ein oder mehrere Fahrzeugdokumente ein oder mehrerer Fahrzeuge, beispielsweise ein oder mehrere elektronische Zulassungsbescheinigungen Teil I, ein oder mehrere Versicherungsscheine, und/oder ein oder mehrere Schlüsseltoken. Beispielsweise umfasst die Mehrzahl von auszustellenden Dokumenten ferner einen digitalen Führerschein, d.h. eine sogenannte mobile driving licence (mDL).

Es versteht sich, dass eine oder mehrere der vorgenannten Ausführungsformen miteinander kombiniert werden können, solange sich die Ausführungsformen nicht gegenseitig ausschließen.

### KURZE BESCHREIBUNG DER ZEICHNUNGEN

Im Folgenden werden Beispiele anhand der Zeichnungen näher erläutert. Es zeigen:
Figur 1 ein Flussdiagramm eines exemplarischen Verfahrens zum Erstellen eines Provisionierungstokens für ein digitales Dokument,
Figur 2 ein Flussdiagramm eines exemplarischen Verfahrens zum Ausstellen eines digitalen Dokuments,
Figur 3 ein Flussdiagramm eines exemplarischen Verfahrens zum Aktualisieren eines digitalen Dokuments,
Figur 4 ein Flussdiagramm eines exemplarischen Verfahrens zum Erstellen eines Provisionierungstokens für eine Kopie eines digitalen Dokuments,
Figur 5 ein Flussdiagramm eines exemplarischen Verfahrens zum Ausstellen einer Kopie eines digitalen Dokuments,
Figur 6 ein Flussdiagramm eines exemplarischen Verfahrens zum Aktualisieren einer Kopie eines digitalen Dokuments,
Figur 7 ein Flussdiagramm eines exemplarischen Verfahrens zum Revozieren einer Kopie eines digitalen Dokuments,
Figur 8 ein Flussdiagramm eines exemplarischen Verfahrens zum Erstellen eines Provisionierungstokens für ein digitales Dokument,
Figur 9 ein Flussdiagramm eines exemplarischen Verfahrens zum Erstellen eines Provisionierungstokens für ein digitales Dokument,
Figur 10 ein Flussdiagramm eines exemplarischen Verfahrens zum Erstellen eines Provisionierungstokens für eine Kopie eines digitalen Dokuments,
Figur 11 ein Flussdiagramm eines exemplarischen Verfahrens zum Erstellen eines Provisionierungstokens für ein digitales Dokument,
Figur 12 ein Flussdiagramm eines exemplarischen Verfahrens zum Ausstellen eines digitalen Dokuments,
Figur 13 ein Flussdiagramm eines exemplarischen Verfahrens zum Ausstellen einer Kopie eines digitalen Dokuments,
Figur 14 ein Flussdiagramm eines exemplarischen Verfahrens zum Aktualisieren eines digitalen Dokuments,
Figur 15 ein Flussdiagramm eines exemplarischen Verfahrens zum Aktualisieren einer Kopie eines digitalen Dokuments,
Figur 16 ein Flussdiagramm eines exemplarischen Verfahrens zum Revozieren eines Provisionierungstokens oder einer Kopie eines digitalen Dokuments,
Figur 17 ein exemplarisches System zum Erstellen eines Provisionierungstokens für ein digitales Dokument,
Figur 18 ein exemplarisches System zum Ausstellen eines digitalen Dokuments,
Figur 19 ein exemplarisches System zum Erstellen eines Provisionierungstokens für eine Kopie eines digitalen Dokuments,
Figur 20 ein exemplarisches System zum Ausstellen einer Kopie eines digitalen Dokuments,
Figur 21 ein exemplarisches Provisionierungstoken für ein digitales Dokument,
Figur 22 ein exemplarisches digitales Dokument,
Figur 23 ein exemplarisches Provisionierungstoken für eine Kopie eines digitalen Dokuments und
Figur 24 eine exemplarische Kopie eines digitalen Dokuments.

### DETAILLIERTE BESCHREIBUNG

Im Folgenden werden einander ähnliche Elemente mit den gleichen Bezugszeichen gekennzeichnet.

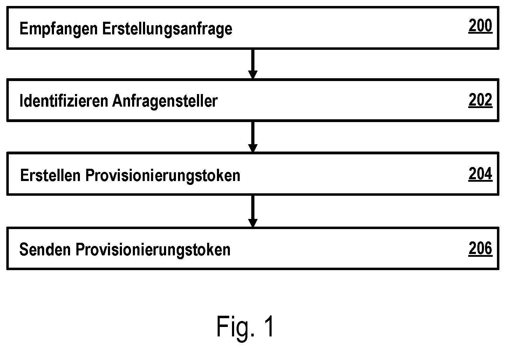

Figur 1 zeigt ein exemplarisches Verfahren zum Erzeugen eines digitalen Provisionierungstokens durch einen Ausstellerdienst. Der Provisionierungstoken weist eine Berechtigung zum Empfang einer ersten Kombination aus einer Mehrzahl von auszustellenden digitalen Dokumenten mit einem Endgerät und zur kryptographischen Kopplung der auszustellenden Dokumente an das Endgerät im Zuge der Ausstellung nach. Das Verfahren wird unter Verwendung ein oder mehrerer erster Server des Ausstellerdienstes ausgeführt.

In Block 200 wird eine Erstellungsanfrage zum Erstellen des Provisionierungstokens empfangen. In Block 202 wird der Anfragensteller unter Verwendung empfangener Identifikationsdaten des Anfragenstellers identifiziert. In Block 204 wird das angefragte Provisionierungstokens in Form eines signierten Datensatzes erstellt. Das Erstellen des signierten Datensatzes umfasst ein Empfangen einer Mehrzahl von ersten Datenelementen. Jedes der ersten Datenelemente der Mehrzahl von ersten Datenelementen ist jeweils einem der auszustellenden Dokumente der Mehrzahl von auszustellenden Dokumenten zugeordnet und identifiziert das entsprechende auszustellende Dokument. Die ersten Datenelemente werden unter Verwendung einer Mehrzahl von zweiten Datenbankeinträgen aus ein oder mehreren zweiten Datenbanken geprüft, welche jeweils von einem der auszustellenden Dokumente der Mehrzahl von auszustellenden Dokumenten zu umfassende Daten umfassen. Es wird auf eine erfolgreiche Prüfung hin eine Mehrzahl von ersten Salt-Werten erzeugt, welche jeweils einem der ersten Datenelemente zugeordnet werden. Das Zuordnen umfasst jeweils ein Speichern einer ersten Zuordnung des entsprechenden ersten Salt-Werts zu dem entsprechenden ersten Datenelement der Mehrzahl von ersten Datenelementen in einer ersten Datenbank. Es wird eine Mehrzahl von ersten Hashwerten unter Verwendung einer Mehrzahl von zweiten Kombinationen berechnet. Die zweiten Kombinationen umfassen jeweils einen ersten Salt-Wert der Mehrzahl von ersten Salt-Werten und das dem entsprechenden ersten Salt-Wert zugeordnete erste Datenelement der Mehrzahl von ersten Datenelementen. Es wird ein Datensatz erstellt, welcher die Mehrzahl von ersten Hashwerten umfasst. Der Datensatz wird unter Verwendung eines dem Ausstellerdienst zugeordneten kryptographischen Signaturschlüssels signiert. Der angefragte Provisionierungstokens in Form des signierten Datensatzes bereitgestellt. In Block 206 wird der Provisionierungstoken an den identifizierten Anfragensteller gesendet.

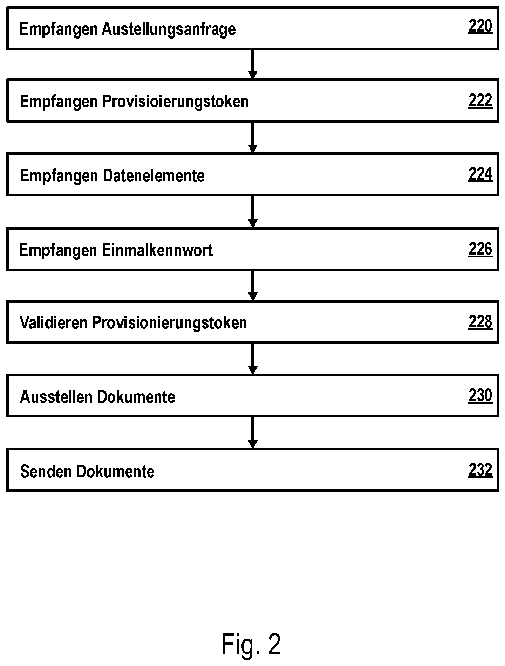

Figur 2 zeigt ein exemplarisches Verfahren zum Ausstellen einer ersten Kombination aus einer Mehrzahl von auszustellenden digitalen Dokumenten unter Verwendung eines digitalen Provisionierungstokens, wie er etwa unter Verwendung des Verfahrens nach Figur 1 erstellt werden kann. Der Provisionierungstoken weist eine Berechtigung zum Empfang der Mehrzahl von auszustellenden digitalen Dokumenten mit einem Endgerät und zur kryptographischen Kopplung der auszustellenden Dokumente an das Endgerät im Zuge der Ausstellung nach. Der Provisionierungstoken umfasst einen ersten Datensatz mit einer Mehrzahl von ersten Hashwerten, welche unter Verwendung einer Mehrzahl von zweiten Kombinationen erzeugt sind. Die zweiten Kombinationen umfassen jeweils einen ersten Salt-Wert einer Mehrzahl von ersten Salt-Werten und ein dem entsprechenden ersten Salt-Wert zugeordnetes erstes Datenelement einer Mehrzahl von ersten Datenelementen. Die ersten Datenelemente der Mehrzahl von ersten Datenelementen sind jeweils einem der auszustellenden Dokumente der Mehrzahl von auszustellenden Dokumenten zugeordnet und identifizieren das entsprechende auszustellende Dokument. Beispielsweise kann der Datensatz noch weitere Hashwerte von weiteren Datenelementen der auszustellenden Dokumente umfassen, welche unter Verwendung weiterer Salt-Werte erzeugt sind. Zudem kann der Datensatz beispielsweise einen Hashwert eines Einmalkennworts umfassen, welcher beispielsweise ebenfalls unter Verwendung eines Salt-Werts erzeugt ist. Der erste Datensatz ist unter Verwendung eines ersten Signaturschlüssels eines den Provisionierungstoken erzeugenden Ausstellerdienstes signiert.

In einer ersten Datenbank sind ein oder mehrere erste Datenbankeinträge mit einer Mehrzahl von ersten Zuordnungen der ersten Salt-Werte zu jeweils einem der ersten Datenelemente gespeichert. Zudem können in dem ersten Datenbankeintrag Zuordnungen weiterer Salt-Werte zu weiteren Datenelementen der auszustellenden Dokumente und/oder eine Zuordnung eines Salt-Werts zu einem Einmalkennwort gespeichert sein. In ein oder mehreren zweiten Datenbanken sind jeweils ein oder mehrere zweite Datenbankeinträge mit Datenelementen der auszustellenden Dokumente gespeichert. Das Verfahren wird unter Verwendung ein oder mehrerer erster Server des Ausstellerdienstes ausgeführt.

In Block 220 wird eine Ausstellungsanfrage zum Ausstellen der Mehrzahl von auszustellenden Dokumenten von dem Endgerät eines Anfragenstellers empfangen. In Block 222 wird der Provisionierungstoken von dem Endgerät empfangen. In Block 224 werden Datenelemente, deren Hashwerte in dem Provisionierungstoken gespeichert sind, empfangen. In Block 226 wird beispielsweise ferner ein Einmalkennwort empfangen. In Block 228 wird der Provisionierungstoken beispielsweise unter Verwendung der empfangenen Datenelemente und des Einmalkennworts validiert.

Das Validieren des Provisionierungstokens umfasst ein Validieren der Signatur des Provisionierungstokens unter Verwendung eines ersten Signaturprüfschlüssels des Ausstellerdienstes. Unter Verwendung ein oder mehrerer erster Datenelemente der Mehrzahl von ersten Datenelementen werden die ein oder mehreren ersten Datenbankeinträge aus der ersten Datenbank ausgelesen. Die in dem Provisionierungstoken eingetragenen Hashwerte, beispielsweise Hashwerte von Datenelementen und/oder des Einmalkennworts, werden unter Verwendung der ausgelesenen ein oder mehreren ersten Datenbankeinträge geprüft. Die geprüften Hashwerte umfassen beispielsweise die Mehrzahl von ersten Hashwerten. Hierzu werden die in dem ersten Datenbankeintrag gespeicherten Salt-Werte verwendet. Auf eine erfolgreiche Prüfung hin, werden zumindest die in den ausgelesenen ein oder mehreren ersten Datenbankeinträgen gespeicherten Salt-Werte gelöscht, welche den Dokumenten zugeordnet sind. Beispielsweise werden alle dem entsprechenden Provisionierungstoken zugeordneten Daten in dem ersten Datenbankeintrag gelöscht.

In Block 230 werden die auszustellenden Dokumente ausgestellt. Das Ausstellen der Dokumente umfasst beispielsweise ein Senden einer Schlüsselabfrage an das Endgerät und ein Empfangen eines dem Endgerät zugeordneten öffentlichen kryptographischen Schlüssels.

Ferner umfasst das Ausstellen der Dokumente ferner für jedes der auszustellenden Dokumente jeweils ein Auslesen des zweiten Datenbankeintrags des entsprechenden auszustellenden Dokuments aus der zweiten Datenbank der ein oder mehreren zweiten Datenbanken, welche den entsprechenden zweiten Datenbankeintrag umfasst. Ein zweiter Datensatz wird erstellt, welcher ein oder mehrere Datenelemente des ausgelesenen zweiten Datenbankeintrags, welche dem entsprechenden auszustellenden Dokument zugeordnet sind, in Klartext umfasst. Der empfangene öffentliche kryptographische Schlüssel des Endgeräts wird zu dem erstellten zweiten Datensatz hinzugefügt zum kryptographischen Binden des erstellten zweiten Datensatzes und damit des entsprechenden daraus resultierenden Dokuments an das Endgerät. Der erstellte zweite Datensatz unter Verwendung eines dem entsprechenden Ausstellerdienst zugeordneten zweiten kryptographischen Signaturschlüssels signiert. Das entsprechende ausgestellte Dokument wird in Form des signierten zweiten Datensatzes bereitgestellt. Zudem wird eine Zuordnung des empfangenen öffentlichen kryptographischen Schlüssels des Endgeräts zu dem entsprechenden ausgestellten Dokument in der ersten Datenbank gespeichert. In Block 232 wird schließlich die erste Kombination der in Block 230 ausgestellten Dokumenten an das Endgerät gesendet.

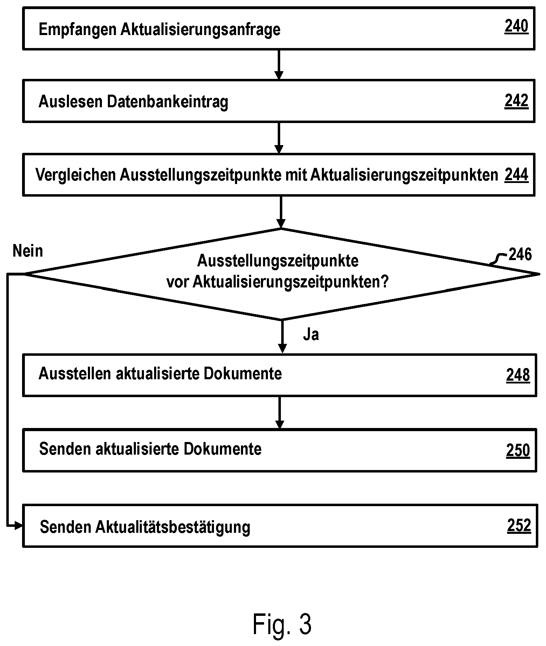

Figur 3 zeigt ein exemplarisches Verfahren zum Aktualisieren ein oder mehrere der ausgestellten Dokumente der ersten Kombination von ausgestellten Dokumenten. Die Dokumente der ersten Kombination von ausgestellten Dokumenten umfassen jeweils eine Angabe eines Zeitpunkts einer Ausstellung des entsprechenden Dokuments. Im Fall der ersten Kombination von ausgestellten Dokumenten, welche gemeinsam ausgestellt wurden, stimmen die Zeitpunkte der Ausstellung im Wesentlichen überein und sind beispielsweise identisch. Falls die Ausstellungszeitpunkte Unterschiede aufweisen, halten sich die entsprechenden Abweichungen beispielsweise in der Größenordnung von Sekunden und/oder Minuten, d.h. sind beispielsweise sind die Abweichungen kleiner eine Stunde, kleiner eine halbe Stunde, kleiner eine Viertelstunde, kleiner zehn Minuten, kleiner fünf Minuten, kleiner vier Minuten, kleiner zwei Minuten und/oder kleiner eine Minute.

In Block 240 umfasst das Aktualisieren ein Empfangen einer Aktualisierungsanfrage zum Aktualisieren der ausgestellten Dokumente der ersten Kombination von Dokumenten von einem Endgerät eines Anfragenstellers. Die Aktualisierungsanfrage umfasst beispielsweise die erste Kombination von Dokumenten. In Block 242 werden die zweiten Datenbankeinträge aus den ein oder mehreren zweiten Datenbanken unter Verwendung der ersten Datenelemente der empfangenen Dokumente ausgelesen. Die entsprechenden ersten Datenelemente werden beispielsweise zum Bereitstellen von Datenbankzugriffsschlüssel zum Zugreifen auf die entsprechenden zweiten Datenbankeinträge verwendet. Die zweiten Datenbankeinträge umfassen jeweils eine Angabe eines Zeitpunkts einer letzten Aktualisierung des jeweiligen zweiten Datenbankeintrags.

In Block 244 werden die Angaben der Zeitpunkte der Ausstellung der empfangenen Dokumente jeweils mit der Angabe des Zeitpunkts der letzten Aktualisierung des dem entsprechenden Dokument zugeordneten zweiten Datenbankeintrags verglichen. In Block 246 wird geprüft, ob für ein oder mehrere der ausgestellten Dokumente die letzte Aktualisierung des entsprechenden zweiten Datenbankeintrags nach dem Ausstellen des entsprechenden Dokuments erfolgt ist. Falls dies nicht der Fall, wird das Verfahren mit Block 252 fortgesetzt, in welchem eine Aktualitätsbestätigung, d.h. eine Information, an den Anfragensteller gesendet, welche angibt, dass es sich bei den ausgestellten Dokumenten der ersten Kombination jeweils um aktuelle Dokumente mit aktuellen Datenelementen handelt.

Falls für ein oder mehrere der ausgestellten Dokumente die letzte Aktualisierung des entsprechenden zweiten Datenbankeintrags nach dem Ausstellen des entsprechenden Dokuments erfolgt ist, wird das Verfahren mit Block 248 fortgesetzt. In Block 248 wird ein aktualisiertes Dokument für diejenigen ausgestellten Dokumente ausgestellt, für welche die letzte Aktualisierung des jeweiligen zweiten Datenbankeintrags nach dem Ausstellen des entsprechenden Dokuments erfolgt ist. Das Ausstellen des jeweiligen aktualisierten Dokuments umfasst ein Erstellen eines Datensatzes, welcher ein oder mehrere der Datenelemente des ausgelesenen zweiten Datenbankeintrags, welche dem auszustellenden Dokument zugeordnet sind, in Klartext umfasst. Es wird der öffentliche kryptographische Schlüssel des Endgeräts aus dem entsprechenden empfangenen Dokument zu dem vierten Datensatz zum kryptographischen Binden des vierten Datensatzes an das Endgerät hinzugefügt. Der resultierende Datensatz wird mit dem zweiten kryptographischen Signaturschlüssel des Ausstellerdienstes signiert. Die aktualisierten Dokumente werden in Form der signierten Datensätze bereitgestellt und in Block 250 an das Endgerät gesendet.

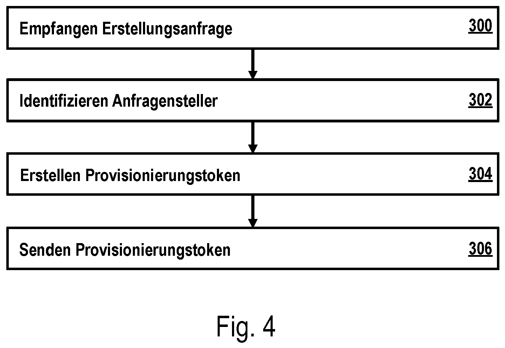

Figur 4 zeigt ein exemplarisches Verfahren zum Erzeugen eines digitalen Provisionierungstokens durch einen Ausstellerdienst. Der Provisionierungstoken weist eine Berechtigung zum Empfang einer ersten Kombination aus einer Mehrzahl von auszustellenden digitalen Kopien einer Mehrzahl von ausgestellten digitalen Dokumenten mit einem Endgerät und zur kryptographischen Kopplung der auszustellenden digitalen Kopien an das Endgerät im Zuge der Ausstellung nach. Das Verfahren wird durch ein oder mehrere Server des Ausstellerdienstes ausgeführt.

In Block 300 wird eine Erstellungsanfrage zum Erstellen des Provisionierungstokens empfangen. In Block 302 wird der Anfragensteller unter Verwendung eines der ausgestellten digitalen Dokumente der Mehrzahl von ausgestellten digitalen Dokumenten identifiziert. Beispielsweise sendet der Anfragensteller mit der Anfrage das entsprechende Dokument und signiert die Anfrage und/oder das gesendete Dokument. Die entsprechende Signatur kann unter Verwendung des von dem Dokument umfasst öffentlichen kryptographischen Schlüssels validiert werden. Durch die entsprechende Validierung wird beispielsweise auch der Anfragensteller identifiziert.

In Block 304 wird das angefragte Provisionierungstoken in Form eines signierten Datensatzes Erzeugt. Das Erzeugen umfasst ein Empfangen einer Mehrzahl von ersten Datenelementen. Jedes der ersten Datenelemente der Mehrzahl von ersten Datenelementen ist jeweils einem der ausgestellten Dokumente der Mehrzahl von ausgestellten digitalen Dokumenten zugeordnet und identifiziert das entsprechende ausgestellte Dokument, für das eine Kopie auszustellen ist. Die ersten Datenelemente werden unter Verwendung einer Mehrzahl von zweiten Datenbankeinträgen aus ein oder mehreren zweiten Datenbanken geprüft, welche jeweils von einem der ausgestellten Dokumente der Mehrzahl von ausgestellten Dokumenten umfasste Daten umfassen. Beispielsweise werden zusätzlich ein oder mehrere weitere Datenelemente der auszustellenden Dokumente geprüft, beispielsweise ein oder mehrere weitere Datenelemente je auszustellendem Dokument. Es wird eine Mehrzahl von ersten Salt-Werten erzeugt, welche jeweils mindestens einem der ersten Datenelemente zugeordnet werden. Das Zuordnen umfasst jeweils ein Speichern einer ersten Zuordnung des entsprechenden ersten Salt-Werts zu dem entsprechenden ersten Datenelement der Mehrzahl von ersten Datenelementen in einer ersten Datenbank. Beispielsweise werden für die weiteren Datenelemente ebenfalls Salt-Werte erzeugt und Zuordnung in der ersten Datenbank gespeichert. Es wird eine Mehrzahl von ersten Hashwerten berechnet unter Verwendung einer Mehrzahl von zweiten Kombinationen. Die zweiten Kombinationen jeweils einen ersten Salt-Wert der Mehrzahl von ersten Salt-Werten und das dem entsprechenden ersten Salt-Wert zugeordnete erste Datenelement der Mehrzahl von ersten Datenelementen umfassen. Beispielsweise werden für die weiteren Datenelemente ebenfalls Hashwerte berechnet. Es wird ein Datensatz erstellt, welcher die Mehrzahl von ersten Hashwerten sowie einen Indikator umfasst. Der Indikator zeigt an, dass es sich um einen Provisionierungstoken für Kopien der ausgestellten Dokumente der Mehrzahl von ausgestellten digitalen Dokumenten handelt. Beispielsweise umfasst der Datensatz zusätzlich die Hashwerte der weiteren Datenelemente. Der Datensatz wird unter Verwendung eines dem Ausstellerdienst zugeordneten kryptographischen Signaturschlüssels signiert. Das angefragte Provisionierungstoken wird in Form des signierten Datensatzes bereitgestellt. In Block 306 wird der Provisionierungstoken schließlich an den identifizierten Anfragensteller gesendet.

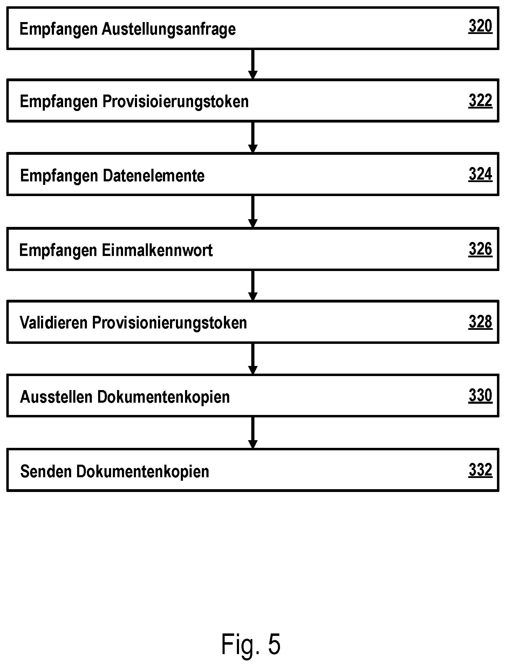

Figur 5 zeigt ein exemplarisches Verfahren zum Ausstellen einer ersten Kombination aus einer Mehrzahl von digitalen Kopien einer Mehrzahl von ausgestellten digitalen Dokumenten unter Verwendung eines digitalen Provisionierungstokens, wie er etwa unter Verwendung des Verfahrens nach Figur 4 erstellt werden kann. Der Provisionierungstoken weist eine Berechtigung zum Empfang der Mehrzahl von auszustellenden digitalen Kopien der Mehrzahl von ausgestellten digitalen Dokumenten mit einem Endgerät und zur kryptographischen Kopplung der auszustellenden digitalen Kopien an das Endgerät im Zuge der Ausstellung nach. Der Provisionierungstoken umfasst einen ersten Datensatz mit einer Mehrzahl von ersten Hashwerten und einem Indikator. Die Mehrzahl von ersten Hashwerten sind unter Verwendung einer Mehrzahl von zweiten Kombinationen erzeugt. Die zweiten Kombinationen umfassen jeweils einen ersten Salt-Wert einer Mehrzahl von ersten Salt-Werten und ein dem entsprechenden ersten Salt-Wert zugeordnetes erstes Datenelement einer Mehrzahl von ersten Datenelementen. Die ersten Datenelemente der Mehrzahl von ersten Datenelementen sind jeweils einem der ausgestellten Dokumente der Mehrzahl von ausgestellten digitalen Dokumenten, für die jeweils eine Kopie auszustellen ist, zugeordnet und identifizieren jeweils das entsprechende ausgestellte Dokument. Der Indikator zeigt an, dass es sich um einen Provisionierungstoken für Kopien von ausgestellten Dokumenten handelt. Der erste Datensatz ist unter Verwendung eines ersten Signaturschlüssels eines den Provisionierungstoken erzeugenden Ausstellerdienstes signiert.

In einer ersten Datenbank sind ein oder mehrere erste Datenbankeinträge mit einer Mehrzahl von ersten Zuordnungen der ersten Salt-Werte zu jeweils einem der ersten Datenelement gespeichert sind. Zudem können in den ein oder mehreren ersten Datenbankeinträge Zuordnungen weiterer Salt-Werte zu weiteren Datenelementen und/oder eine Zuordnung eines Salt-Werts zu einem Einmalkennwort gespeichert sein. In ein oder mehreren zweiten Datenbanken sind jeweils ein oder mehrere zweite Datenbankeinträge mit Datenelementen der ausgestellten Dokumente gespeichert. Das Verfahren wird unter Verwendung ein oder mehrere Server des Ausstellerdienstes ausgeführt.

In Block 320 wird eine Ausstellungsanfrage zum Ausstellen der Mehrzahl von auszustellenden Kopien der Mehrzahl von ausgestellten Dokumenten von einem Endgerät eines Anfragenstellers empfangen. In Block 222 wird der Provisionierungstoken von dem Endgerät empfangen. In Block 324 werden Datenelemente, deren Hashwerte in dem Provisionierungstoken gespeichert sind, empfangen. In Block 326 wird beispielsweise ferner ein Einmalkennwort empfangen. In Block 328 wird der Provisionierungstoken beispielsweise unter Verwendung der empfangenen Datenelemente und des Einmalkennworts validiert.

Das Validieren des Provisionierungstokens umfasst ein Validieren der Signatur des Provisionierungstokens unter Verwendung eines ersten Signaturprüfschlüssels des Ausstellerdienstes. Unter Verwendung ein oder mehrerer empfangener erster Datenelemente der Mehrzahl von ersten Datenelementen werden ein oder mehreren ersten Datenbankeinträge aus der ersten Datenbank ausgelesen. Die in dem Provisionierungstoken eingetragenen Hashwerte, beispielsweise Hashwerte von Datenelementen und/oder des Einmalkennworts, werden unter Verwendung der ausgelesenen ein oder mehreren ersten Datenbankeinträge geprüft. Diese Hashwerte umfassen die Mehrzahl von ersten Hashwerten. Zum Prüfen werden die in den ein oder mehreren ersten Datenbankeinträgen gespeicherten Salt-Werte verwendet. Auf eine erfolgreiche Prüfung hin, werden zumindest die in den ausgelesenen ein oder mehreren ersten Datenbankeinträgen gespeicherten Salt-Werte, welche den auszustellenden Kopien der ausgestellten Dokumente zugeordnet sind, in der ersten Datenbank gelöscht. Beispielsweise werden alle dem entsprechenden Provisionierungstoken zugeordneten Daten in dem ersten Datenbankeintrag gelöscht.

In Block 330 werden die auszustellenden Kopien der ausgestellten Dokumente ausgestellt. Das Ausstellen der Kopien der Dokumente umfasst ein Senden einer Schlüsselabfrage an das Endgerät und ein Empfangen eines dem Endgerät zugeordneten öffentlichen kryptographischen Schlüssels. Ferner umfasst das Ausstellen der Kopien ferner für jede der auszustellenden Kopien jeweils ein Auslesen des zweiten Datenbankeintrags des entsprechenden ausgestellten Dokuments aus der zweiten Datenbank der ein oder mehreren zweiten Datenbanken, welche den entsprechenden zweiten Datenbankeintrag umfasst. Ein zweiter Datensatz wird erstellt, welcher ein oder mehrere Datenelemente des ausgelesenen zweiten Datenbankeintrags, welche dem entsprechenden ausgestellten Dokument, für das die entsprechende Kopie auszustellen ist, zugeordnet sind, in Klartext umfasst. Der zweite Datensatz umfasst ferner einen Indikator in Klartext, welcher anzeigt, dass es sich um einen Datensatz einer Kopie des entsprechenden ausgestellten Dokuments handelt. Der empfangene öffentliche kryptographische Schlüssel des Endgeräts wird zu dem erstellten zweiten Datensatz hinzugefügt zum kryptographischen Binden des erstellten zweiten Datensatzes an das Endgerät. Der zweite Datensatz und damit die daraus resultierende Dokumentenkopie wird mit einem dem Ausstellerdienst zugeordneten zweiten kryptographischen Signaturschlüssel signiert. Die entsprechende ausgestellte Kopie des Dokuments wird in Form des signierten zweiten Datensatzes bereitgestellt. Zudem wird eine Zuordnung des empfangenen öffentlichen kryptographischen Schlüssels des Endgeräts zu der entsprechenden ausgestellten Kopie des Dokuments in der ersten Datenbank, beispielsweise in einem der ein oder mehreren ersten Datenbankeinträgen, gespeichert. In Block 332 wird schließlich die erste Kombination der in Block 330 ausgestellten Kopien der Mehrzahl von ausgestellten Dokumenten an das Endgerät gesendet.

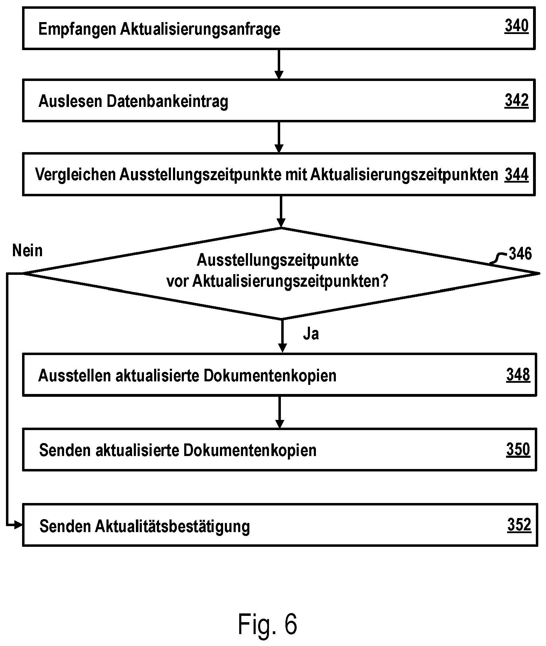

Figur 6 zeigt ein exemplarisches Verfahren zum Aktualisieren der ausgestellten Kopien der Dokumente. Das Verfahren wird unter Verwendung ein oder mehrere Server des Ausstellerdienstes ausgeführt. Die Dokumentenkopien umfassen jeweils eine Angabe eines Zeitpunkts einer Ausstellung der entsprechenden Dokumentenkopie. Im Fall der ersten Kombination von Dokumentenkopie von ausgestellten Dokumenten, welche gemeinsam ausgestellt wurden, stimmen die Zeitpunkte der Ausstellung im Wesentlichen überein und sind beispielsweise identisch. Falls die Ausstellungszeitpunkte Unterschiede aufweisen, halten sich die entsprechenden Abweichungen beispielsweise in der Größenordnung von Sekunden und/oder Minuten, d.h. sind beispielsweise sind die Abweichungen kleiner eine Stunde, kleiner eine halbe Stunde, kleiner eine Viertelstunde, kleiner zehn Minuten, kleiner fünf Minuten, kleiner vier Minuten, kleiner zwei Minuten und/oder kleiner eine Minute.

In Block 340 umfasst das Aktualisieren ein Empfangen einer Aktualisierungsanfrage zum Aktualisieren der ausgestellten Kopien der Dokumente von dem Endgerät. Die Aktualisierungsanfrage umfasst beispielsweise die ausgestellten Kopien. In Block 342 werden die zweiten Datenbankeinträge aus den ein oder mehreren zweiten Datenbanken unter Verwendung der ersten Datenelemente der empfangenen Kopien der Dokumente ausgelesen. Die entsprechenden ersten Datenelemente werden beispielsweise zum Bereitstellen von Datenbankzugriffsschlüssel zum Zugreifen auf die zweiten Datenbankeinträge verwendet. Die zweiten Datenbankeinträge umfassen jeweils eine Angabe eines Zeitpunkts einer letzten Aktualisierung des jeweiligen zweiten Datenbankeintrags. In Block 344 werden die Angaben der Zeitpunkte der Ausstellung der empfangenen Kopien der Dokumente mit der Angabe des Zeitpunkts der letzten Aktualisierung des dem entsprechenden Dokument zugeordneten zweiten Datenbankeintrags verglichen. In Block 346 wird geprüft, ob für ein oder mehrere der ausgestellten Kopien der Dokumente die letzte Aktualisierung des entsprechenden zweiten Datenbankeintrags nach dem Ausstellen der Kopie des entsprechenden Dokuments erfolgt ist. Falls dies nicht der Fall, wird das Verfahren mit Block 352 fortgesetzt, in welchem eine Aktualitätsbestätigung, d.h. eine Information, an den Anfragensteller gesendet, welche angibt, dass es sich bei den ausgestellten Dokumentenkopien um jeweils eine aktuelle Dokumentenkopie mit aktuellen Datenelementen handelt.

Falls für ein oder mehrere der ausgestellten Kopien der Dokumente die letzte Aktualisierung des entsprechenden zweiten Datenbankeintrags nach dem Ausstellen der Kopie des entsprechenden Dokuments erfolgt ist, wird das Verfahren mit Block 348 fortgesetzt. In Block 348 werden aktualisierte Dokumentenkopien für die entsprechenden ein oder mehrere der ausgestellten Kopien ausgestellt. Das Ausstellen der aktualisierten Dokumentenkopien umfasst für jede der aktualisierten Kopien jeweils ein Erstellen eines vierten Datensatzes, welcher ein oder mehrere der Datenelemente des ausgelesenen zweiten Datenbankeintrags, welche der auszustellenden Kopie des Dokuments zugeordnet sind, in Klartext umfasst. Der vierte Datensatz umfasst ferner einen Indikator in Klartext, welcher anzeigt, dass es sich um einen Datensatz einer Kopie des ausgestellten Dokuments handelt. Es wird der öffentliche kryptographische Schlüssel des Endgeräts aus der entsprechenden empfangenen Kopie des Dokuments zu dem vierten Datensatz zum kryptographischen Binden des vierten Datensatzes an das Endgerät hinzugefügt. Der resultierende vierte Datensatz wird mit dem zweiten kryptographischen Signaturschlüssel des Ausstellerdienstes signiert. Die jeweilige aktualisierte Kopie des Dokuments in Form des signierten vierten Datensatzes bereitgestellt und werden die so ausgestellten ein oder mehreren Aktualisierungen von Kopien der Dokumente in Block 350 an das Endgerät gesendet.

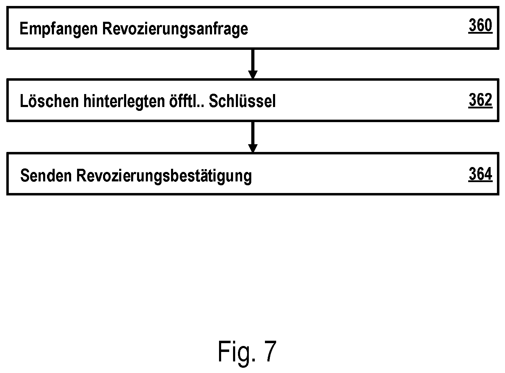

Figur 7 zeigt ein exemplarisches Verfahren zum Revozieren zumindest einer der in Figur 5 ausgestellten Kopie eines der Dokumente. Das Verfahren wird unter Verwendung ein oder mehrere Server des Ausstellerdienstes ausgeführt.

In Block 360 wird eine Revozierungsanfrage zum Revozieren der entsprechenden ausgestellten Kopie des Dokuments von einem an das ausgestellte Dokument kryptographisch gebundenen Endgerät empfangen. Beispielsweise umfasst die Revozierungsanfrage die ausgestellten ein oder mehreren Dokumente, deren Kopien zu revozieren sind. Die empfangenen ausgestellten Dokumente sind mit einem dem an die entsprechenden ausgestellten Dokumente kryptographisch gebundenen Endgerät zugeordneten privaten kryptographischen Schlüssel signiert. Das Verfahren umfasst ferner ein Validieren der entsprechenden ein oder mehreren empfangenen Dokumente. Das Validieren umfasst ein Prüfen der Signaturen der empfangenen Dokumente mit dem privaten kryptographischen Schlüssel des an die entsprechenden ausgestellten Dokumente kryptographisch gebundenen Endgeräts unter Verwendung des von den empfangenen Dokumenten jeweils umfassten öffentlichen kryptographischen Schlüssel des an die entsprechenden ausgestellten Dokumente kryptographisch gebundenen Endgeräts. In Block 362 wird zumindest eine Zuordnung des öffentlichen kryptographischen Schlüssels des an die zu revozierende Kopie des Dokuments kryptographisch gebundenen Endgeräts aus der ersten Datenbank gelöscht. Beispielsweise können alle den ein oder mehreren zu revozierenden Kopien der entsprechenden Dokumente zugeordneten Daten aus der ersten Datenbank gelöscht. In Block 364 senden der Server eine Revozierungsbestätigung an das Endgerät.

Auf analoge Weise kann auch ein Provisionierungstoken zum Empfang einer ersten Kombination aus einer Mehrzahl von auszustellenden digitalen Kopien einer Mehrzahl von ausgestellten digitalen Dokumenten revoziert werden, bevor die entsprechenden Kopien ausgestellt wurden. In diesem Fall werden beispielsweise in der ersten Datenbank für den zu revozierenden Provisionierungstoken gespeicherte Salt-Werte gelöscht. Beispielsweise werden in der ersten Datenbank alle dem zu revozierenden Provisionierungstoken zugeordnete Daten gelöscht.

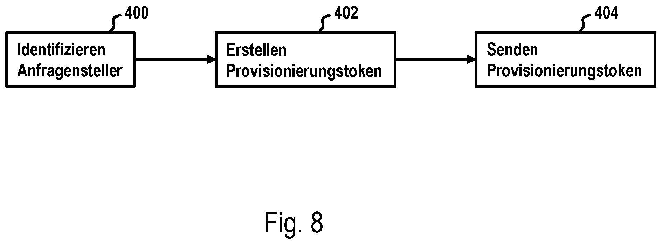

Figur 8 zeigt ein exemplarisches Verfahren zum Erstellen eines digitalen Provisionierungstokens für eine Mehrzahl auszustellender digitaler Dokumente. In Block 400 wird der Anfragenstellen, welcher eine Anfrage zum Erstellen des Provisionierungstokens stellt, identifiziert. In Block 402 wird das entsprechende Provisionierungstoken erstellt. In Block 404 wird der Provisionierungstoken an den Anfragensteller gesendet.

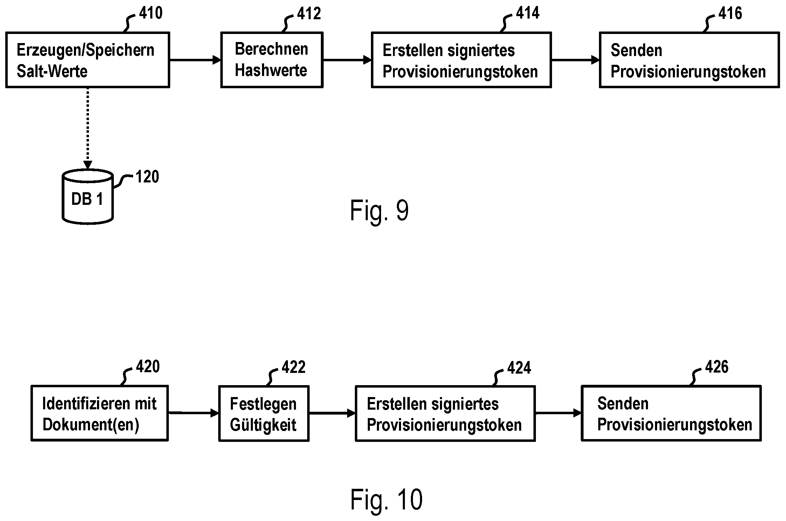

Figur 9 zeigt das Erstellen des Provisionierungstokens gemäß Block 402 der Figur 8 detaillierter. In Block 410 werden Salt-Werte erzeugt und einer ersten Datenbank 120 gespeichert. In Block 412 werden unter Verwendung der in Block 410 erzeugten Salt-Werte Hashwerte zum Speichern in dem Provisionierungstoken berechnet. In Block 414 wird das signierte Provisionierungstoken unter Verwendung der Hashwerte aus Block 412 erstellt und in Block 416 an den Anfragensteller gesendet.

Figur 10 zeigt ein exemplarisches Verfahren zum Erstellen eines digitalen Provisionierungstokens für digitale Kopien digitaler Dokumente. In Block 420 wird ein Anfragensteller, welcher eine Anfrage zum Erstellen des entsprechenden Provisionierungstokens an den Server eines Ausstellerdienstes stellt, unter Verwendung eines oder mehrerer Dokumente, welches sich in seinem Besitz befinden, identifiziert. In Block 422 werden Gültigkeitsdauern für die mit dem Provisionierungstoken zu erlangenden Dokumentenkopien definiert. In Block 424 wird das signierte Provisionierungstoken erstellt und in Block 426 an den Anfragensteller gesendet.

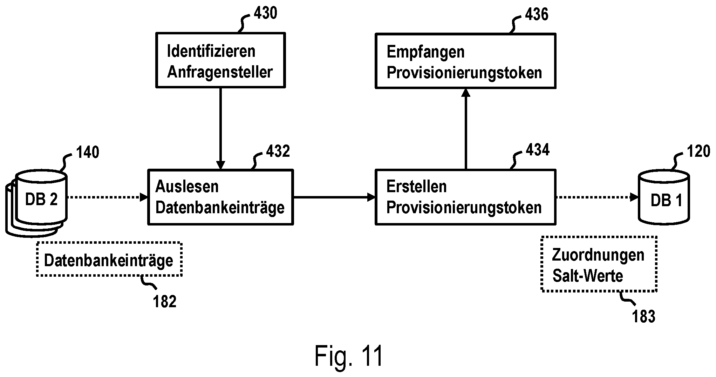

Figur 11 zeigt ein weiteres exemplarisches Verfahren zum Erstellen eines digitalen Provisionierungstokens für auszustellende digitale Dokumente. In Block 430 wird der Anfragenstellen, welcher eine Anfrage zum Erstellen des Provisionierungstokens stellt, identifiziert. In Block 432 werden mehrere Datenbankeinträge 182 mit Datenelementen der auszustellenden Dokumente aus ein oder mehreren zweiten Datenbanken 140 ausgelesen. Diese Datenbankeinträge 182 werden beispielsweise zur Prüfung verwendet, dass Hashwerte, die in den Provisionierungstoken eingetragen werden, auf korrekten, existierenden Datenelementen beruhen. In Block 434 wird der Provisionierungstoken erstellt. Im Zuge der Erstellung des Provisionierungstokens werden Hashwerte unter Verwendung der Datenelemente sowie Salt-Werten erzeugt. Eine Zuordnung der Datenelemente zu den Salt-Werten wird in einer ersten Datenbank 120 gespeichert. In Block 436 wird der erstellte Provisionierungstoken an den Anfragensteller gesendet, welcher diesen empfängt.

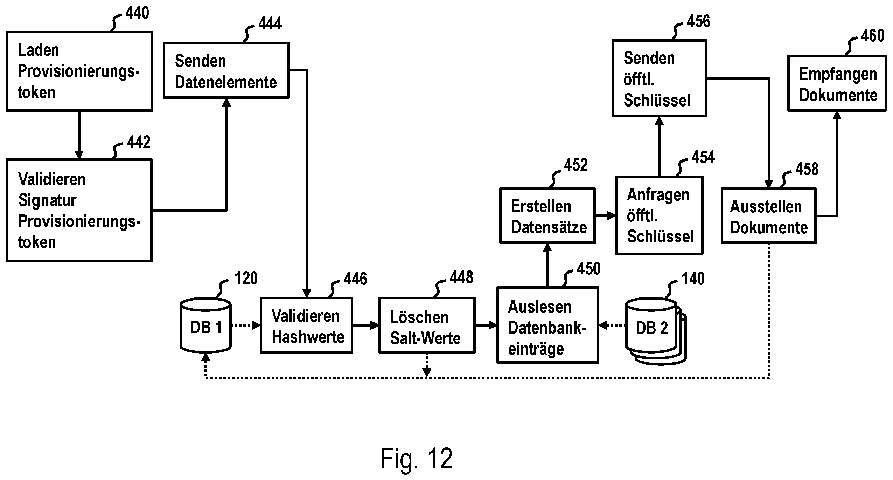

Figur 12 zeigt ein exemplarisches Verfahren zum Ausstellen von digitalen Dokumenten unter Verwendung eines Provisionierungstokens. In Block 440 wird der digitale Provisionierungstoken auf einem Endgerät, beispielsweise in einer App, geladen. In Block 442 wird der Provisionierungstoken an einen Server eines Ausstellerdienstes gesendet, welcher eine Signatur des Provisionierungstokens validiert. In Block 444 werden von dem Anfragensteller beispielsweise Datenelemente zum Validieren der von dem Provisionierungstoken umfassten Hashwerten abgefragt. Beispielsweise wird dabei auch ein Einmalkennwort des Anfragenstellers abgefragt. In Block 446 werden die Hashwerte des Provisionierungstokens unter Verwendung der von der ersten Datenbank 120 bereitgestellten Salt-Werten validiert. Auf eine erfolgreiche Validierung hin, werden in Block 448 die in der ersten Datenbank 120 für den Provisionierungstoken gespeicherten Salt-Werte gelöscht, sodass der Provisionierungstoken nicht erneut zum Ausstellen der Dokumente verwendet werden kann. In Block 450 werden Datenelemente für die auszustellenden Dokumente aus Datenbankeinträgen in ein oder mehreren zweiten Datenbanken 140 ausgelesen. In Block 452 werden mit den von den ausgelesenen Datenbankeinträgen umfassten Datenelementen jeweils Datensätze für die auszustellenden Dokumente erstellt. In Block 454 wird von dem Anfragensteller ein öffentlicher kryptographischer Schlüssel eines Endgeräts des Anfragenstellers angefragt, um die Dokumente kryptographisch an das entsprechende Endgerät binden zu können. In Block 456 wird der angefragte öffentliche kryptographische Schlüssel des Endgeräts an den Server des Ausstellerdienstes gesendet, welcher in Block 458 die Dokumente ausstellt. In Block 460 werden die ausgestellten, d.h., signierten Dokumente mit den jeweiligen Datenelementen aus den ausgelesenen Datenbankeinträgen und dem öffentlichen kryptographischen Schlüssel des Endgeräts an den Anfragensteller gesendet, welcher die Kombination von Dokumenten empfängt.

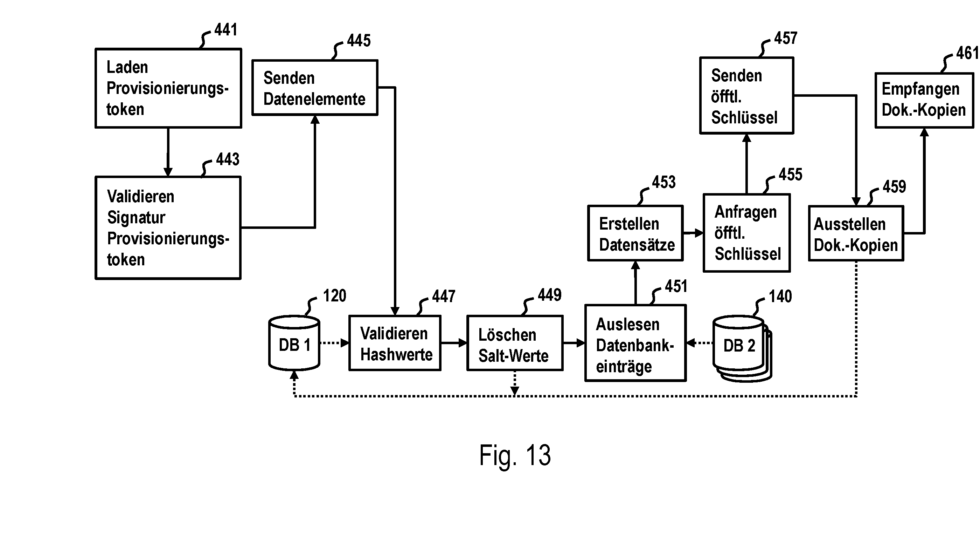

Figur 13 zeigt ein exemplarisches Verfahren zum Ausstellen digitaler Kopie von Dokumenten unter Verwendung eines Provisionierungstokens. In Block 441 wird der digitale Provisionierungstoken auf einem Endgerät, beispielsweise in einer App, geladen. In Block 443 wird der Provisionierungstoken an einen Server eines Ausstellerdienstes gesendet, welcher eine Signatur des Provisionierungstokens validiert. In Block 445 werden von dem Anfragensteller Datenelemente zum Validieren der von dem Provisionierungstoken umfassten Hashwerten abgefragt. Beispielsweise wird dabei auch ein Einmalkennwort des Anfragenstellers abgefragt. In Block 447 werden die Hashwerte des Provisionierungstokens unter Verwendung der von der ersten Datenbank 120 bereitgestellten Salt-Werten validiert. Auf eine erfolgreiche Validierung hin, werden in Block 449 die in der ersten Datenbank 120 für den Provisionierungstoken gespeicherten Salt-Werte gelöscht, sodass der Provisionierungstoken nicht erneut zum Ausstellen von Kopien der Dokumente verwendet werden kann. In Block 451 werden Datenelemente für die auszustellende Kopien der Dokumente aus Datenbankeinträgen in ein oder mehreren zweiten Datenbanken 140 ausgelesen. In Block 453 werden mit den von den ausgelesenen Datenbankeinträgen umfassten Datenelementen Datensätze für die Kopien der Dokumente erstellt. In Block 455 wird von dem Anfragensteller ein öffentlicher kryptographischer Schlüssel eines Endgeräts des Anfragenstellers angefragt, um die Kopien der Dokumente kryptographisch an das entsprechende Endgerät binden zu können. In Block 457 wird der angefragte öffentliche kryptographische Schlüssel des Endgeräts an den Server des Ausstellerdienstes gesendet, welcher in Block 459 die Kopien der Dokumente ausstellt. In Block 461 werden die ausgestellten, d.h., signierten Dokumentenkopien mit den jeweiligen Datenelementen aus den ausgelesenen Datenbankeinträgen und dem öffentlichen kryptographischen Schlüssel des Endgeräts an den Anfragensteller gesendet, welcher die Kombination von Kopien empfängt.

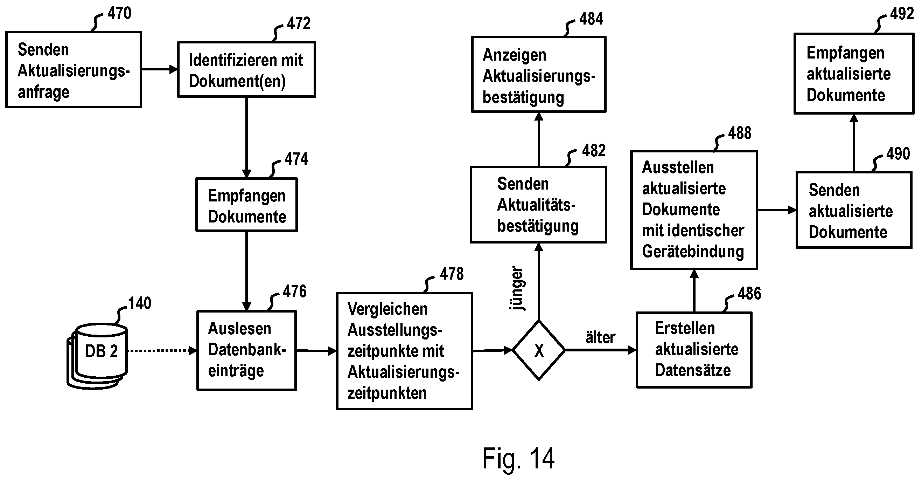

Figur 14 zeigt ein exemplarisches Verfahren zum Aktualisieren ausgestellter Dokumente. In Block 470 sendet ein Anfragensteller eine Aktualisierungsanfrage unter Verwendung eines Endgeräts, beispielsweise eines mobilen Endgeräts, und einer darauf laufenden App an einen Server eines Austellerdienstes. Hierbei identifiziert sich der Anfragensteller in Block 472 mit einem oder mehreren der ausgestellten Dokumente. Beispielsweise werden die entsprechenden Dokumente mit der Aktualisierungsanfrage mitgesendet. In Block 474 werden die Dokumente von dem Server empfangen. In Block 476 werden Datenbankeinträge mit aktuellen Datenelementen für die Dokument aus ein oder mehreren Datenbanken 140 ausgelesen. In Block 478 wird für die einzelnen Dokumente jeweils ein Ausstellzeitpunkt des entsprechenden Dokuments mit einem Aktualisierungszeitpunkt einer letzten Aktualisierung des dem entsprechende zugeordneten und ausgelesenen Datenbankeintrags verglichen. Ist der Ausstellerzeitpunkt jünger, bedeutet diese, dass das Dokument auf dem aktuellsten Stand ist. In Block 482 wird eine Aktualitätsbestätigung an das Endgerät des Anfragenstellers gesendet, welche bestätigt, dass das Dokument auf dem aktuellsten Stand ist. In Block 484 wird die Aktualitätsbestätigung beispielsweise auf dem Endgerät des Anfragenstellers angezeigt.

Ist der Ausstellerzeitpunkt älter, bedeutet diese, dass das Dokument nicht auf dem aktuellsten Stand ist. In Block 486 werden für nicht aktuelle Dokumente jeweils ein aktualisierter Datensatz mit den aktuellen Datenelementen aus den entsprechenden ausgelesenen Datenbankeinträgen erstellt. In Block 488 werden aktualisierte mit identischer Gerätebindung, wie die entsprechenden bisherigen Dokumente, d.h. mit demselben öffentlichen kryptographischen Schlüssel des Endgeräts des Anfragenstellers ausgestellt. In Block 490 werden die aktualisierten Dokumente an den Anfragensteller gesendet, welcher die aktualisierten Dokumente in Block 492 auf seinem Endgerät empfängt.

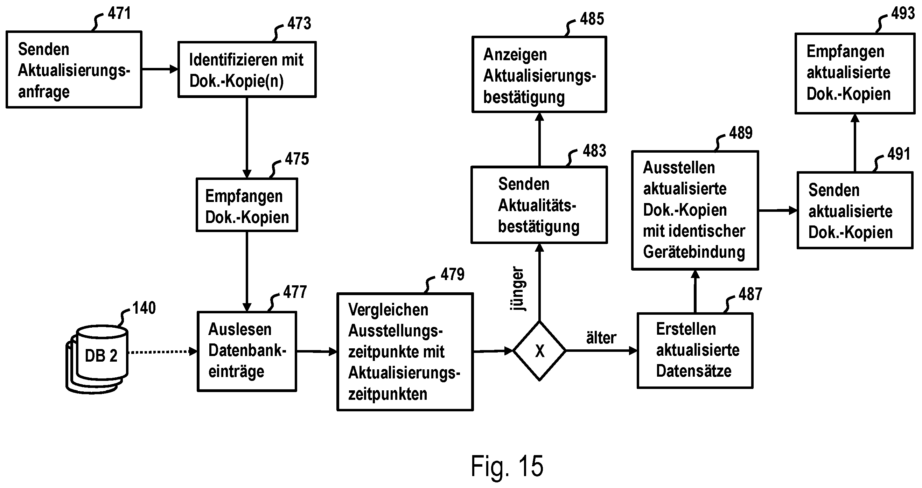

Figur 15 zeigt ein exemplarisches Verfahren zum Aktualisieren ausgestellter Kopien einer Mehrzahl von Dokumenten. In Block 471 sendet ein Anfragensteller eine Aktualisierungsanfrage unter Verwendung eines Endgeräts, beispielsweise eines mobilen Endgeräts, und einer darauf laufenden App an einen Server eines Austellerdienstes. Hierbei identifiziert sich der Anfragensteller in Block 473 mit einer oder mehreren der ausgestellten Kopien der Dokumente. Beispielsweise werden die entsprechenden Kopien mit der Aktualisierungsanfrage mitgesendet. In Block 475 werden die Dokumentenkopien von dem Server empfangen. In Block 477 werden Datenbankeinträge mit aktuellen Datenelementen für die Kopien der Dokumente aus ein oder mehreren Datenbanken 140 ausgelesen. In Block 479 wird für jede der Dokumentenkopien jeweils ein Ausstellzeitpunkt der entsprechenden Dokumentenkopie mit einem Aktualisierungszeitpunkt einer letzten Aktualisierung des ausgelesenen Datenbankeintrags der entsprechende Dokumentenkopie verglichen. Ist der Ausstellerzeitpunkt jünger, bedeutet diese, dass die entsprechend Kopie auf dem aktuellsten Stand ist. In Block 483 wird eine Aktualitätsbestätigung an das Endgerät des Anfragenstellers gesendet, welche bestätigt, dass die Kopie des Dokuments auf dem aktuellsten Stand ist. In Block 485 wird die Aktualitätsbestätigung beispielsweise auf dem Endgerät des Anfragenstellers angezeigt.

Ist der Ausstellerzeitpunkt älter, bedeutet diese, dass die entsprechende Kopie des Dokuments nicht auf dem aktuellsten Stand ist. In Block 487 werden für die nicht aktuellen Kopien jeweils aktualisierte Datensätze mit den aktuellen Datenelementen aus den ausgelesenen Datenbankeinträgen der entsprechenden Dokumentenkopien erstellt. In Block 489 werden aktualisierte Dokumentenkopien mit identischer Gerätebindung, wie die bisherige Dokumentenkopie, d.h. mit demselben öffentlichen kryptographischen Schlüssel des Endgeräts des Anfragenstellers ausgestellt. In Block 491 werden die aktualisierten Kopien der Dokumente an den Anfragensteller gesendet, welcher die aktualisierten Kopien der Dokumente in Block 493 auf seinem Endgerät empfängt.

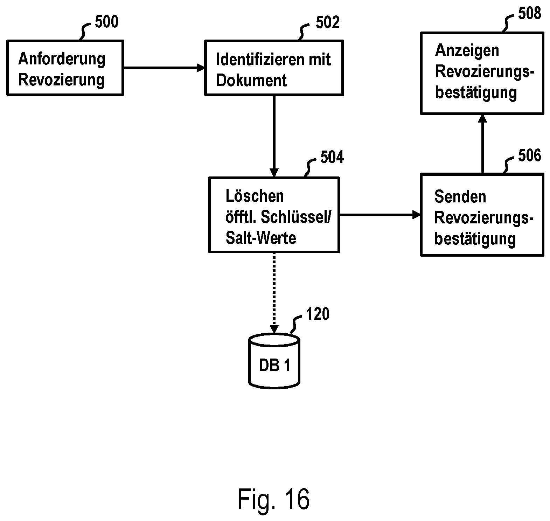

Figur 16 zeigt ein exemplarisches Verfahren zum Revozieren eines digitalen Provisionierungstokens zum Ausstellen digitaler Kopie von digitalen Dokumenten oder der ausgestellten Kopien der Dokumente. In Block 500 wird eine Revozierungsanforderung von einem Anfragensteller, welcher sich im Besitz der Dokumente befindet, gestellt. In Block 502 identifiziert sich der Anfragensteller mit einem oder mehreren der Dokumente, beispielsweise werden ein oder mehrere der Dokumente mit der Revozierungsanforderung zusammen von einem Endgerät des Anfragenstellers an einen Server eines Ausstellerdienstes gesendet. In Block 504 werden in der ersten Datenbank 120 Daten gelöscht, welche dem Provisionierungstoken oder den ausgestellten Kopien der Dokumente zugeordnet sind. Im ersten Fall beispielsweise Salt-Werte, im zweiten Fall beispielsweise der öffentliche kryptographische Schlüssel des Endgeräts, an welchen die Kopien kryptographisch gebunden sind. Durch das Löschen der entsprechenden Daten können der Provisionierungstoken bzw. die Dokumentenkopien nicht mehr validiert und somit nicht mehr verwendet werden. In Block 506 wird daher eine Revozierungsbestätigung an den Anfragensteller gesendet, welcher die in Block 508 mit seinem Endgerät empfängt und sich beispielsweise auf demselben anzeigt.

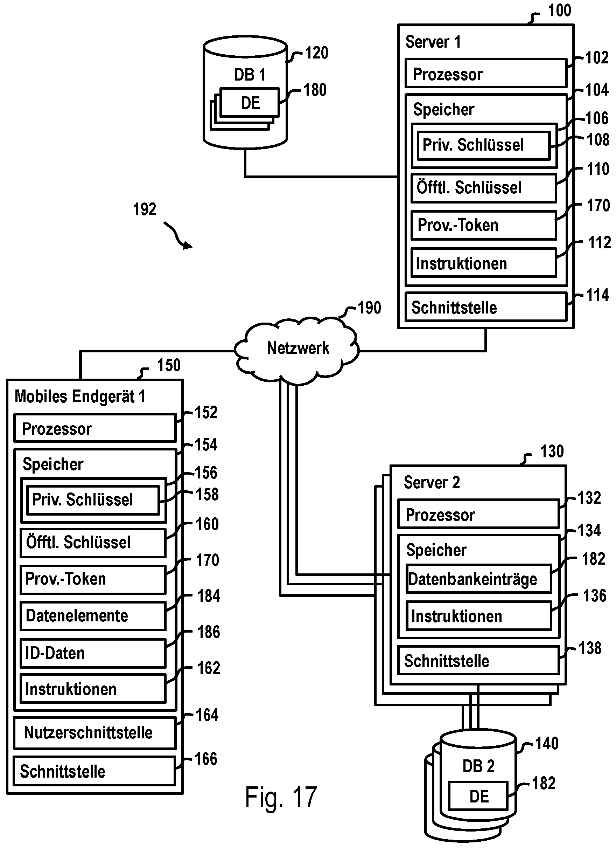

Figur 17 zeigt ein exemplarisches System 192 zum Erzeugen eines digitalen Provisionierungstokens 170 für ein digitale Dokumente durch einen Ausstellerdienst. Das System 192 umfasst einen erste Server 100 des Ausstellerdienstes. Der Server 100 umfasst einen Prozessor 102, einen Speicher 104 mit Programminstruktionen 112 und eine Kommunikationsschnittstelle 114 zur Kommunikation über ein Netzwerk 190. Ferner besitzt der Server 100 beispielsweise Zugriff auf eine erste Datenbank 120. Ein Ausführen der Programminstruktionen 112 durch den Prozessor 102 veranlasst den Prozessor 102 dazu, den Server 100 zu steuern zum Ausführen eines Verfahrens zum Erzeugen eines digitalen Provisionierungstokens 170. Beispielsweise handelt es sich um das Verfahren nach Figur 1.

Das System 192 umfasst beispielsweise ferner ein oder mehrere zweite Server 130, welche für den ersten Server 100 des Ausstellerdienstes einen Zugriff auf ein oder mehrere zweite Datenbanken 140 bereitstellen. In den Datenbanken 140 sind ein Datenbankeinträge 182 mit Datenelementen für digitale Dokumente gespeichert. Die zweiten Server 130 umfassen jeweils einen Prozessor 132, einen Speicher 134 mit Programminstruktionen 136 und eine Kommunikationsschnittstelle 138 zur Kommunikation über das Netzwerk 190. Ein Ausführen der Programminstruktionen 136 durch den Prozessor 132 veranlasst den Prozessor 132 dazu, den jeweiligen Server 130 zu steuern zum Bereitstellen des Datenbankeintrag 182 für den ersten Server 100.

Ferner umfasst das System 192 beispielsweise ein Endgerät 150, insbesondere ein mobiles Endgerät, wie etwa ein Smartphone. Das Endgerät 150 umfasst einen Prozessor 152, einen Speicher 154 mit Programminstruktionen 162 und eine Kommunikationsschnittstelle 166 zur Kommunikation über das Netzwerk 190. Zudem umfasst das Endgerät 150 beispielsweise eine Nutzerschnittstelle 164, über welche ein Nutzer das Endgerät 150 steuern kann, beispielsweise zum Anfragen eines Erstellens eines Provisionierungstokens 170 für digitale Dokumente. Ein Ausführen der Programminstruktionen 162, welche beispielsweise eine entsprechende App auf dem Endgerät 150 implementieren, durch den Prozessor 152 veranlasst den Prozessor 152 dazu, das Endgerät 150 zum Anfragen des Provisionierungstokens 170 über das Netzwerk 190 bei dem Server 100 des Ausstellerdienstes zu steuern.

Beispielsweise identifiziert sich der Anfragesteller zunächst mit dem Endgerät 150 unter Verwendung der Identifikationsdaten 186 gegenüber dem Server 100. Ferner kann das Endgerät 150 ein oder mehrere Datenelemente 184 der auszustellenden Dokumente an den Server 100 senden. Anhand der empfangenen Datenelemente kann der Server 100 die Datenbankeinträge 182 identifizieren, welchen er über die ein oder mehreren Server 130 aus den ein oder mehreren zweiten Datenbanken 140 ausliest. Mit diesen Datenbankeinträgen 182 kann der Server 100 die Korrektheit der Datenelemente 184 prüfen und aus den Datenelementen 182 Hashwerte für Provisionierungstoken 170 berechnen. Hierzu werden den Datenelementen 182 Salt-Werte zugeordnet und die entsprechenden Zuordnungen in der ersten Datenbank 120 in einem oder mehreren ersten Datenbankeinträgen 180 gespeichert. Der Server 100 signiert den erstellten Provisionierungstokens 170 unter Verwendung des privaten kryptographischen Schlüssels 108, welcher als Signaturschlüssel verwendet wird. Der private kryptographische Schlüssels 108 ist beispielsweise in einem geschützten Speicherbereich 106 des Speichers 104 gespeichert. Die resultierende Signatur kann mit einem öffentlichen kryptographischen Schlüssel 110 des Servers 100 als Signaturprüfschlüssel geprüft werden. Der so erstellte Provisionierungstokens 170 wird dem Endgerät 150 über das Netzwerk 190 zur Verfügung gestellt.

Beispielsweise umfasst auch das Endgerät 150 ein symmetrisches kryptographisches Schlüsselpaar, welches dem Endgerät 150 zugeordnet ist. Dieses asymmetrische kryptographische Schlüsselpaar umfasst einen privaten kryptographischen Schlüssel 158 und einen öffentlichen kryptographischen Schlüssel 160. Der private kryptographische Schlüssel 158 ist beispielsweise in einem geschützten Speicherbereich 156 des Speichers 154 gespeichert.

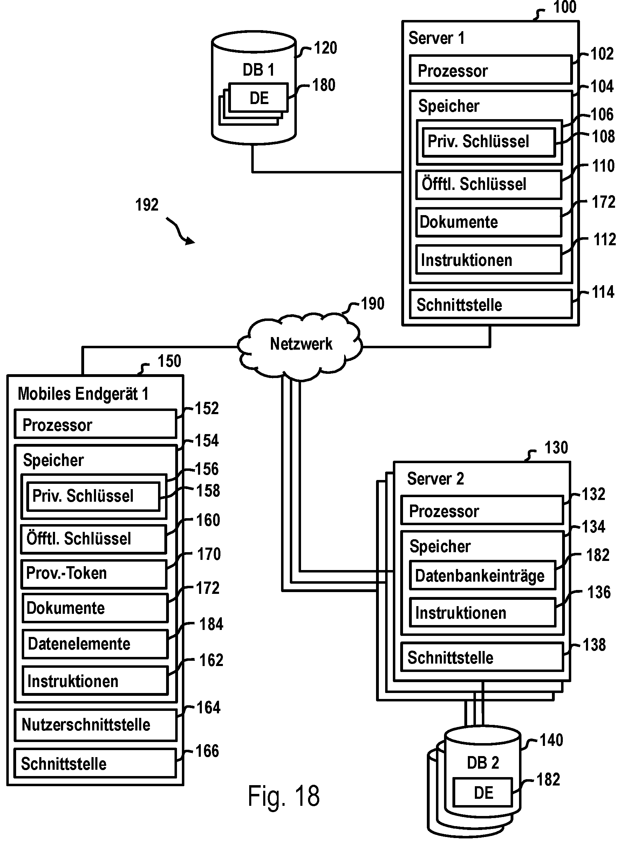

Figur 18 zeigt ein exemplarisches System 192 zum Ausstellen digitaler Dokumente unter Verwendung des Provisionierungstokens 170. Das System 192 in Figur 18 entspricht dem System 192 in Figur 17. Das Endgerät 150 verwendet den Provisionierungstoken 170 zum Anfragen eines Ausstellens der digitalen Dokumente 172 durch den Server 100. Der Server 100 validiert den Provisionierungstoken 170. Die Validierung umfasst beispielsweise eine Signaturprüfung unter Verwendung des öffentlichen kryptographischen Schlüssels 110 sowie der von dem Provisionierungstoken 170 umfassten Hashwerten. Hierfür werden beispielsweise die Salt-Werte aus den ein oder mehreren ersten Datenbankeinträgen 180 und Datenelemente aus den zweiten Datenbankeinträgen 182 verwendet. Auf eine erfolgreiche Validierung hin werden die Salt-Werte aus dem ersten Datenbankeintrag 180 gelöscht, sodass der Provisionierungstoken 170 nicht noch einmal verwendet werden kann.

Ferner werden die Dokumente 172 erstellt, welche jeweils Datenelemente der Dokumente aus den zugehörigen zweiten Datenbankeinträgen 182 umfassen und beispielsweise mit dem privaten kryptographischen Schlüssel 108 signiert werden. Für eine kryptographische Bindung der Dokumente 172 an das Endgerät 150 wird zusätzlich der öffentliche kryptographische Schlüssel 160 des Endgeräts 150 zu den Dokumenten 172 hinzugefügt. Die resultierende Kombination von Dokumenten 172 wird dem Endgerät 150 beispielsweise über das Netzwerk 190 zugesendet.

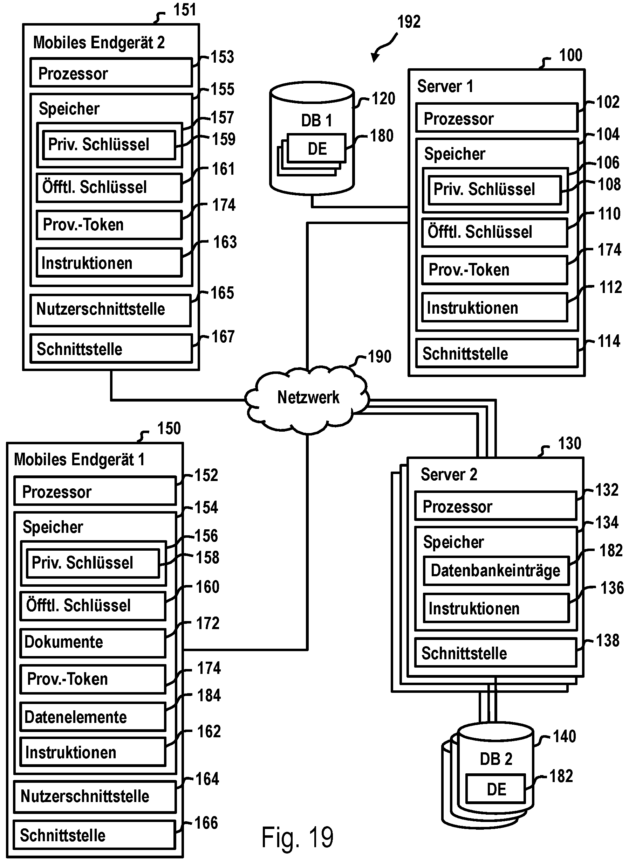

Figur 19 zeigt ein exemplarisches System 192 zum Erzeugen eines digitalen Provisionierungstokens 174 für Kopien der digitalen Dokumente 172 durch den Ausstellerdienst. Das System 192 in Figur 19 entspricht dem System 192 in Figur 18. Ein Nutzer verwendet das Endgerät um einen digitalen Provisionierungstokens 174 für Kopien von ausgestellten Dokumenten, beispielsweise den Dokumenten 172, zu beantragen. Das Endgerät 150 identifiziert den Anfragensteller gegenüber dem Server 100 beispielsweise unter Verwendung ein oder mehrere der Dokumente 172. Der Server 100 erstellt ein Provisionierungstoken 174 für Kopien der digitalen Dokumente 172. Das Erstellen des Provisionierungstokens 174 entspricht beispielsweise dem Erstellen des Provisionierungstokens 170 in Figur 17. Von dem Provisionierungstokens 170 unterscheidet sich der Provisionierungstoken 174 beispielsweise dadurch, dass er einen Indikator umfasst, welcher anzeigt, dass es sich um einen Provisionierungstoken für Kopien von Dokumenten handelt. Ferner umfasst der Provisionierungstoken 174 beispielsweise eine Angabe einer Gültigkeitsdauer der auszustellenden Kopien der Dokumente. Diese Gültigkeitsdauer kann beispielsweise der Nutzer des Endgeräts 150 festlegen. Beispielsweise wird für alle Kopien jeweils dieselbe Gültigkeitsdauer festgelegt. Beispielsweise werden für die Kopien jeweils individuelle Gültigkeitsdauern festgelegt Der erstellte Provisionierungstoken 174 wird von dem Server 100 an das Endgerät 150 gesendet. Das Endgerät 150 kann den Provisionierungstoken 174 beispielsweise an ein weiteres Endgerät 151 eines anderen Nutzers weiterleiten. Somit wird der andere Nutzer dazu in die Lage versetzt sich Kopie der Dokumente 172 ausstellen zulassen, ohne dass dafür eine weitere Tätigkeit seitens des Nutzers des Endgeräts 150, d.h. des Besitzers der entsprechenden Dokumente 172, nötig wäre.

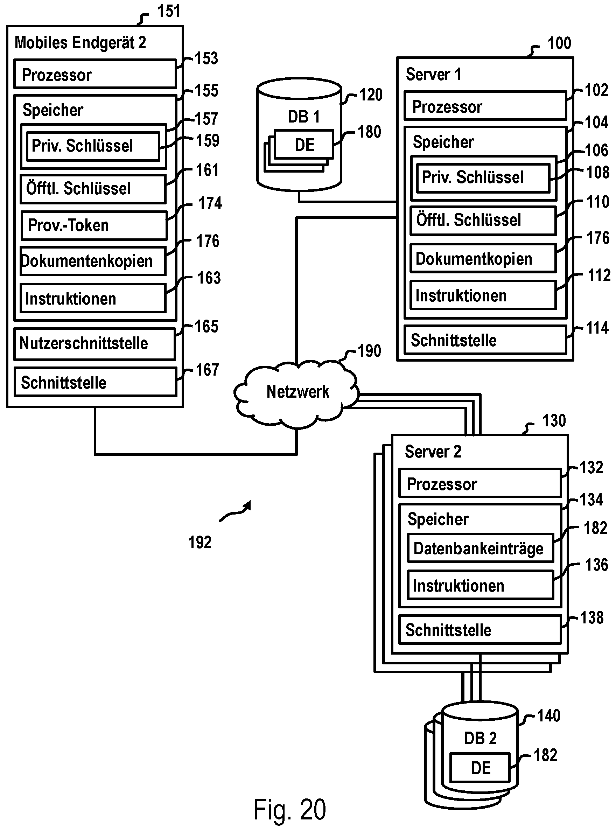

Bei dem Endgerät 151 handelt es sich beispielsweise um ein mobiles Endgerät, wie etwa ein Smartphone. Das Endgerät 151 umfasst einen Prozessor 153, einen Speicher 155 mit Programminstruktionen 163 und eine Kommunikationsschnittstelle 167 zur Kommunikation über das Netzwerk 190. Zudem umfasst das Endgerät 151 beispielsweise eine Nutzerschnittstelle 165, über welche ein Nutzer das Endgerät 151 steuern kann, beispielsweise zum Anfragen eines Ausstellens von Kopien der Dokumente 172 unter Verwendung des von dem Endgerät 150 empfangenen Provisionierungstokens 174. Ein Ausführen der Programminstruktionen 163, welche beispielsweise eine entsprechende App auf dem Endgerät 151 implementieren, durch den Prozessor 153 veranlasst den Prozessor 153 dazu, das Endgerät 151 zum Anfragen eines Ausstellens einer Kopie des Dokuments 172 über das Netzwerk 190 bei dem Server 100 des Ausstellerdienstes zu steuern. Dies ist in Figur 20 dargestellt.

Figur 20 zeigt ein exemplarisches System 192 zum Ausstellen von Kopien digitaler Dokumente unter Verwendung des Provisionierungstokens 174. Das System 192 in Figur 20 entspricht beispielsweise dem System in Figur 19 ohne das Endgerät 150, welches beim Ausstellen der Kopien der Dokumente beispielsweise keine weitere Rolle mehr spielt.

Das Endgerät 151 verwendet den Provisionierungstoken 174 zum Anfragen eines Ausstellens der digitalen Kopien 176 der Dokumente durch den Server 100. Der Server 100 validiert den Provisionierungstoken 174. Die Validierung umfasst beispielsweise eine Signaturprüfung unter Verwendung des öffentlichen kryptographischen Schlüssels 110 sowie der von dem Provisionierungstoken 174 umfassten Hashwerte. Hierfür werden beispielsweise die Salt-Werte aus den ein oder mehreren ersten Datenbankeinträgen 180 und Datenelemente aus den zweiten Datenbankeinträgen 182 verwendet. Auf eine erfolgreiche Validierung hin werden die Salt-Werte aus den ein oder mehreren ersten Datenbankeinträgen 180 gelöscht, sodass der Provisionierungstoken 174 nicht noch einmal verwendet werden kann.

Ferner werden die Kopien 176 der Dokumente erstellt, welche jeweils Datenelemente des entsprechenden Dokuments aus dem zugehörigen zweiten Datenbankeintrag 182 des entsprechenden Dokuments umfassen und beispielsweise mit dem privaten kryptographischen Schlüssel 108 signiert werden. Für eine kryptographische Bindung der Dokumentenkopien 176 an das Endgerät 151 wird zusätzlich der öffentliche kryptographische Schlüssel 161 des Endgeräts 151 zu der jeweiligen Dokumentenkopie 176 hinzugefügt. Die resultierende Kombination von Dokumentenkopien 176 werden dem Endgerät 151 beispielsweise über das Netzwerk 190 zugesendet.

Die Dokumentenkopien 176 umfassen jeweils einen Indikator, welcher sie als eine Kopie identifiziert, d.h. welcher anzeigt, dass es sich um eine Kopie eines Dokuments handelt. Ferner umfassen die Dokumentenkopien 176 beispielsweise jeweils eine Angabe einer Gültigkeitsdauer der entsprechenden ausgestellten Kopie des Dokuments.

Beispielsweise umfasst auch das Endgerät 151 ein symmetrisches kryptographisches Schlüsselpaar, welches dem Endgerät 151 zugeordnet ist. Dieses asymmetrische kryptographische Schlüsselpaar umfasst einen privaten kryptographischen Schlüssel 159 und einen öffentlichen kryptographischen Schlüssel 161. Der private kryptographische Schlüssel 159 ist beispielsweise in einem geschützten Speicherbereich 157 des Speichers 155 gespeichert.

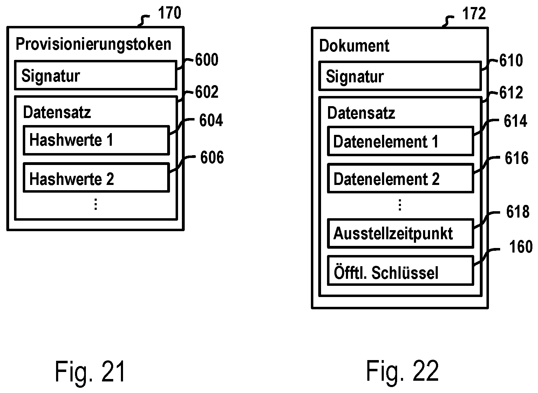

Figur 21 zeigt einen exemplarischen digitalen Provisionierungstoken 170 zum Nachweis einer Berechtigung zum Empfang einer Mehrzahl von auszustellenden digitalen Dokumenten mit einem Endgerät und zur kryptographischen Kopplung der entsprechenden digitalen Dokumente an das Endgerät im Zuge der Ausstellung. Ein entsprechender Provisionierungstoken 170 kann beispielsweise mit dem Verfahren nach Figur 1 erstellt werden. Der Provisionierungstoken 170 umfasst einen Datensatz 602 mit einer Mehrzahl Hashwerten 604, 606, welche jeweils unter Verwendung von Kombinationen aus den auszustellenden Dokumenten zugeordneten Datenelementen, welches die auszustellenden Dokumente jeweils identifizieren, und den Datenelementen jeweils zugeordneten Salt-Werten erzeugt sind. Der Datensatz 602 ist mit einem Signaturschlüssel eines den Provisionierungstoken 170 erzeugenden Ausstellerdienstes signiert, d.h. mit der Signatur 600. Beispielsweise umfasst der Datensatz 602 für jedes der auszustellenden Dokumente jeweils einen Hashwert 604 und/oder einen zusätzlichen Hashwert 606.

Figur 22 zeigt ein exemplarisches digitales Dokument 172 einer Mehrzahl von aufgestellten Dokumenten, welches einen Datensatz 612 mit Datenelementen 614, 615 in Klartext umfasst. Ein entsprechendes Dokument 172 kann beispielsweise mit dem Verfahren nach Figur 2 ausgestellt werden. Der Datensatz 612 ist mit einem Signaturschlüssel eines das Dokument ausstellenden Ausstellerdienstes signiert, d.h. mit der Signatur 610. Der Datensatz 610 umfasst ferner einen öffentlichen kryptographischen Schlüssel 160 eines Endgeräts zum kryptographischen Binden des Dokuments 172 an das entsprechende Endgerät. Zusätzlich umfasst der Datensatz 610 beispielsweise noch eine Angabe 618 eines Ausstellzeitpunkts des Dokument 172.

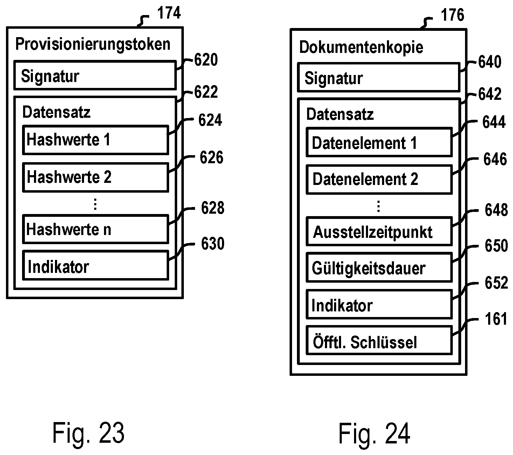

Figur 23 zeigt einen exemplarischen digitalen Provisionierungstoken 174 zum Nachweis einer Berechtigung zum Empfang einer Mehrzahl von auszustellenden digitalen Kopien einer Mehrzahl von ausgestellten digitalen Dokumenten mit einem Endgerät und zur kryptographischen Kopplung der entsprechenden Kopien an das Endgerät im Zuge der Ausstellung. Ein entsprechender Provisionierungstoken 174 kann beispielsweise mit dem Verfahren nach Figur 4 erstellt werden. Der Provisionierungstoken 174 umfasst einen Datensatz 622 mit Hashwerten 624, 626, 628 und einem Indikator 630. Die Hashwerte 624, 626 sind unter Verwendung von Kombination aus den ausgestellten Dokumenten jeweils zugeordneten Datenelement, welches das entsprechende ausgestellte Dokument, für das eine Kopie auszustellen ist, identifizieren, und den Datenelementen jeweils zugeordneten Salt-Werten erzeugt. Der Hashwert 628 ist beispielsweise ein Hashwert einer Angabe einer Gültigkeitsdauer der auszustellenden Dokumentenkopie, welcher unter Verwendung eines Salt-Werts erzeugt ist. Der Indikator 630 zeigt an, dass es sich um einen Provisionierungstoken 174 für eine Kopie des ausgestellten Dokuments handelt. Der Datensatz 620 ist mit einem Signaturschlüssel eines den Provisionierungstoken 174 erzeugenden Ausstellerdienstes signiert, d.h. mit der Signatur 620. Beispielsweise umfasst der Datensatz 622 für jedes der auszustellenden Dokumente jeweils einen Hashwert 624 und/oder zusätzlichen Hashwert 626 und 628.

Figur 24 zeigt eine exemplarische digitale Kopie 176 eines ausgestellten Dokuments einer Mehrzahl von Dokumenten. Ein entsprechende Dokumentenkopie 176 kann beispielsweise mit dem Verfahren nach Figur 5 ausgestellt werden. Die Kopie 176 umfasst einen Datensatz 642 mit Datenelementen 644, 645 und einen Indikator 652 in Klartext. Der Indikator 652 zeigt an, dass es sich um eine Dokumentenkopie handelt. Der Datensatz 642 ist mit einem Signaturschlüssel eines die Kopie 176 des Dokuments ausstellenden Ausstellerdienstes signiert, d.h. mit der Signatur 640. Der Datensatz 642 umfasst ferner einen öffentlichen kryptographischen Schlüssel 161 eines Endgeräts zum kryptographischen Binden der Kopie 174 des Dokuments an das Endgerät. Schließlich umfasst der Datensatz 642 beispielsweise noch eine Angabe 648 eines Ausstellzeitpunkts der Dokumentenkopie 176 und eine Angabe 650 einer Gültigkeitsdauer der Dokumentenkopie 176.

### LISTE DER BEZUGSZEICHEN

- 100: erster Server
- 102: Prozessor
- 104: Speicher
- 106: geschützter Speicherbereich
- 108: privater Schlüssel
- 110: öffentlicher Schlüssel
- 112: Programminstruktionen
- 114: Kommunikationsschnittstelle
- 120: erste Datenbank
- 130: zweiter Server
- 132: Prozessor
- 134: Speicher
- 136: Programminstruktionen
- 138: Kommunikationsschnittstelle
- 140: zweite Datenbank
- 150: mobiles Endgerät
- 151: mobiles Endgerät
- 152: Prozessor
- 153: Prozessor
- 154: Speicher
- 155: Speicher
- 156: geschützter Speicherbereich
- 157: geschützter Speicherbereich
- 158: privater Schlüssel
- 159: privater Schlüssel
- 160: öffentlicher Schlüssel
- 161: öffentlicher Schlüssel
- 162: Programminstruktionen
- 163: Programminstruktionen
- 164: Nutzerschnittstelle
- 165: Nutzerschnittstelle
- 166: Kommunikationsschnittstelle
- 167: Kommunikationsschnittstelle
- 170: Provisionierungstoken
- 172: Dokument
- 174: Provisionierungstoken
- 176: Dokumentenkopie
- 180: erster Datenbankeintrag
- 182: zweiter Datenbankeintrag
- 183: Zuordnung Salt-Wert
- 184: Datenelemente
- 186: Identifikationsdaten
- 190: Netzwerk
- 192: System
- 600: Signatur
- 602: Datensatz
- 604: Hashwert
- 606: Hashwert
- 610: Signatur
- 612: Datensatz
- 614: Datenelement
- 616: Datenelement
- 618: Angabe Ausstellzeitpunkt
- 620: Signatur
- 622: Datensatz
- 624: Hashwert
- 626: Hashwert
- 628: Hashwert
- 630: Indikator
- 640: Signatur
- 642: Datensatz
- 644: Datenelement
- 646: Datenelement
- 648: Angabe Ausstellzeitpunkt
- 650: Angabe Gültigkeitsdauer
- 652: Indikator

## Patentansprüche

1. Verfahren zum Ausstellen einer ersten Kombination aus einer Mehrzahl von auszustellenden digitalen Dokumenten (172) unter Verwendung eines digitalen Provisionierungstokens (170),
wobei der Provisionierungstoken (170) eine Berechtigung zum Empfang der Mehrzahl von auszustellenden digitalen Dokumenten (172) mit einem Endgerät (150) und zur kryptographischen Kopplung der auszustellenden Dokumente (172) an das Endgerät (150) im Zuge der Ausstellung nachweist, wobei der Provisionierungstoken (170) einen ersten Datensatz (602) mit einer Mehrzahl von ersten Hashwerten (604) umfasst, welche unter Verwendung einer Mehrzahl von zweiten Kombinationen erzeugt sind, wobei die zweiten Kombinationen jeweils einen ersten Salt-Wert einer Mehrzahl von ersten Salt-Werten und ein dem entsprechenden ersten Salt-Wert zugeordnetes erstes Datenelement (614) einer Mehrzahl von ersten Datenelementen (614) umfasst, wobei die ersten Datenelemente (614) der Mehrzahl von ersten Datenelementen (614) jeweils einem der auszustellenden Dokumente (172) der Mehrzahl von auszustellenden Dokumenten (172) zugeordnet sind und das entsprechende auszustellende Dokument (172) identifizieren, wobei der erste Datensatz (602) unter Verwendung eines ersten Signaturschlüssels (108) eines den Provisionierungstoken (170) erzeugenden Ausstellerdienstes signiert ist,
wobei in einer ersten Datenbank (120) ein oder mehrere erste Datenbankeinträge (180) mit einer Mehrzahl von ersten Zuordnungen der ersten Salt-Werte zu jeweils einem der ersten Datenelemente (614) gespeichert sind,
wobei in ein oder mehreren zweiten Datenbanken (140) jeweils ein oder mehrere zweite Datenbankeinträge (184) mit Datenelementen der auszustellenden Dokumente (172) gespeichert sind,
wobei das Verfahren zum Ausstellen der auszustellenden Dokumente (172) der Mehrzahl von auszustellenden Dokumenten (172) unter Verwendung ein oder mehrerer erster Server (100, 140) des Ausstellerdienstes umfasst:
o Empfangen einer Ausstellungsanfrage zum Ausstellen der Mehrzahl von auszustellenden Dokumenten (172) von dem Endgerät (150) eines Anfragenstellers,
o Empfangen des Provisionierungstokens (170) von dem Endgerät (150),
o Validieren des Provisionierungstokens (170), wobei das Validieren des Provisionierungstokens (170) umfasst:
• Validieren der Signatur des Provisionierungstokens (170) unter Verwendung eines ersten Signaturprüfschlüssels (108) des Ausstellerdienstes,
• Auslesen der ein oder mehreren ersten Datenbankeinträge (180) aus der ersten Datenbank (120) unter Verwendung der Mehrzahl von ersten Datenelementen (614),
• Prüfen der in dem Provisionierungstoken (170) eingetragenen Mehrzahl von Hashwerten (604, 606), welche die Mehrzahl von ersten Hashwerten (624) umfasst, unter Verwendung der ausgelesenen ein oder mehreren ersten Datenbankeinträgen (180),
• auf eine erfolgreiche Prüfung hin, Löschen zumindest der in den ausgelesenen ein oder mehreren ersten Datenbankeinträgen (180) gespeicherten Salt-Werte, welche den auszustellenden Dokumenten (172) zugeordnet sind, in der ersten Datenbank (120),
∘ Ausstellen der auszustellenden Dokumente (172), wobei das Ausstellen umfasst:
• Senden einer Schlüsselabfrage an das Endgerät (150),
• Empfangen eines dem Endgerät (150) zugeordneten öffentlichen kryptographischen Schlüssels (160),
wobei das Ausstellen der Dokumente (172) ferner für jedes der auszustellenden Dokumente (172) jeweils umfasst:
• Auslesen des zweiten Datenbankeintrags (182) des entsprechenden auszustellenden Dokuments (172) aus der zweiten Datenbank (140) der ein oder mehreren zweiten Datenbanken (140), welche den entsprechenden zweiten Datenbankeintrag (182) umfasst,
• Erstellen eines zweiten Datensatzes (612), welcher ein oder mehrere Datenelemente des ausgelesenen zweiten Datenbankeintrags (182), welche dem entsprechenden auszustellenden Dokument (172) zugeordnet sind, in Klartext umfasst,
• Hinzufügen des empfangenen öffentlichen kryptographischen Schlüssels (160) des Endgeräts (150) zu dem erstellten zweiten Datensatz (612) zum kryptographischen Binden des erstellten zweiten Datensatzes (612) an das Endgerät (150),
• Signieren des erstellten zweiten Datensatzes (612) unter Verwendung eines dem entsprechenden Ausstellerdienst zugeordneten zweiten kryptographischen Signaturschlüssels (108),
• Bereitstellen des entsprechenden ausgestellten Dokuments (172) in Form des signierten zweiten Datensatzes (612),
• Speichern einer Zuordnung des empfangenen öffentlichen kryptographischen Schlüssels (160) des Endgeräts (150) zu dem entsprechenden ausgestellten Dokument (172) in der ersten Datenbank (120),
o Senden der ersten Kombination aus der Mehrzahl von ausgestellten Dokumenten (172) an das Endgerät (150).

2. Verfahren nach Anspruch 1, wobei das Verfahren ferner ein Empfangen der ersten Datenelemente (614) und ein Verwenden der empfangenen ersten Datenelemente (614) zum Auslesen der ein oder mehreren ersten Datenbankeinträge (180) aus der ersten Datenbank (120) umfasst.

3. Verfahren nach einem der vorangehenden Ansprüche, wobei die Zuordnung des empfangenen öffentlichen kryptographischen Schlüssels (160) des Endgeräts (150) zu den ausgestellten Dokumenten (172) in den ein oder mehreren ersten Datenbankeinträgen (180) der ersten Datenbank (120) gespeichert wird.

4. Verfahren nach einem der vorangehenden Ansprüche, wobei das Validieren des Provisionierungstokens (170), auf eine erfolgreiche Prüfung hin, ein Löschen aller dem Provisionierungstoken (170) zugeordneter Daten aus den ein oder mehreren ersten Datenbankeinträgen (180) in der ersten Datenbank (120) umfasst.

5. Verfahren nach einem der vorangehenden Ansprüche, wobei die zweiten Datensätze (612) der jeweiligen auszustellenden Dokumente jeweils alle Datenelemente des jeweiligen zweiten Datenbankeintrags (182), welche dem entsprechenden auszustellenden Dokument (172) zugeordnet sind, in Klartext umfassen.

6. Verfahren nach einem der vorangehenden Ansprüche, wobei die ersten Datenelemente (614) der Mehrzahl von ersten Datenelementen (614) jeweils verwendet werden zum Bereitstellen eines Datenbankzugriffsschlüssels zum Identifizieren des in der ersten Datenbank (120) gespeicherten ersten Datenbankeintrags (180) mit der ersten Zuordnung eines erzeugten ersten Salt-Werts der Mehrzahl von ersten Salt-Werten zu dem entsprechenden ersten Datenelement (614), und/oder
wobei das Verfahren ferner ein Empfangen einer Mehrzahl von zweiten Datenelementen (616) umfasst, wobei jedes der zweiten Datenelemente (616) der Mehrzahl von zweiten Datenelementen (616) jeweils einem der auszustellenden Dokumente (172) zugeordnet ist, wobei die zweiten Datenelemente (616) zum Auslesen der ein oder mehreren ersten Datenbankeinträge (180) aus der ersten Datenbank (120) verwendet werden, wobei die zweiten Datenelemente (616) jeweils zum Bereitstellen eines der ein oder mehreren Datenbankzugriffsschlüssel zum Identifizieren der in der ersten Datenbank (120) gespeicherten ein oder mehreren ersten Datenbankeinträge (180) verwendet werden, und/oder
wobei Zugriffe auf die ein oder mehreren zweiten Datenbanken (140) über ein oder mehrere zweite Server (130) bereitgestellt werden, wobei das Abfragen der zweiten Datenbankeinträge (182) ein Senden von ein oder mehreren Abfragen an die ein oder mehreren zweiten Server (130) und ein Empfangen der zweiten Datenbankeinträge (182) in Antwort auf die gesendeten ein oder mehreren Abfragen umfasst.

7. Verfahren nach einem der vorangehenden Ansprüche, wobei der erste Datensatz (602) des Provisionierungstokens (170) ferner einen zweiten Hashwert (606) umfasst, welcher unter Verwendung einer dritten Kombination eines Einmalkennworts und eines dem Einmalkennwort zugeordneten zweiten Salt-Werts erzeugt ist, wobei in den ein oder mehreren ersten Datenbankeinträgen (180) der ersten Datenbank (120) jeweils eine zweite Zuordnung des zweiten Salt-Werts zu dem Einmalkennwort gespeichert ist,
wobei das Validieren des Provisionierungstokens (170) ferner ein Empfangen des Einmalkennworts und Prüfen des zweiten Hashwerts (606) unter Verwendung des empfangenen Einmalkennworts sowie der ausgelesenen ein oder mehreren ersten Datenbankeinträge (180) umfasst.

8. Verfahren nach einem der vorangehenden Ansprüche, wobei die zweiten Datensätze (612) der ausgestellten Dokumente (172) ferner jeweils eine Angabe (618) eines Zeitpunkts der Ausstellung des entsprechenden Dokuments (172) umfassen.

9. Verfahren nach Anspruch 8, wobei das Verfahren ferner ein Aktualisieren der ausgestellten Dokumente (172) umfasst, wobei das Aktualisieren umfasst:
o Empfangen einer Aktualisierungsanfrage zum Aktualisieren der ausgestellten Dokumente (172) von dem Endgerät (150), wobei die Aktualisierungsanfrage die ausgestellten Dokumente (172) umfasst,
o Auslesen der zweiten Datenbankeinträge (182) aus den ein oder mehreren zweiten Datenbanken (140) unter Verwendung der ersten Datenelemente (614) der empfangenen Dokumente (172), wobei die zweiten Datenbankeinträge (182) jeweils eine Angabe eines Zeitpunkts einer letzten Aktualisierung des jeweiligen zweiten Datenbankeintrags (182) umfassen,
o Vergleichen der Angaben (618) der Zeitpunkte der Ausstellung der empfangenen Dokumente (172) jeweils mit der Angabe des Zeitpunkts der letzten Aktualisierung des dem entsprechenden Dokument (172) zugeordneten zweiten Datenbankeintrags (182),
∘ Feststellen, dass für ein oder mehrere der ausgestellten Dokumente (172) die letzte Aktualisierung des entsprechenden zweiten Datenbankeintrags (182) nach dem Ausstellen des entsprechenden Dokuments (172) erfolgt ist,
∘ Ausstellen eines aktualisierten Dokuments für diejenigen ausgestellten Dokumente (172), für welche die letzte Aktualisierung des jeweiligen zweiten Datenbankeintrags (182) nach dem Ausstellen des entsprechenden Dokuments (172) erfolgt ist, wobei das Ausstellen des jeweiligen aktualisierten Dokuments umfasst:
• Erstellen eines vierten Datensatzes, welcher ein oder mehrere der Datenelemente des ausgelesenen zweiten Datenbankeintrags (182), welche dem auszustellenden Dokument zugeordnet sind, in Klartext umfasst,
• Hinzufügen des öffentlichen kryptographischen Schlüssels (160) des Endgeräts (150) aus dem entsprechenden empfangenen Dokument (172) zu dem vierten Datensatz zum kryptographischen Binden des vierten Datensatzes an das Endgerät (150),
• Signieren des vierten Datensatzes mit dem zweiten kryptographischen Signaturschlüssel (108) des Ausstellerdienstes,
• Bereitstellen des jeweiligen aktualisierten Dokuments in Form des signierten vierten Datensatzes,
o Senden der ein oder mehreren aktualisierten Dokumente an das Endgerät (150).

10. Verfahren nach Anspruch 11, wobei die empfangenen ausgestellten Dokumente (172) unter Verwendung eines dem Endgerät (150) zugeordneten privaten kryptographischen Schlüssels (158) signiert sind, wobei das Verfahren ferner ein Validieren der empfangenen Dokumente (172) umfasst, wobei das Validieren ein Prüfen der Signaturen der empfangenen Dokumente (172) mit dem privaten kryptographischen Schlüssel (158) des Endgeräts (150) unter Verwendung des von den empfangenen Dokumenten (172) umfassten öffentlichen kryptographischen Schlüssel (160) des Endgeräts (150) umfasst.

11. Verfahren nach einem der vorangehenden Ansprüche, wobei die Mehrzahl von ausgestellten Dokumenten ein oder mehrere Fahrzeugdokumente ein oder mehrerer Fahrzeuge umfasst, beispielsweise ein oder mehrere elektronische Zulassungsbescheinigungen Teil I, ein oder mehrere Versicherungsscheine, und/oder ein oder mehrere Schlüsseltoken.

12. Verfahren nach Anspruch 11, wobei die Mehrzahl von ersten Datenelementen (614) ein oder mehrere der folgenden Datenelemente umfasst: eine oder mehrere Fahrzeug-IDs, beispielsweise Fahrzeugkennzeichen oder Fahrgestellnummern, ein oder mehrere Versicherungsnummern, und/oder ein oder mehrere Schlüssel-IDs; und/oder
wobei die Mehrzahl von zweiten Datenelementen (616) ein oder mehrere der folgenden Datenelemente umfasst: eine oder mehrere Fahrzeug-IDs, beispielsweise Fahrzeugkennzeichen oder Fahrgestellnummern, ein oder mehrere Versicherungsnummern, und/oder ein oder mehrere Schlüssel-IDs.

13. Server (100) eines Ausstellerdienstes zum Ausstellen einer ersten Kombination aus einer Mehrzahl von auszustellenden digitalen Dokumenten (172) unter Verwendung eines Provisionierungstokens (170), wobei der Server (100) einen Prozessor (102), einen Speicher (104) mit Programminstruktionen (112) und eine Kommunikationsschnittstelle (114) zur Kommunikation über ein Netzwerk (190) umfasst,
wobei der Provisionierungstoken (170) eine Berechtigung zum Empfang der Mehrzahl von auszustellenden digitalen Dokumenten (172) mit einem Endgerät (150) und zur kryptographischen Kopplung der auszustellenden Dokumente (172) an das Endgerät (150) im Zuge der Ausstellung nachweist, wobei der Provisionierungstoken (170) einen ersten Datensatz (602) mit einer Mehrzahl von ersten Hashwerten (604) umfasst, welche unter Verwendung einer Mehrzahl von zweiten Kombinationen erzeugt sind, wobei die zweiten Kombinationen jeweils einen ersten Salt-Wert einer Mehrzahl von ersten Salt-Werten und ein dem entsprechenden ersten Salt-Wert zugeordnetes erstes Datenelement (614) einer Mehrzahl von ersten Datenelementen (614) umfasst, wobei die ersten Datenelemente (614) der Mehrzahl von ersten Datenelementen (614) jeweils einem der auszustellenden Dokumente (172) der Mehrzahl von auszustellenden Dokumenten (172) zugeordnet sind und das entsprechende auszustellende Dokument (172) identifizieren, wobei der erste Datensatz (602) unter Verwendung eines ersten Signaturschlüssels (108) eines den Provisionierungstoken (170) erzeugenden Ausstellerdienstes signiert ist,
wobei der Server (100) Zugriff auf eine erste Datenbank (120) besitzt, in der ein oder mehrere erste Datenbankeinträge (180) mit einer Mehrzahl von ersten Zuordnungen der ersten Salt-Werte zu jeweils einem der ersten Datenelementen (614) gespeichert sind,
wobei der Server (100) ferner Zugriff auf ein oder mehrere zweite Datenbanken (140) besitzt, in denen jeweils ein oder mehrere zweite Datenbankeinträge (182) mit Datenelementen der auszustellenden Dokumente (172) gespeichert sind,
wobei ein Ausführen der Programminstruktionen (112) durch den Prozessor (102) den Prozessor (102) dazu veranlasst, den Server (100) zu steuern zum:
o Empfangen einer Ausstellungsanfrage zum Ausstellen der Mehrzahl von auszustellenden Dokumenten (172) von dem Endgerät (150) eines Anfragenstellers,
o Empfangen des Provisionierungstokens (170) von dem Endgerät (150),
∘ Validieren des Provisionierungstokens (170), wobei das Validieren des Provisionierungstokens (170) umfasst:
• Validieren der Signatur des Provisionierungstokens (170) unter Verwendung eines ersten Signaturprüfschlüssels (108) des Ausstellerdienstes,
• Auslesen der ein oder mehreren ersten Datenbankeinträge (180) aus der ersten Datenbank (120) unter Verwendung der Mehrzahl von ersten Datenelementen (614),
• Prüfen der in dem Provisionierungstoken (170) eingetragenen Mehrzahl von Hashwerten (604, 606), welche die Mehrzahl von ersten Hashwerten (624) umfasst, unter Verwendung der ausgelesenen ein oder mehreren ersten Datenbankeinträgen (180),
• auf eine erfolgreiche Prüfung hin, Löschen zumindest der in den ausgelesenen ein oder mehreren ersten Datenbankeinträgen (180) gespeicherten Salt-Werte, welche den auszustellenden Dokumenten (172) zugeordnet sind, in der ersten Datenbank (120),
∘ Ausstellen der auszustellenden Dokumente (172), wobei das Ausstellen umfasst:
• Senden einer Schlüsselabfrage an das Endgerät (150),
• Empfangen eines dem Endgerät (150) zugeordneten öffentlichen kryptographischen Schlüssels (160),
wobei das Ausstellen der Dokumente (172) ferner für jedes der auszustellenden Dokumente (172) jeweils umfasst:
• Auslesen des zweiten Datenbankeintrags (182) des entsprechenden auszustellenden Dokuments (172) aus der zweiten Datenbank (140) der ein oder mehreren zweiten Datenbanken (140), welche den entsprechenden zweiten Datenbankeintrag (182) umfasst,
• Erstellen eines zweiten Datensatzes (612), welcher ein oder mehrere Datenelemente des ausgelesenen zweiten Datenbankeintrags (182), welche dem entsprechenden auszustellenden Dokument (172) zugeordnet sind, in Klartext umfasst,
• Hinzufügen des empfangenen öffentlichen kryptographischen Schlüssels (160) des Endgeräts (150) zu dem erstellten zweiten Datensatz (612) zum kryptographischen Binden des erstellten zweiten Datensatzes (612) an das Endgerät (150),
• Signieren des erstellten zweiten Datensatzes (612) unter Verwendung eines dem entsprechenden Ausstellerdienst zugeordneten zweiten kryptographischen Signaturschlüssels (108),
• Bereitstellen des entsprechenden ausgestellten Dokuments (172) in Form des signierten zweiten Datensatzes (612),
• Speichern einer Zuordnung des empfangenen öffentlichen kryptographischen Schlüssels (160) des Endgeräts (150) zu dem entsprechenden ausgestellten Dokument (172) in der ersten Datenbank (120),
o Senden der ersten Kombination aus der Mehrzahl von ausgestellten Dokumenten (172) an das Endgerät (150).

14. System (192) umfassend einen Server (100) eines Ausstellerdienstes nach Anspruch 13 sowie ein oder mehrere weitere Server (130), welche jeweils einen Zugriff auf eine zweite Datenbank (140) ein oder mehrerer zweiter Datenbanken (140) bereitstellen, wobei die ein oder mehreren weiteren Server jeweils (130) einen weiteren Prozessor (132), einen weiteren Speicher (134) mit weiteren Programminstruktionen (136) und eine weitere Kommunikationsschnittstelle (138) zur Kommunikation über das Netzwerk (190) umfassen,
wobei ein Ausführen der weiteren Programminstruktionen (112) durch den weiteren Prozessor (102) des jeweiligen weiteren Servers (140) den weiteren Prozessor (102) dazu veranlasst, den weiteren Server (100) zu steuern zum:
Empfangen einer Abfrage ein oder mehrerer zweiter Datenbankeinträge (182) der zweiten Datenbank (140), auf welche der entsprechende weitere Server einen Zugriff bereitstellt,
Senden der abgefragten ein oder mehreren zweiten Datenbankeinträge (182) der entsprechenden zweiten Datenbank (140) in Antwort auf die empfangene Abfrage an den Server (100).

15. System (192) nach Anspruch 14, wobei das System (192) ferner das Endgerät (150) umfasst.

## Claims

1. A method for issuing a first combination of a plurality of digital documents (172) to be issued using a digital provisioning token (170),
wherein the provisioning token (170) proves an authorisation to receive the plurality of digital documents (172) to be issued with a terminal device (150) and to cryptographically link the documents (172) to be issued to the terminal device (150) in the course of issuance, wherein the provisioning token (170) comprises a first data record (602) with a plurality of first hash values (604) which are generated using a plurality of second combinations, wherein the second combinations each comprise a first salt value of a plurality of first salt values and a first data element (614) of a plurality of first data elements assigned to the corresponding first salt value (614), wherein the first data elements (614) of the plurality of first data elements (614) are each assigned to one of the documents (172) of the plurality of documents (172) to be issued and identify the corresponding document to be issued (172), wherein the first data record (602) is signed using a first signature key (108) of an issuing service generating the provisioning token (170),
wherein one or more first database entries (180) with a plurality of first assignments of the first salt values to one of the first data elements (614) are stored in a first database (120),
wherein one or more second database entries (184) with data elements of the documents (172) to be issued are stored in one or more second databases (140),
wherein the method for issuing the documents (172) to be issued from the plurality of documents (172) to be issued using one or more first servers (100, 140) of the issuing service comprises:
∘ receiving an issuance request for issuing the plurality of documents to be issued (172) from the terminal device (150) of a requester,
∘ receiving the provisioning token (170) from the terminal device (150),
∘ validating the provisioning token (170), wherein validating the provisioning token (170) comprises:
• validating the signature of the provisioning token (170) using a first signature verification key (108) of the issuing service,
• reading the one or more first database entries (180) from the first database (120) using the plurality of first data elements (614),
• verifying the plurality of hash values (604, 606) entered in the provisioning token (170), which comprise the plurality of first hash values (624), using the read one or more first database entries (180),
• upon a successful verification, deleting from the first database (120) at least the salt values stored in the read one or more first database entries (180) that are assigned to the documents (172) to be issued,
∘ issuing the documents (172) to be issued, wherein the issuing comprises:
• sending a key request to the terminal device (150),
• receiving a public cryptographic key (160) assigned to the terminal device (150),
wherein issuing the documents (172) further comprises, for each of the documents (172) to be issued:
• reading the second database entry (182) of the corresponding document (172) to be issued from the second database (140) of the one or more second databases (140) which comprises the corresponding second database entry (182),
• creating, in plain text, a second data record (612) comprising one or more data elements of the read second database entry (182) which are assigned to the corresponding document (172) to be issued,
• adding the received public cryptographic key (160) of the terminal device (150) to the created second data record (612) for cryptographic linking of the created second data record (612) to the terminal device (150),
• signing the created second data record (612) using a second cryptographic signature key (108) assigned to the corresponding issuing service,
• providing the corresponding issued document (172) in the form of the signed second data record (612),
• storing an assignment of the received public cryptographic key (160) of the terminal device (150) to the corresponding issued document (172) in the first database (120),
o sending the first combination of the plurality of issued documents (172) to the terminal device (150).

2. The method according to claim 1, wherein the method further comprises receiving the first data elements (614) and using the received first data elements (614) to read the one or more first database entries (180) from the first database (120).

3. The method according to any one of the preceding claims, wherein the assigning of the received public cryptographic key (160) of the terminal device (150) to the issued documents (172) is stored in the one or more first database entries (180) of the first database (120).

4. The method according to any one of the preceding claims, wherein validating the provisioning token (170), upon a successful verification, comprises deleting all data assigned to the provisioning token (170) from the one or more first database entries (180) in the first database (120).

5. The method according to any one of the preceding claims, wherein the second data records (612) of the respective documents to be issued each comprise all data elements of the respective second database entry (182) which are assigned to the corresponding document to be issued (172) in plain text.

6. The method according to any one of the preceding claims, wherein the first data elements (614) of the plurality of first data elements (614) are each used to provide a database access key for identifying the first database entry (180) stored in the first database (120) with the first assignment of a generated first salt value of the plurality of first salt values to the corresponding first data element (614), and/or
wherein the method further comprises receiving a plurality of second data elements (616), wherein each of the second data elements (616) of the plurality of second data elements (616) is assigned to one of the documents (172) to be issued, wherein the second data elements (616) are used to read the one or more first database entries (180) from the first database (120), wherein the second data elements (616) are each used to provide one of the one or more database access keys for identifying the one or more first database entries (180) stored in the first database (120), and/or
wherein accesses to the one or more second databases (140) are provided via one or more second servers (130), wherein querying the second database entries (182) comprises sending one or more queries to the one or more second servers (130) and receiving the second database entries (182) in response to the sent one or more queries.

7. The method according to any one of the preceding claims, wherein the first data record (602) of the provisioning token (170) further comprises a second hash value (606) generated using a third combination of a one-time password and a second salt value assigned to the one-time password, wherein a second assignment of the second salt value to the one-time password is stored in each of the one or more first database entries (180) of the first database (120),
wherein validating the provisioning token (170) further comprises receiving the one-time password and verifying the second hash value (606) using the received one-time password and the read one or more first database entries (180).

8. The method according to any one of the preceding claims, wherein the second data records (612) of the issued documents (172) further each comprise an indication (618) of a time of issue of the corresponding document (172).

9. The method according to claim 8, wherein the method further comprises updating the issued documents (172), wherein the updating comprises:
o receiving an update request for updating the issued documents (172) from the terminal device (150), wherein the update request comprises the issued documents (172),
o reading the second database entries (182) from the one or more second databases (140) using the first data elements (614) of the received documents (172), wherein the second database entries (182) each comprise an indication of a time of a last update of the respective second database entry (182),
o comparing the indications (618) of the times of issue of the received documents (172) in each case with the indication of the time of the last update of the second database entry (182) assigned to the corresponding document (172),
o determining that for one or more of the issued documents (172), the last update of the corresponding second database entry (182) took place after the corresponding document (172) was issued,
o issuing an updated document for those issued documents (172) for which the last update of the respective second database entry (182) took place after the corresponding document (172) was issued, wherein issuing the respective updated document comprises:
• creating a fourth data record comprising one or more of the data elements of the read second database entry (182) that are assigned to the document to be issued in plain text,
• adding the public cryptographic key (160) of the terminal device (150) from the corresponding received document (172) to the fourth data record for cryptographically linking the fourth data record to the terminal device (150),
• signing the fourth data record with the second cryptographic signature key (108) of the issuing service,
• providing the respective updated document in the form of the signed fourth data record,
o sending the one or more updated documents to the terminal device (150).

10. The method according to claim 11, wherein the received issued documents (172) are signed using a private cryptographic key (158) assigned to the terminal device (150), wherein the method further comprises validating the received documents (172), wherein the validating comprises verifying the signatures of the received documents (172) with the private cryptographic key (158) of the terminal device (150) using the public cryptographic key (160) of the terminal device (150) included in the received documents (172).

11. The method according to any one of the preceding claims, wherein the plurality of issued documents comprises one or more vehicle documents of one or more vehicles, for example one or more electronic registration certificates Part I, one or more insurance certificates, and/or one or more key tokens.

12. The method according to claim 11, wherein the plurality of first data elements (614) comprises one or more of the following data elements: one or more vehicle IDs, for example vehicle registration numbers or chassis numbers, one or more insurance numbers, and/or one or more key IDs; and/or
wherein the plurality of second data elements (616) comprises one or more of the following data elements: one or more vehicle IDs, such as vehicle registration numbers or chassis numbers, one or more insurance numbers, and/or one or more key IDs.

13. A server (100) of an issuing service for issuing a first combination of a plurality of digital documents (172) to be issued using a provisioning token (170), wherein the server (100) comprises a processor (102), a memory (104) with program instructions (112) and a communication interface (114) for communication via a network (190),
wherein the provisioning token (170) proves an authorisation to receive the plurality of digital documents (172) to be issued with a terminal device (150) and to cryptographically link the documents (172) to be issued to the terminal device (150) during issuance, wherein the provisioning token (170) comprises a first data record (602) with a plurality of first hash values (604) which are generated using a plurality of second combinations, wherein the second combinations each comprise a first salt value of a plurality of first salt values and a first data element (614) of a plurality of first data elements assigned to the corresponding first salt value (614), wherein the first data elements (614) of the plurality of first data elements (614) are each assigned to one of the documents (172) to be issued of the plurality of documents (172) to be issued and identify the corresponding document (172) to be issued, wherein the first data record (602) is signed using a first signature key (108) of an issuing service generating the provisioning token (170),
wherein the server (100) has access to a first database (120) in which one or more first database entries (180) are stored with a plurality of first assignments of the first salt values to each of the first data elements (614),
wherein the server (100) also has access to one or more second databases (140) in each of which one or more second database entries (182) with data elements of the documents (172) to be issued are stored,
wherein executing the program instructions (112) by the processor (102) causes the processor (102) to control the server (100) to:
o receive an issuance request for issuing the plurality of documents (172) to be issued from the terminal device (150) of a requester,
o receive the provisioning token (170) from the terminal device (150),
o validate the provisioning token (170), wherein validating the provisioning token (170) comprises:
• validating the signature of the provisioning token (170) using a first signature verification key (108) of the issuing service,
• reading the one or more first database entries (180) from the first database (120) using the plurality of first data elements (614),
• verifying the plurality of hash values (604, 606) entered in the provisioning token (170), which comprise the plurality of first hash values (624), using the read one or more first database entries (180),
• upon a successful verification, deleting from the first database (120) at least the salt values stored in the read one or more first database entries (180) that are assigned to the documents (172) to be issued,
o issuing the documents (172) to be issued, wherein issuing comprises:
• sending a key request to the terminal device (150),
• receiving a public cryptographic key (160) assigned to the terminal device (150),
wherein issuing the documents (172) further comprises, for each of the documents (172) to be issued:
• reading the second database entry (182) of the corresponding document (172) to be issued from the second database (140) of the one or more second databases (140) which comprises the corresponding second database entry (182),
• creating, in plain text, a second data record (612) comprising one or more data elements of the read second database entry (182) which are assigned to the corresponding document (172) to be issued,
• adding the received public cryptographic key (160) of the terminal device (150) to the created second data record (612) for cryptographic linking of the created second data record (612) to the terminal device (150),
• signing the created second data record (612) using a second cryptographic signature key (108) assigned to the corresponding issuing service,
• providing the corresponding issued document (172) in the form of the signed second data record (612),
• storing an assignment of the received public cryptographic key (160) of the terminal device (150) to the corresponding issued document (172) in the first database (120),
o sending the first combination of the plurality of issued documents (172) to the terminal device (150).

14. A system (192) comprising a server (100) of an issuing service according to claim 13 and one or more further servers (130), each of which provides access to a second database (140) or to one or more second databases (140), wherein the one or more further servers (130) each comprise a further processor (132), a further memory (134) with further program instructions (136) and a further communication interface (138) for communication via the network (190),
wherein execution of the further program instructions (112) by the further processor (102) of the respective further server (140) causes the further processor (102) to control the further server (100) to:
receive a query for one or more second database entries (182) of the second database (140) to which the corresponding further server provides access,
send the queried one or more second database entries (182) of the corresponding second database (140) to the server (100) in response to the received query.

15. The system (192) according to claim 14, wherein the system (192) further comprises the terminal device (150).

## Revendications

1. Procédé de publication d'une première combinaison d'une pluralité de documents numériques (172) à publier en utilisant un jeton de provisionnement numérique (170),
dans lequel le jeton de provisionnement (170) prouve une autorisation à recevoir la pluralité de documents numériques (172) à publier avec un dispositif de terminal (150) et à lier de manière cryptographique les documents (172) à publier au dispositif de terminal (150) au cours de la publication, dans lequel le jeton de provisionnement (170) comprend un premier dossier de données (602) avec une pluralité de premières valeurs de hachage (604) qui sont générées en utilisant une pluralité de deuxièmes combinaisons, dans lequel les deuxièmes combinaisons comprennent chacune une première valeur de salage d'une pluralité de premières valeurs de salage et un premier élément de données (614) d'une pluralité de premiers éléments de données attribué à la première valeur de salage (614) correspondante, dans lequel les premiers éléments de données (614) de la pluralité de premiers éléments de données (614) sont chacun attribués à l'un des documents (172) de la pluralité de documents (172) à publier et identifient le document correspondant à publier (172), dans lequel le premier dossier de données (602) est signé en utilisant une première clé de signature (108) d'un service de publication générant le jeton de provisionnement (170),
dans lequel une ou plusieurs premières entrées de base de données (180) avec une pluralité de premières attributions des premières valeurs de salage à l'un des premiers éléments de données (614) sont stockées dans une première base de données (120),
dans lequel une ou plusieurs secondes bases de données (184) avec des éléments de données des documents (172) à publier sont stockées dans une ou plusieurs secondes bases de données (140),
dans lequel le procédé de publication des documents (172) à publier de la pluralité de documents (172) à publier en utilisant un ou plusieurs premiers serveurs (100, 140) du service de publication comprend les étapes consistant à :
o recevoir une requête de publication pour publier la pluralité de documents à publier (172) depuis le dispositif de terminal (150) d'un demandeur,
o recevoir le jeton de provisionnement (170) depuis le dispositif de terminal (150),
o valider le jeton de provisionnement (170), dans lequel l'étape consistant à valider le jeton de provisionnement (170) comprend les étapes consistant à :
• valider la signature du jeton de provisionnement (170) en utilisant une première clé de vérification de signature (108) du service de publication,
• lire la ou les premières entrées de base de données (180) depuis la première base de données (120) en utilisant la pluralité de premiers éléments de données (614),
• vérifier la pluralité de valeurs de hachage (604, 606) entrées dans le jeton de provisionnement (170), qui comprend la pluralité de premières valeurs de hachage (624), en utilisant la ou les premières entrées de base de données (180) lues,
• en cas de vérification réussie, supprimer de la première base de données (120) au moins les valeurs de salage stockées dans la ou les premières entrées de base de données (180) lues qui sont attribuées aux documents (172) à publier,
o publier les documents (172) à publier dans lequel l'étape consistant à publier comprend les étapes consistant à :
• envoyer une requête de clé au dispositif de terminal (150),
• recevoir une clé cryptographique publique (160) attribuée au dispositif de terminal (150),
dans lequel l'étape consistant à publier les documents (172) comprend en outre, pour chacun des documents (172) à publier, les étapes consistant à :
• lire la seconde entrée de base de données (182) du document correspondant (172) à publier depuis la seconde base de données (140) de la ou des secondes bases de données (140) qui comprend la seconde entrée de base de données (182) correspondante,
• créer, en texte clair, un second dossier de données (612) comprenant un ou plusieurs éléments de données de la seconde entrée de bases de données (182) lue qui sont attribués au document correspondant (172) à publier,
• ajouter la clé cryptographique publique (160) reçue du dispositif de terminal (150) au second dossier de données (612) créé pour lier de manière cryptographique le second dossier de données (612) créé au dispositif de terminal (150),
• signer le second dossier de données (612) créé en utilisant une seconde clé de signature cryptographique (108) attribuée au service de publication correspondant,
• fournir le document publié (172) correspondant sous la forme du second dossier de données signé (612),
• stocker une attribution de la clé cryptographique publique (160) reçue du dispositif de terminal (150) au document publié (172) correspondant dans la première base de données (120),
o envoyer la première combinaison de la pluralité de documents publiés (172) au dispositif de terminal (150).

2. Procédé selon la revendication 1, dans lequel le procédé comprend en outre les étapes consistant à recevoir les premiers éléments de données (614) et à utiliser les premiers éléments de données (614) reçus pour lire la ou les premières entrées de base de données (180) de la première base de données (120).

3. Procédé selon l'une quelconque des revendications précédentes, dans lequel l'étape consistant à attribuer la clé cryptographique publique (160) reçue du dispositif de terminal (150) aux documents publiés (172) est stockée dans la ou les premières entrées de base de données (180) de la première base de données (120).

4. Procédé selon l'une quelconque des revendications précédentes, dans lequel l'étape consistant à valider le jeton de provisionnement (170), en cas de vérification réussie, comprend une étape consistant à supprimer toutes les données attribuées au jeton de provisionnement (170) de la ou des premières entrées de base de données (180) dans la première base de données (120).

5. Procédé selon l'une quelconque des revendications précédentes, dans lequel les seconds dossiers de données (612) des documents respectifs à publier comprennent chacun tous les éléments de données de la seconde entrée de base de données (182) respective qui sont attribués au document correspondant à publier (172) en texte clair.

6. Procédé selon l'une quelconque des revendications précédentes, dans lequel les premiers éléments de données (614) de la pluralité de premiers éléments de données (614) sont chacun utilisés pour fournir une clé d'accès de base de données afin d'identifier la première entrée de base de données (180) stockée dans la première base de données (120) avec la première attribution d'une première valeur de salage générée de la pluralité de premières valeurs de salage au premier élément de données (614) correspondant, et/ou
dans lequel le procédé comprend en outre une étape consistant à recevoir une pluralité de seconds éléments de données (616), dans lequel chacun des seconds éléments de données (616) de la pluralité de seconds éléments de données (616) est attribué à l'un des documents (172) à publier, dans lequel les seconds éléments de données (616) sont utilisés pour lire la ou les premières entrées de base de données (180) de la première base de données (120), dans lequel les seconds éléments de base de données (616) sont chacun utilisés pour fournir l'une de la ou des clés d'accès de base de données afin d'identifier la ou les premières entrées de base de données (180) stockées dans la première base de données (120), et/ou
dans lequel les accès à la ou aux secondes bases de données (140) sont fournis par l'intermédiaire d'un ou de plusieurs seconds serveurs (130), dans lequel l'étape consistant à interroger les secondes entrées de base de données (182) comprend les étapes consistant à envoyer une ou plusieurs questions au ou aux seconds serveurs (130) et à recevoir les secondes entrées de base de données (182) en réponse à la ou aux questions envoyées.

7. Procédé selon l'une quelconque des revendications précédentes, dans lequel le premier dossier de données (602) du jeton de provisionnement (170) comprend en outre une deuxième valeur de hachage (606) générée en utilisant une troisième combinaison d'un mot de passe à usage unique et d'une deuxième valeur de salage attribuée au mot de passe à usage unique, dans lequel une seconde attribution de la deuxième valeur de salage au mot de passe à usage unique est stockée dans chacune de la ou des premières entrées de base de données (180) de la première base de données (120),
dans lequel l'étape consistant à valider le jeton de provisionnement (170) comprend en outre les étapes consistant à recevoir le mot de passe à usage unique et à vérifier la deuxième valeur de hachage (606) en utilisant le mot de passe à usage unique reçu et la ou les premières entrées de base de données (180) lues.

8. Procédé selon l'une quelconque des revendications précédentes, dans lequel les seconds dossiers de données (612) des documents publiés (172) comprennent en outre chacun une indication (618) d'un temps de publication du document (172) correspondant.

9. Procédé selon la revendication 8, dans lequel le procédé comprend en outre une étape consistant à mettre à jour les documents publiés (172), dans lequel l'étape consistant à mettre à jour comprend les étapes consistant à :
o recevoir une requête de mise à jour pour mettre à jour les documents publiés (172) depuis le dispositif de terminal (150), dans lequel la requête de mise à jour comprend les documents publiés (172),
o lire les secondes entrées de base de données (182) depuis la ou les secondes bases de données (140) en utilisant les premiers éléments de données (614) des documents (172) reçus, dans lequel les secondes entrées de base de données (182) comprennent chacune une indication d'un temps d'une dernière mise à jour de la seconde entrée de base de données (182) respective,
o comparer les indications (618) des temps de publication des documents reçus (172) dans chaque cas avec l'indication du temps de la dernière mise à jour de la seconde entrée de base de données (182) attribuée au document correspondant (172),
o déterminer que pour un ou plusieurs des documents publiés (172), la dernière mise à jour de la seconde entrée de base de données (182) correspondante a eu lieu après que le document (172) correspondant a été publié,
o publier un document mis à jour pour les documents publiés (172) pour lesquels la dernière mise à jour de la seconde entrée de base de données (182) respective a eu lieu après que le document (172) correspondant a été publié, dans lequel l'étape consistant à publier le document mis à jour respectif comprend :
• créer un quatrième dossier de données comprenant un ou plusieurs des éléments de données de la seconde entrée de base de données (182) lue qui sont attribués au document à publier en texte clair,
• ajouter la clé cryptographique publique (160) du dispositif de terminal (150) à partir du document (172) reçu correspondant au quatrième dossier de données pour lier de manière cryptographique le quatrième dossier de données au dispositif de terminal (150),
• signer le quatrième dossier de données avec la seconde clé de signature cryptographique (108) du service de publication,
• fournir le document mis à jour respectif sous la forme du quatrième dossier de données signé,
o envoyer le ou les documents mis à jour au dispositif de terminal (150).

10. Procédé selon la revendication 11, dans lequel les documents publiés (172) reçus sont signés en utilisant une clé cryptographique privée (158) attribué au dispositif de terminal (150), dans lequel le procédé comprend en outre une étape consistant à valider les documents (172) reçus, dans lequel l'étape consistant à valider comprend une étape consistant à vérifier les signatures des documents (172) reçus avec la clé cryptographique privée (158) du dispositif de terminal (150) en utilisant la clé cryptographique publique (160) du dispositif de terminal (150) inclus dans les documents reçus (172).

11. Procédé selon l'une quelconque des revendications précédentes, dans lequel la pluralité de documents publiés comprend un ou plusieurs documents de véhicule d'un ou de plusieurs véhicules, par exemple un ou plusieurs certificats d'immatriculation électronique Partie I, un ou plusieurs certificats d'assurance, et/ou un ou plusieurs jetons de clé.

12. Procédé selon la revendication 11, dans lequel la pluralité de premiers éléments de données (614) comprend un ou plusieurs des éléments de données suivants : un ou plusieurs ID de véhicule, par exemple des numéros d'immatriculation de véhicule ou des numéros de châssis, un ou plusieurs numéros d'assurance, et/ou un ou plusieurs ID de clé ; et/ou
dans lequel la pluralité de seconds éléments de données (616) comprend un ou plusieurs des éléments de données suivants : un ou plusieurs ID de véhicule, tels que des numéros d'immatriculation de véhicule ou des numéros de châssis, un ou plusieurs numéros d'assurance, et/ou un ou plusieurs ID de clé.

13. Serveur (100) d'un service de publication destiné à publier une première combinaison d'une pluralité de documents numériques (172) à publier en utilisant un jeton de provisionnement (170), dans lequel le serveur (100) comprend un processeur (102), une mémoire (104) avec des instructions de programme (112) et une interface de communication (114) pour communication par l'intermédiaire d'un réseau (190),
dans lequel le jeton de provisionnement (170) prouve une autorisation à recevoir la pluralité de documents numériques (172) à publier avec un dispositif de terminal (150) et à lier de manière cryptographique les documents (172) à publier au dispositif de terminal (150) pendant la publication, dans lequel le jeton de provisionnement (170) comprend un premier dossier de données (602) avec une pluralité de premières valeurs de hachage (604) qui sont générées en utilisant une pluralité de deuxièmes combinaisons, dans lequel les deuxièmes combinaisons comprennent chacune une première valeur de salage d'une pluralité de premières valeurs de salage et un premier élément de données (614) d'une pluralité de premiers éléments de données attribué à la première valeur de salage (614) correspondante, dans lequel les premiers éléments de données (614) de la pluralité de premiers éléments de données (614) sont chacun attribués à l'un des documents (172) de la pluralité de documents (172) à publier et identifient le document correspondant (172) à publier, dans lequel le premier dossier de données (602) est signé en utilisant une première clé de signature (108) d'un service de publication générant le jeton de provisionnement (170),
dans lequel le serveur (100) a accès à une première base de données (120) dans laquelle une ou plusieurs premières entrées de base de données (180) sont stockées avec une pluralité de premières attributions des premières valeurs de salage à chacun des premiers éléments de données (614),
dans lequel le serveur (100) a également accès à une ou plusieurs secondes bases de données (140) dans chacune desquelles une ou plusieurs secondes entrées de base de données (182) avec des éléments de données des documents (172) à publier sont stockées,
dans lequel l'étape consistant à exécuter les instructions de programme (112) par le processeur (102) amène le processeur (102) à commander le serveur (100) pour :
o recevoir une requête de publication pour publier la pluralité de documents (172) à publier depuis le dispositif de terminal (150) d'un demandeur,
o recevoir le jeton de provisionnement (170) depuis le dispositif de terminal (150),
o valider le jeton de provisionnement (170), dans lequel l'étape consistant à valider le jeton de provisionnement (170) comprend les étapes consistant à :
• valider la signature du jeton de provisionnement (170) en utilisant une première clé de vérification de signature (108) du service de publication,
• lire la ou les premières entrées de base de données (180) depuis la première base de données (120) en utilisant la pluralité de premiers éléments de données (614),
• vérifier la pluralité de valeurs de hachage (604, 606) entrées dans le jeton de provisionnement (170), qui comprend la pluralité de premières valeurs de hachage (624), en utilisant la ou les premières entrées de base de données (180) lues,
• en cas de vérification réussie, supprimer de la première base de données (120) au moins les valeurs de salage stockées dans la ou les premières entrées de base de données (180) lues qui sont attribuées aux documents (172) à publier,
o publier les documents (172) à publier, dans lequel l'étape consistant à publier comprend les étapes consistant à :
• envoyer une requête de clé au dispositif de terminal (150),
• recevoir une clé cryptographique publique (160) attribuée au dispositif de terminal (150),
dans lequel l'étape consistant à publier les documents (172) comprend en outre, pour chacun des documents (172) à publier, les étapes consistant à :
• lire la seconde entrée de base de données (182) du document correspondant (172) à publier depuis la seconde base de données (140) de la ou des secondes bases de données (140) qui comprend la seconde entrée de base de données (182) correspondante,
• créer, en texte clair, un second dossier de données (612) comprenant un ou plusieurs éléments de données de la seconde entrée de bases de données (182) lue qui sont attribués au document correspondant (172) à publier,
• ajouter la clé cryptographique publique (160) reçue du dispositif de terminal (150) au second dossier de données (612) créé pour lier de manière cryptographique le second dossier de données (612) créé au dispositif de terminal (150),
• signer le second dossier de données (612) créé en utilisant une seconde clé de signature cryptographique (108) attribuée au service de publication correspondant,
• fournir le document publié (172) correspondant sous la forme du second dossier de données signé (612),
• stocker une attribution de la clé cryptographique publique (160) reçue du dispositif de terminal (150) au document publié (172) correspondant dans la première base de données (120),
o envoyer la première combinaison de la pluralité de documents publiés (172) au dispositif de terminal (150).

14. Système (192) comprenant un serveur (100) d'un service de publication selon la revendication 13 et un ou plusieurs serveurs supplémentaires (130), chacun fournissant l'accès à une seconde base de données (140) ou à une ou plusieurs secondes bases de données (140), dans lequel le ou les serveurs supplémentaires (130) comprennent un processeur supplémentaire (132), une mémoire supplémentaire (134) avec des instructions de programme supplémentaires (136) et une interface de communication supplémentaire (138) pour communication par l'intermédiaire du réseau (190),
dans lequel l'exécution des instructions de programme supplémentaires (112) par le processeur supplémentaire (102) du serveur supplémentaire (140) respectif amène le processeur supplémentaire (102) à commander le serveur supplémentaire (100) pour :
recevoir une question pour une ou plusieurs secondes entrées de base de données (182) de la seconde base de données (140) auquel le serveur supplémentaire correspondant fournit un accès,
envoyer la ou les secondes entrées de base de données (182) interrogées de la seconde base de données (140) correspondante au serveur (100) en réponse à la question reçue.

15. Système (192) selon la revendication 14, dans lequel le système (192) comprend en outre le dispositif de terminal (150).
